# EUROPEAN PATENT SPECIFICATION

(11) **EP 3 927 060 B1**
(45) Date of publication and mention of the grant of the patent: **24.09.2025**
(21) Application number: 20755584.8
(22) Date of filing: 14.02.2020
(51) Int. Cl.: H04L 5/00, H04L 5/14, H04W 72/04, H04W 72/12, H04L 27/26, H04W 72/1268

(54) **BASE STATION DEVICE, TERMINAL DEVICE, AND COMMUNICATION METHOD**
BASISSTATIONSVORRICHTUNG, ENDGERÄTEVORRICHTUNG UND KOMMUNIKATIONSVERFAHREN
DISPOSITIF STATION DE BASE, DISPOSITIF TERMINAL ET PROCÉDÉ DE COMMUNICATION

(30) Priority: 14.02.2019 JP 2019024510
(43) Date of publication of application: 22.12.2021
(73) Proprietor: Sharp Kabushiki Kaisha, Sakai-shi, Osaka 590-8522 (JP)
(72) Inventor: LIU, Liqing, Osaka 590-8522 (JP); YAMADA, Shohei, Osaka 590-8522 (JP); TAKAHASHI, Hiroki, Osaka 590-8522 (JP); HOSHINO, Masayuki, Osaka 590-8522 (JP); TSUBOI, Hidekazu, Osaka 590-8522 (JP)
(74) Representative: Müller-Boré & Partner Patentanwälte PartG mbB
(86) International application number: PCT/JP2020/005751
(87) International publication number: WO 2020/166696

(56) References cited:
- WO-A1-2018/174564
- US-A1- 2018 287 682
- US-A1- 2019 044 642
- US-A1- 2021 211 232
- LG ELECTRONICS: "Discussion on resource allocation and TBS determination", vol. RAN WG1, no. Prague, CZ; 20171009 - 20171013, 3 October 2017 (2017-10-03), XP051352846, Retrieved from the Internet <URL:http://www.3gpp.org/ftp/tsg_ran/WG1_RL1/TSGR1_90b/Docs/> [retrieved on 20171003]
- NOKIA ET AL.: "Summary of Friday offline discussion on 7.2.6.1.3 potential enhancements for PUSCH for NR URLLC[ online", 3GPP TSG RAN WG1 ADHOC_NR_AH_1901 R1-1901449, 25 January 2019 (2019-01-25), XP051601361

## Description

### FIELD

The present invention relates to a terminal apparatus, a base station apparatus, a communication method for a terminal apparatus and a communication method for a base station apparatus.

### BACKGROUND

At present, Long Term Evolution (LTE)-Advanced Pro and New Radio (NR) technology are being studied and standardized in the Third Generation Partnership Project (3GPP) as a radio access scheme and a radio network technology for a 5th generation cellular system (RP-161214, NTT DOCOMO, "Revision of SI: Study on New Radio Access Technology, June 2016).

The 5th generation cellular system requires three anticipated scenarios for services: enhanced Mobile Broad Band (eMBB) which realizes high-speed, high-capacity transmission, Ultra-Reliable and Low Latency Communication (URLLC) which realizes low-latency, high-reliability communication, and massive Machine Type Communication (mMTC) that allows a large number of machine type devices to be connected such as devices connected in Internet of Things (IoT).

WO 2018/174564A1 describes a method for, by a wireless device, determining a transport block size (TBS). The method comprises the steps of: determining the number of resource elements (REs) in a slot; calculating a value associated with a TBS on the basis of the determined number of REs and a coding rate; comparing the calculated value with a predetermined threshold value; and determining the TBS according to the comparison. When the calculated value is less than or equal to the predetermined threshold value, the TBS may be determined by using a predetermined table.

LG Electronics, "Discussion on resource allocation and TBS determination" 3GPP TSG RAN WG1 Meeting 90bis, Prague, CZ, 9 to 13 October 2017, 3GPP Draft R1-1717965, discusses frequency-domain resource allocation, time-domain resource allocation, and TBS determination. For TBS determination by using formula, the document proposes scheduling DCI can indicate the reference number of REs per slot/mini-slot per PRB whose candidates are RRC configured. For multi-slot case, as a first option, a set of candidates of the reference number of REs per slot per PRB is configured per DCI format. As a second option, a set of candidates of the reference number of REs per slot/mini-slot per PRB is configured for each group of the numbers of scheduled symbols within a slot for PDSCH/PUSCH.

### SUMMARY

### Technical Problem

The objective of one aspect of the present invention is to provide a terminal apparatus, a base station apparatus, a communication method, and an integrated circuit capable of performing efficient communication in the wireless communication system described above.

### Solution to Problem

The above and other problems are solved by a terminal apparatus, a base station apparatus, a communication method for a terminal apparatus and a communication method for a base station apparatus respectively as defined in the claims.

A terminal apparatus according to one aspect of the present invention comprises a reception unit configured to: receive Downlink Control Information (DCI) that schedules a Transport Block (TB) on a first Physical Uplink Shared Channel (PUSCH); a control unit configured to: calculate a number of Resource Elements (REs) based on a first number of symbols; and determine a transport block size of the TB for the first PUSCH based on at least the number REs; and a transmission unit configured to: transmit the TB on the first PUSCH with a second number of symbols. The first number of symbols is provided in a first field in the DCI, the second number of symbols is based on the first number of symbols and a number of unavailable symbols, and unavailable symbols are based on at least a higher layer parameter.

A base station apparatus according to one aspect of the present invention comprises a transmission unit configured to: transmit Downlink Control Information (DCI) that schedules a Transport Block (TB) on a first Physical Uplink Shared Channel (PUSCH); a control unit configured to: calculate a number of Resource Elements (REs) based on a first number of symbols; and determine a transport block size of the TB for the first PUSCH based on at least the number of REs; and a reception unit configured to: receive the TB on the first PUSCH with a second number of symbols. The first number of symbols is provided in a first field in the DCI, the second number of symbols is based on the first number of symbols and a number of unavailable symbols, and unavailable symbols are based on at least a higher layer parameter.

A communication method for a terminal apparatus according to one aspect of the present invention comprises: receiving Downlink Control Information (DCI) that schedules a Transport Block (TB) on a first Physical Uplink Shared Channel (PUSCH); calculating a number of Resource Elements (REs) based on a first number of symbols; determining a transport block size of the TB for the first PUSCH based on at least the number of REs; and transmitting the TB on the first PUSCH with a second number of symbols. The first number of symbols is provided in a first field in the DCI, the second number of symbols is based on the first number of symbols and a number of unavailable symbols, and unavailable symbols are based on at least a higher layer parameter.

A communication method for a base station apparatus according to one aspect of the present invention comprises: transmitting Downlink Control Information (DCI) that schedules a Transport Block (TB) on a first Physical Uplink Shared Channel (PUSCH); calculating a number of Resource Elements (REs) based on a first number of symbols; determining a transport block size of the TB for the first PUSCH based on at least the number of REs; and receiving the TB on the first PUSCH with a second number of symbols. The first number of symbols is provided in a first field in the DCI, and the second number of symbols is based on the first number of symbols and a number of unavailable symbols, and unavailable symbols are based on at least a higher layer parameter.

### Invention Effect

According to one aspect of the present invention, the base station apparatus and the terminal apparatus can perform communication efficiently.

### BRIEF DESCRIPTION OF THE DRAWINGS

FIG. 1 is a diagram illustrating a concept of a wireless communication system according to.
FIG. 2 is a diagram illustrating an example of a Synchronization signal (SS) / Physical Broadcast Channel (PBCH) block and an SS burst set according to an embodiment of the present invention.
FIG. 3 is a diagram illustrating an example of a schematic configuration of uplink and downlink slots according to an embodiment of the present invention.
FIG. 4 is a diagram illustrating a relationship among a subframe, a slot, and a mini-slot in the time domain according to an embodiment of the present invention.
FIG. 5 is a diagram illustrating an example of a slot or a subframe according to an embodiment of the present invention.
FIG. 6 is a diagram illustrating an example of beamforming according to an embodiment of the present invention.
FIG. 7 is a diagram illustrating an example of Physical Downlink Shared Channel (PDSCH) mapping types according to an embodiment of the present invention.
FIG. 8 is a diagram illustrating an example of frequency hopping according to an embodiment of the present invention.
FIG. 9 is a diagram illustrating an example of determination of the number of repetitive transmissions and frequency hopping according to an embodiment of the present invention.
FIG. 10 is a diagram defining which resource allocation table is applied to PDSCH time domain resource allocation according to an embodiment of the present invention.
FIG. 11 is a diagram illustrating an example of a default table A according to an embodiment of the present invention.
FIG. 12 is a diagram illustrating an example of a default table B according to an embodiment of the present invention.
FIG. 13 is a diagram illustrating an example of a default table C according to an embodiment of the present invention.
FIG. 14 is a diagram illustrating an example of calculating a start and length indicator (SLIV) according to an embodiment of the present invention.
FIG. 15 is a diagram illustrating an example of a redundancy version applied to a transmission occasion according to an embodiment of the present invention.
FIG. 16 is a diagram defining which resource allocation table is applied to a PUSCH time domain resource allocation according to an embodiment of the present invention.
FIG. 17 is a diagram illustrating an example of a PUSCH default table A for a normal cyclic prefix (NCP) according to an embodiment of the present invention.
FIG. 18 is a diagram illustrating another example of determination of the number of repetitive transmissions and frequency hopping according to an embodiment of the present invention.
FIG. 19 is a diagram illustrating another example of determination of the number of repetitive transmissions and frequency hopping according to an embodiment of the present invention.
FIG. 20 is a diagram illustrating another example of the number of repetitive transmissions and frequency hopping according to an embodiment of the present invention.
FIG. 21 is a diagram illustrating an example of slot aggregation transmission according to an embodiment of the present invention.
FIG. 22 is a diagram illustrating an example of the number of symbols used to determine a transport block size according to an embodiment of the present invention.
FIG. 23 is a schematic block diagram illustrating a configuration of a terminal apparatus according to an embodiment of the present invention.
FIG. 24 is a schematic block diagram illustrating a configuration of a base station apparatus according to an embodiment of the present invention.

### DETAILED DESCRIPTION OF THE PREFERRED EMBODIMENTS

Hereinafter, the embodiments of the present invention will be described.

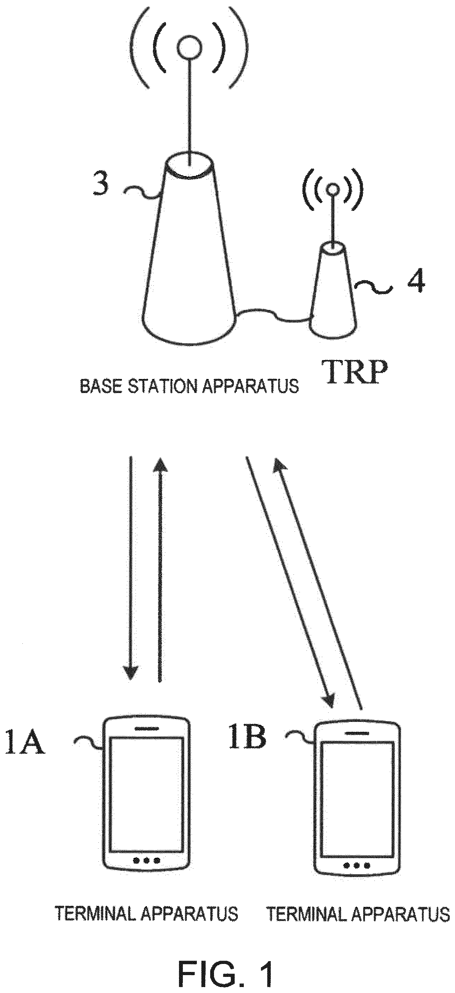

FIG. 1 is a diagram illustrating a concept of a wireless communication system according to an embodiment of the present invention. In FIG. 1, a wireless communication system includes a terminal apparatus 1A, a terminal apparatus 1B, and a base station apparatus 3. Hereinafter, each of the terminal apparatus 1A and the terminal apparatus 1B is also referred to as a terminal apparatus 1.

The terminal apparatus 1 is also referred to as a user terminal, a mobile station apparatus, a communication terminal, a mobile equipment, a terminal, a UE (User Equipment), and an MS (Mobile Station). The base station apparatus 3 is also referred to as a radio base station apparatus, a base station, a radio base station, a fixed station, a Node B (NB), an eNB (evolved Node B), a BTS (Base Transceiver Station), a BS (Base Station), an NR NB (NR Node B), an gNB (next Generation Node B), a TRP (Transmission and Reception Point), or a gNB. The base station apparatus 3 may include a core network apparatus. In addition, the base station apparatus 3 may include one or more transmission reception points 4. At least some of the functions/processes of the base station apparatus 3 described below may be functions and processes at each of the transmission reception points 4 included in the base station apparatus 3. The base station apparatus 3 may serve the terminal apparatus 1 with one or more cells in a communicable range (communication area) controlled by the base station apparatus 3. In addition, the base station apparatus 3 may serve the terminal apparatus 1 with one or more cells in a communicable range (communication area) controlled by one or more transmission reception points 4. Further, one cell may be divided into a plurality of partial areas (beamed areas), and the terminal apparatus 1 may be served in each of the partial areas. Here, the portion region may be identified based on a beam index or a precoding index used in beamforming.

The wireless communication link from the base station apparatus 3 to the terminal apparatus 1 is referred to as a downlink. The wireless communication link from the terminal apparatus 1 to the base station apparatus 3 is referred to as an uplink.

In FIG. 1, Orthogonal Frequency Division Multiplexing (OFDM) including a Cyclic Prefix (CP), Single-Carrier Frequency Division Multiplexing (SC-FDM), Discrete Fourier Transform Spread OFDM (DFT-S-OFDM), or Multi-Carrier Code Division Multiplexing (MC-CDM) may be used in a wireless communication between the terminal apparatus 1 and the base station apparatus 3.

In addition, in FIG. 1, Universal-Filtered Multi-Carrier (UFMC), Filtered OFDM (F-OFDM), Windowed OFDM, or Filter-Bank Multi-Carrier (FBMC) may be used in the wireless communication between the terminal apparatus 1 and the base station apparatus 3.

Further, although OFDM is described as a transmission scheme with OFDM symbols in the present embodiment, the present invention may also include cases where the other transmission schemes described above are used.

Furthermore, in FIG. 1, the CP may not be used, or the above-described transmission scheme with zero padding may be used instead of the CP in the wireless communication between the terminal apparatus 1 and the base station apparatus 3. Moreover, the CP or zero padding may be added both forward and backward.

One aspect of the present embodiment may be operated in carrier aggregation or dual connectivity with a radio access technology (RAT) such as LTE or LTE-A (LTE Advanced)/LTE-A Pro. At this time, the aspect may be applied to some or all cells or cell groups, carriers or carrier groups (e.g., primary cells (PCell), secondary cells (SCell), primary secondary cells (PSCell), master cell groups (MCG), secondary cell groups (SCG), or the like). In addition, the aspect may be operated independently and used in a stand-alone means. In a dual connectivity operation, a Special Cell (SpCell) may be referred to as a PCell of an MCG or a PSCell of an SCG, respectively, depending on whether a Medium Access Control (MAC) entity is associated with the MCG or the SCG. If the dual connectivity operation is not performed, an SpCell is referred to as a PCell. The SpCell supports Physical Uplink Control Channel (PUCCH) transmission and contention based random access.

In the present embodiment, one serving cell or a plurality of serving cells may be configured for the terminal apparatus 1. The plurality of configured serving cells may include one primary cell and one or more secondary cells. The primary cell may be a serving cell in which an initial connection establishment procedure has been performed, a serving cell in which a connection re-establishment procedure has been initiated, or a cell indicated as a primary cell in a handover procedure. One or more secondary cells may be configured at a point of time when or after a radio resource control (RRC) connection is established. However, the plurality of configured serving cells may include one primary secondary cell. The primary secondary cell may be a secondary cell, in which control information can be transmitted in the uplink, among one or more secondary cells configured for the terminal apparatus 1. In addition, a subset of two types of serving cells, i.e., a master cell group and a secondary cell group, may be configured for the terminal apparatus 1. The master cell group may include one primary cell and zero or more secondary cells. The secondary cell group may include one primary secondary cell and zero or more secondary cells.

Time Division Duplex (TDD) and/or Frequency Division Duplex (FDD) may be applied to the wireless communication system according to the present embodiment. The Time Division Duplex (TDD) scheme or the Frequency Division Duplex (FDD) scheme may also be applied to all of multiple cells. Cells to which the TDD scheme is applied and cells to which the FDD scheme is applied may be aggregated. The TDD scheme may be referred to as an unpaired spectrum operation. The FDD scheme may be referred to as a paired spectrum operation.

A carrier corresponding to a serving cell in the downlink is referred to as a downlink component carrier (or a downlink carrier). A carrier corresponding to a serving cell in the uplink is referred to as an uplink component carrier (or an uplink carrier). A carrier corresponding to a serving cell in a sidelink is referred to as a sidelink component carrier (or a sidelink carrier). The downlink component carrier, the uplink component carrier, and/or the sidelink component carrier are collectively referred to as a component carrier (or a carrier).

The physical channels and the physical signals according to the present embodiment will be described below.

In FIG. 1, the following physical channels are used in the wireless communication between the terminal apparatus 1 and the base station apparatus 3.
- PBCH: Physical Broadcast Channel
- PDCCH: Physical Downlink Control Channel
- PDSCH: Physical Downlink Shared Channel
- PUCCH: Physical Uplink Control Channel
- PUSCH: Physical Uplink Shared Channel
- PRACH: Physical Random Access Channel

The PBCH is used to broadcast essential information blocks (Master Information Block (MIB), Essential information Block (EIB), and Broadcast Channel (BCH)) including essential system information required by the terminal apparatus 1.

In addition, the PBCH may be used to broadcast a time index within a period of a block of a synchronization signal (also referred to as an SS/PBCH block). Here, the time index is information for indicating indexes of the synchronization signal and the PBCH within the cell. For example, in a case that the SS/PBCH block is transmitted with an assumption of using three transmission beams (Quasi-CoLocation (QCL) regarding transmission filtering configuration and reception spatial parameters), a time order in a predetermined period or in a configured period may be indicated. In addition, the terminal apparatus may recognize a difference in time indexes as a difference in transmission beams.

The PDCCH is used to transmit (or carry) Downlink Control Information (DCI) in downlink wireless communication (i.e., wireless communication from the base station apparatus 3 to the terminal apparatus 1). Here, one or more pieces of DCI (which may be referred to as DCI formats) are defined for transmission of the downlink control information. That is, a field for the downlink control information is defined as DCI and mapped to information bits. The PDCCH is transmitted in a PDCCH candidate. The terminal apparatus 1 monitors a set of PDCCH candidates in the serving cell. The monitoring may mean attempting to decode the PDCCH according to a certain DCI format.

For example, the following DCI formats can be defined.
- DCI format 0_0
- DCI format 0_1
- DCI format 1_0
- DCI format 1_1
- DCI format 2_0
- DCI format 2_1
- DCI format 2_2
- DCI format 2_3

DCI format 0_0 may be used to schedule a PUSCH in a serving cell. DCI format 0_0 may include information indicating scheduling information of the PUSCH (frequency domain resource allocation and time domain resource allocation). DCI format 0_0 may be attached with a Cyclic Redundancy Check (CRC) scrambled by any of a Cell-Radio Network Temporary Identifier (C-RNTI), a Configured Scheduling-Radio Network Temporary Identifier (CS-RNTI), a Modulation Coding Scheme- Cell-Radio Network Temporary Identifier (MCS-C-RNTI), and/or a Temporary Common-Radio Network Temporary Identifier (TC-RNTI). DCI format 0_0 may be monitored in a common search space or a UE-specific search space.

DCI format 0_1 may be used to schedule a PUSCH in a serving cell. DCI format 0_1 may include information indicating scheduling information of the PUSCH (frequency domain resource allocation and time domain resource allocation), information indicating a Band Width Part (BWP), a Channel State Information (CSI) request, a Sounding Reference Signal (SRS) request, and information related to an antenna port. DCI format 0_1 may be attached with a CRC scrambled by any of a C-RNTI, a CS-RNTI, an Semi Persistent-Channel State Information-Radio Network Temporary Identifier (SP-CSI-RNTI), and/or an MCS-C-RNTI. DCI format 0_1 may be monitored in a UE-specific search space.

DCI format 1_0 may be used to schedule a PDSCH in a serving cell. DCI format 1_0 may include information indicating scheduling information of the PDSCH (frequency domain resource allocation and time domain resource allocation). DCI format 1_0 may be attached with a CRC scrambled by any of a C-RNTI, a CS-RNTI, an MCS-C-RNTI, a Paging-Radio Network Temporary Identifier (P-RNTI), an System Information-Radio Network Temporary Identifier (SI-RNTI), a Random Access-RNTI (RA-RNTI), and/or a TC-RNTI. DCI format 1_0 may be monitored in a common search space or a UE-specific search space.

DCI format 1_1 may be used to schedule a PDSCH in a serving cell. DCI format 1_1 may include information indicating scheduling information of the PDSCH (frequency domain resource allocation and time domain resource allocation), information indicating a Band Width Part (BWP), a Transmission Configuration Indication (TCI), and information related to an antenna port. DCI format 1_1 may be attached with a CRC scrambled by any of a C-RNTI, a CS-RNTI, and/or an MCS-C-RNTI. DCI format 1_1 may be monitored in a UE-specific search space.

DCI format 2_0 is used to notify a slot format of one or more slots. The slot format is defined as a slot format in which each OFDM symbol in the slot is classified as any of downlink, flexible, and uplink symbols. For example, in a case that a slot format is 28, DDDDDDDDDDDDFU is applied to fourteen OFDM symbols in the slot for which the slot format 28 has been indicated. Here, D is a downlink symbol, F is a flexible symbol, and U is an uplink symbol. Further, the slot will be described later.

DCI format 2_1 is used to notify the terminal apparatus 1 of physical resource blocks and OFDM symbols that may be assumed not to be transmitted. Besides, this information may be referred to as a preemption indication (intermittent transmission indication).

DCI format 2_2 is used to transmit a Transmit Power Control (TPC) command for the PUSCH and the PUSCH.

DCI format 2_3 is used to transmit a group of TPC commands for sounding reference signal (SRS) transmission performed by one or more terminal apparatuses 1. In addition, an SRS request may be transmitted along with the TPC command. Besides, the SRS request and the TPC command may be defined in DCI format 2_3 for an uplink without the PUSCH or the PUCCH or for an uplink in which the transmit power control of the SRS is not associated with the transmit power control of the PUSCH.

The DCI for the downlink is also referred to as a downlink grant or a downlink assignment. Here, the DCI for the uplink is also referred to as an uplink grant or an uplink assignment. The DCI may also be referred to as a DCI format.

A Cyclic Redundancy Check (CRC) parity bit attached to a DCI format transmitted by one PDCCH is scrambled by an SI-RNTI (System Information-Radio Network Temporary Identifier), a P-RNTI (Paging-Radio Network Temporary Identifier), a C-RNTI (Cell-Radio Network Temporary Identifier), a CS-RNTI (Configured Scheduling-Radio Network Temporary Identifier), an RA-RNTI (Random Access-Radio Network Temporary Identity), or a Temporary C-RNTI. The SI-RNTI may be an identifier used to broadcast system information. The P-RNTI may be an identifier used for paging and notification of system information modification. The C-RNTI, the MCS-C-RNTI, and the CS-RNTI are identifiers used to identify the terminal apparatus in a cell. The Temporary C-RNTI is an identifier used to identify the terminal apparatus 1 that has transmitted a random access preamble in a contention based random access procedure.

The C-RNTI (an identifier (identification information) of the terminal apparatus) is used to control the PDSCH or the PUSCH in one or more slots. The CS-RNTI is used to periodically allocate resources of the PDSCH or the PUSCH. The MCS-C-RNTI is used to indicate the use of a predetermined MCS table for grant-based transmission. The Temporary C-RNTI (TC-RNTI) is used to control PDSCH transmission or PUSCH transmission in one or more slots. The Temporary C-RNTI is used to schedule retransmission of a random access Message 3 and transmission of a random access Message 4. The RA-RNTI (random access response identification information) is determined according to frequency and time location information of a physical random access channel on which a random access preamble has been transmitted.

The PUCCH is used to transmit uplink control information (UCI) in uplink wireless communication (i.e., wireless communication from the terminal apparatus 1 to the base station apparatus 3). Here, the uplink control information may include channel state information (CSI) for indicating a state of a downlink channel. In addition, the uplink control information may include a scheduling request (SR) for requesting UL-SCH resources. In addition, the uplink control information may include a Hybrid Automatic Repeat request ACKnowledgement (HARQ-ACK). The HARQ-ACK may indicate an HARQ-ACK for downlink data (Transport Block, Medium Access Control Protocol Data Unit: MAC PDU, Downlink-Shared Channel: DL-SCH).

The PDSCH is used to transmit downlink data (Downlink-Shared Channel: DL-SCH) from a medium access (MAC: Medium Access Control) layer. In addition, in a case of the downlink, the PDSCH is also used to transmit System Information (SI), a Random Access Response (RAR), and the like.

The PUSCH may be used to transmit uplink data (Uplink-Shared Channel (UL-SCH)) from the MAC layer or transmit HARQ-ACK and/or CSI along with the uplink data. In addition, the PSUCH may be used to transmit the CSI only or the HARQ-ACK and CSI only. In other words, the PSUCH may be used to transmit the UCI only.

Here, the base station apparatus 3 and the terminal apparatus 1 exchange (transmit and/or receive) signals with each other in higher layers. For example, the base station apparatus 3 and the terminal apparatus 1 may transmit and/or receive radio resource control (RRC) signaling (also referred to as RRC message or RRC information) in an RRC layer. In addition, the base station apparatus 3 and the terminal apparatus 1 may transmit and/or receive a Medium Access Control (MAC) element in a MAC layer. In addition, the RRC layer of the terminal apparatus 1 acquires the system information reported from the base station apparatus 3. Here, the RRC signaling, the system information, and/or the MAC control element may also be referred to as higher layer signaling or a higher layer parameter. The higher layer here means a higher layer as viewed from a physical layer and may thus include one or more layers such as a MAC layer, an RRC layer, an RLC layer, a PDCP layer, and a Non Access Stratum (NAS) layer. For example, in processing of the MAC layer, the higher layer may include one or more layers such as an RRC layer, an RLC layer, a PDCP layer, and a NAS layer. Hereinafter, "A is given in the higher layer" or "A is given by the higher layer" may mean that the higher layer (mainly, RRC layer, MAC layer, etc.) of the terminal apparatus 1 receives A from the base station apparatus 3, and the received A is given from the higher layer of the terminal apparatus 1 to the physical layer of the terminal apparatus 1. The expression that a parameter of the higher layer is configured in the terminal apparatus 1 may mean that a parameter of the higher layer is provided to the terminal apparatus.

The PDSCH or PUSCH may be used to transmit the RRC signaling and the MAC control element. Here, in the PDSCH, the RRC signaling transmitted from the base station apparatus 3 may be signaling common to a plurality of terminal apparatuses 1 within a cell. In addition, the RRC signaling transmitted from the base station apparatus 3 may be signaling dedicated to a certain terminal apparatus 1 (also referred to as dedicated signaling). That is, terminal apparatus specific (UE specific) information may be transmitted using signaling dedicated to a certain terminal apparatus 1. In addition, the PUSCH may be used to transmit UE capability in the uplink.

In FIG. 1, the following downlink physical signals are used for downlink wireless communication. Here, the downlink physical signals are not used to transmit information output from the higher layers but are used by the physical layer.
- Synchronization signal (SS)
- Reference Signal (RS)

The synchronization signal includes a PSS (Primary Synchronization Signal) and an SSS (Secondary Synchronization Signal). A cell ID can be detected by using the PSS and the SSS.

The synchronization signal is used for the terminal apparatus 1 to establish synchronization in a frequency domain and a time domain in the downlink. Here, the synchronization signal may be used for the terminal apparatus 1 to select precoding or a beam in precoding or beamforming performed by the base station apparatus 3. Furthermore, the beam may be referred to as a transmission or reception filtering configuration, or a spatial domain transmission filter or a spatial domain reception filter.

A reference signal is used for the terminal apparatus 1 to perform propagation path compensation on a physical channel. Here, the reference signal may be used for the terminal apparatus 1 to calculate downlink CSI. In addition, the reference signal may be used for a numerology such as radio parameters or subcarrier spacing or may be used for fine synchronization to achieve FFT window synchronization.

In the present embodiment, any one or more of the following downlink reference signals are used.
- DMRS (Demodulation Reference Signal)
- CSI-RS (Channel State information Reference Signal)
- PTRS (Phase Tracking Reference Signal)
- TRS (Tracking Reference Signal)

The DMRS is used to demodulate a modulated signal. Besides, in the DMRS, two types of reference signals, i.e., a reference signal for demodulating the PBCH and a reference signal for demodulating the PDSCH, may be defined, or both reference signals may be referred to as the DMRS. The CSI-RS is used for measurement of Channel State Information (CSI) and beam management, and a periodic, semi-persistent, or aperiodic CSI reference signal transmission method is applied. In the CSI-RS, a Non-Zero Power (NZP) CSI-RS and a Zero Power (ZP) CSI-RS with zero transmission power (or reception power) may be defined. Here, the ZP CSI-RS may be defined as a CSI-RS resource that has a zero transmission power or that is not transmitted. The PTRS is used to track a phase in a time axis for the purpose of ensuring a frequency offset caused by phase noise. The TRS is used to ensure a Doppler shift during high speed travel. In addition, the TRS may be used as one configuration for the CSI-RS. For example, a radio resource may be configured with one port CSI-RS as the TRS.

In the present embodiment, any one or more of the following uplink reference signals are used.
- DMRS (Demodulation Reference Signal)
- PTRS (Phase Tracking Reference Signal)
- SRS (Sounding Reference Signal)

The DMRS is used to demodulate a modulated signal. Besides, in the DMRS, two types of reference signals, i.e., a reference signal for demodulating the PUCCH and a reference signal for demodulating the PUSCH, may be defined, or both reference signals may be referred to as the DMRS. The SRS is used for measurement of uplink Channel State Information (CSI), channel sounding, and beam management. The PTRS is used to track a phase in a time axis for the purpose of ensuring a frequency offset caused by phase noise.

The downlink physical channels and/or the downlink physical signals are collectively referred to as a downlink signal. The uplink physical channels and/or the uplink physical signals are collectively referred to as an uplink signal. The downlink physical channels and/or the uplink physical channels are collectively referred to as a physical channel. The downlink physical signals and the uplink physical signals are collectively referred to as a physical signal.

BCH, UL-SCH and DL-SCH are transport channels. A channel used in a medium access control (MAC) layer is referred to as a transport channel. The unit of a transport channel used in the MAC layer is referred to as a Transport Block (TB) or a MAC PDU (Protocol Data Unit). A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and coding processing is performed for each codeword.

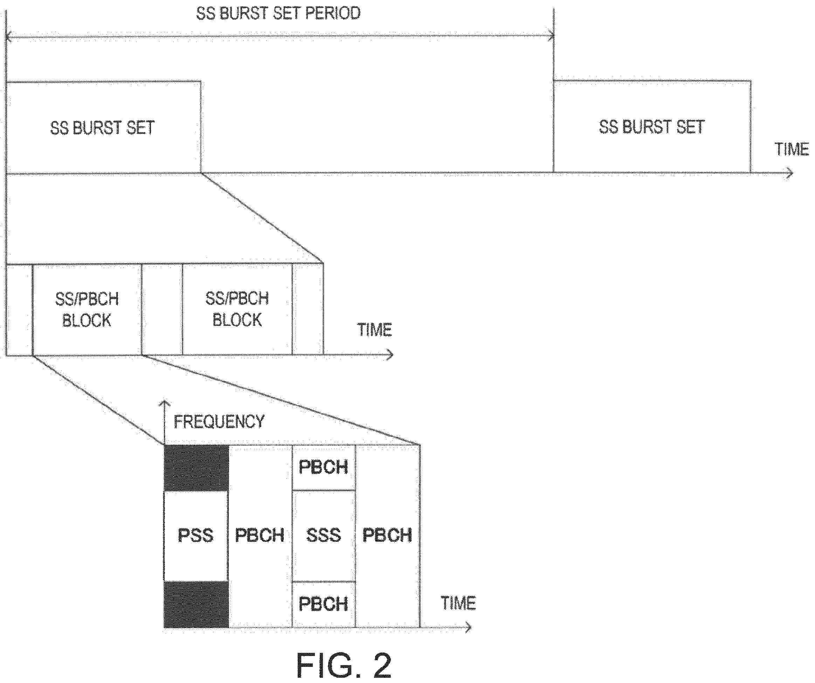

FIG. 2 is a diagram illustrating an example of an SS/PBCH block (also referred to as a synchronization signal block, an SS block or an SSB) and an SS burst set (also referred to as a synchronization signal burst set) according to an embodiment of the present invention. FIG. 2 illustrates an example in which two SS/PBCH blocks are included in the SS burst set that is periodically transmitted and each SS/PBCH block includes four consecutive OFDM symbols.

The SS/PBCH block is a unit block including at least the synchronization signal (PSS, SSS) and/or the PBCH. Transmission of the signal/channel included in the SS/PBCH block is expressed as transmission of the SS/PBCH block. When the synchronization signal and/or the PBCH is transmitted by using one or more SS/PBCH blocks in the SS burst set, the base station apparatus 3 may use a downlink transmission beam independent for each SS/PBCH block.

In FIG. 2, the PSS, the SSS, and the PBCH are time/frequency-multiplexed in one SS/PBCH block. However, the order in which the PSS, the SSS and/or the PBCH are multiplexed in the time domain may be different from that in the example illustrated in FIG. 2.

The SS burst set may be transmitted periodically. For example, a period used for initial access and a period configured for a connected (Connected or RRC Connected) terminal apparatus may be defined. In addition, the period configured for the connected (Connected or RRC Connected) terminal apparatus may be configured in the RRC layer. Besides, the period configured for the connected (Connected or RRC_Connected) terminal may be a period of a radio resource in the time domain during which transmission is potentially to be performed, and actually, whether the transmission is to be performed during the period may be determined by the base station apparatus 3. In addition, the period used for the initial access may be predefined in specifications or the like.

The SS burst set may be determined based on a System Frame Number (SFN). In addition, a starting position (boundary) of the SS burst set may be determined based on the SFN and the period.

An SSB index (also referred to as an SS/PBCH block index) is assigned to the SS/PBCH block according to a temporal position in the SS burst set. The terminal apparatus 1 calculates the SSB index based on information of the PBCH and/or information of the reference signal included in the detected SS/PBCH block.

The same SS block index is assigned to SS/PBCH blocks at the same relative time in each SS burst set among a plurality of SS burst sets. It may be assumed that the SS/PBCH blocks at the same relative time in each SS burst set among the plurality of SS burst sets are QCL (or the same downlink transmission beam is applied). In addition, it may be assumed that antenna ports for the SS/PBCH blocks at the same relative time in each SS burst set among the plurality of SS burst sets are QCL with respect to an average delay, a Doppler shift, and a spatial correlation.

It may be assumed that the SS/PBCH blocks to which the same SSB index is assigned in a period of a certain SS burst set are QCL with respect to an average delay, an average gain, a Doppler spread, a Doppler shift, and a spatial correlation. A configuration corresponding to one or more SS/PBCH blocks (or reference signals) that are QCL may be referred to as a QCL configuration.

The number of SS/PBCH blocks (also referred to as the number of SS blocks or the number of SSBs) may be defined as, for example, the number of SS/PBCH blocks in an SS burst or an SS burst set or in an SS/PBCH block period. In addition, the number of SS/PBCH blocks may indicate the number of beam groups for cell selection in an SS burst or an SS burst set or in an SS/PBCH block period. Here, the beam groups may be defined as the number of different SS/PBCH blocks or the number of different beams included in the SS burst or the SS burst set or in the SS/PBCH block period.

Hereinafter, the reference signals described in the present embodiment include a downlink reference signal, a synchronization signal, an SS/PBCH block, a downlink DM-RS, a CSI-RS, an uplink reference signal, an SRS, and/or an uplink DM-RS. For example, the downlink reference signal, the synchronization signal, and/or the SS/PBCH block may be referred to as a reference signal. The reference signals used in the downlink include a downlink reference signal, a synchronization signal, an SS/PBCH block, a downlink DM-RS, a CSI-RS, and/or the like. The reference signals used in the uplink include an uplink reference signal, an SRS, an uplink DM-RS, and/or the like.

In addition, the reference signal may be used for Radio Resource Measurement (RRM). Besides, the reference signal may be used for beam management.

The beam management may be a procedure of the base station apparatus 3 and/or the terminal apparatus 1 for matching directivity of an analog beam and/or a digital beam in a transmission apparatus (e.g., the base station apparatus 3 in the downlink and the terminal apparatus 1 in the uplink) with directivity of an analog beam and/or a digital beam in a reception apparatus (e.g., the terminal apparatus 1 in the downlink and the base station apparatus 3 in the uplink) to acquire a beam gain.

In addition, a procedure for configuring, setting or establishing a beam pair link may include the following procedures.
- Beam selection
- Beam refinement
- Beam recovery

For example, the beam selection may be a procedure for selecting a beam in communication between the base station apparatus 3 and the terminal apparatus 1. In addition, the beam refinement may be a procedure for further selecting a beam having a higher gain or changing a beam to an optimum beam between the base station apparatus 3 and the terminal apparatus 1 through the movement of the terminal apparatus 1. The beam recovery may be a procedure for re-selecting the beam in a case that the quality of a communication link is degraded due to blockage caused by a blocking object, a passing person, or the like in communication between the base station apparatus 3 and the terminal apparatus 1.

The beam management may include the beam selection and the beam refinement. The beam recovery may include the following procedures.
- Detection of beam failure
- Discovery of new beam
- Transmission of beam recovery request
- Monitoring of response to beam recovery request

For example, when the transmission beam of the base station apparatus 3 is selected in the terminal apparatus 1, a Reference Signal Received Power (RSRP) of an SSS included in an SS/PBCH block or a CSI-RS may be used, or the CSI may be used. In addition, a CSI-RS Resource Index (CRI) may be used as a report to the base station apparatus 3, or an index indicated by a sequence of demodulation reference signals (DMRS) used for demodulating the PBCH and/or the PBCH included in the SS/PBCH block may be used.

In addition, the base station apparatus 3 indicates a CRI or a time index of the SS/PBCH when indicating a beam to the terminal apparatus 1, and the terminal apparatus 1 performs reception based on the indicated CRI or the time index of the SS/PBCH. At this time, the terminal apparatus 1 may configure a spatial filter based on the indicated CRI or time index of the SS/PBCH to perform reception. In addition, the terminal apparatus 1 may perform reception by using a Quasi-Co-Location (QCL) assumption. The expression that a certain signal (such as an antenna port, a synchronization signal, or a reference signal) is "QCL" or with another signal (such as an antenna port, a synchronization signal, or a reference signal) or "using a QCL assumption" can be interpreted as that the certain signal is associated with another signal.

If a long term property of a channel on which a certain symbol in a certain antenna port is carried can be estimated from a channel on which a certain symbol in the other antenna port is carried, then the two antenna ports are said to be QCL. The long term property of the channel includes one or more of a delay spread, a Doppler spread, a Doppler shift, an average gain, and an average delay. For example, in a case that an antenna port 1 and an antenna port 2 are QCL with respect to an average delay, this means that a reception timing for the antenna port 2 may be inferred from a reception timing for the antenna port 1.

The QCL may be extended to beam management. Therefore, spatially extended QCL may be newly defined. For example, the long term property of a channel in a QCL assumption of a spatial domain may be an Angle of Arrival (AoA), a Zenith angle of Arrival (ZoA), or the like, and/or an angle spread (e.g., an Angle Spread of Arrival (ASA) or a Zenith angle Spread of Arrival (ZSA)), a transmission angle (Angle of Departure (AoD), Zenith angle of Departure (ZoD), or the like), an angle spread of the transmission angle (e.g., an Angle Spread of Departure (ASD) or a Zenith angle Spread of Departure (ZSD)), a spatial correlation, or a reception spatial parameter, in a radio link or channel.

For example, in a case that the antenna port 1 and the antenna port 2 are considered to be QCL with respect to a reception spatial parameter, this means that a reception beam for receiving signals from the antenna port 2 may be inferred from a reception beam (a reception spatial filter) for receiving signals from the antenna port 1.

A combination of long term properties which may be considered to be QCL may be defined as a QCL type. For example, the following types may be defined.
- Type A: Doppler shift, Doppler spread, average delay, delay spread
- Type B: Doppler shift, Doppler spread
- Type C: Average delay, Doppler shift
- Type D: Reception spatial parameter

The QCL types described above may configure and/or indicate a QCL assumption between one or two reference signals and the PDCCH or PDSCH DMRS in the RRC and/or MAC layer and/or the DCI as a transmission configuration indication (TCI). For example, when an index #2 of the PBCH/SS block and the QCL type A + QCL type B are configured and/or indicated as one state of the TCI in a case that the terminal apparatus 1 receives the PDCCH, the terminal apparatus 1 in receiving the PDCCH DMRS may receive the PDCCH DMRS by considering the Doppler shift, the Doppler spread, the average delay, the delay spread, and the reception space parameters in the reception of the PBCH/SS block index #2 as the long term properties of the channel, and may perform synchronization or propagation path estimation. At this time, a reference signal (e.g., the PBCH/SS block in the example described above) indicated by the TCI may be referred to as a source reference signal, and a reference signal (e.g., the PDCCH DMRS in the example described above) affected by the long term properties inferred from the long term properties of the channel in a case that the source reference signal is received may be referred to as a target reference signal. In addition, one or more TCI states and a combination of a source reference signal and a QCL type for each state may be configured with the RRC, and the TCI may be indicated in the MAC layer or the DCI for the terminal apparatus 1.

The operations of the base station apparatus 3 and terminal apparatus 1 equivalent to the beam management may be defined through a QCL assumption in the spatial domain and the radio resource (time and/or frequency) as the beam management and beam indication/report by this method.

The subframe will be described below. The subframe referred in the present embodiment may also be referred to as a resource unit, a radio frame, a time period, a time interval, or the like.

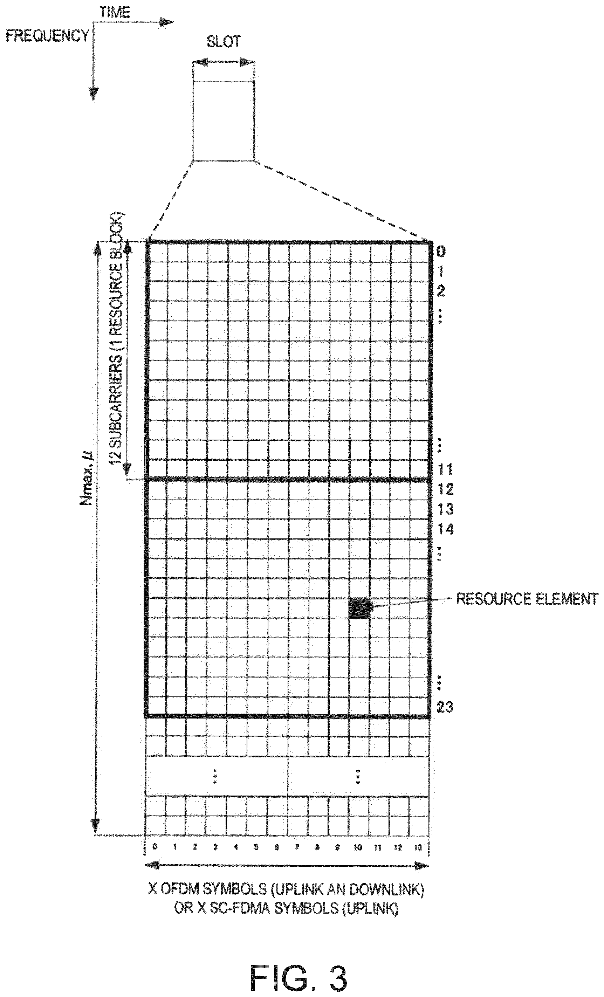

FIG. 3 is a diagram illustrating an example of a schematic configuration of uplink and downlink slots according to an embodiment of the present invention. The length of each radio frame is 10ms. In addition, each of the radio frames includes 10 subframes and W slots. Further, one slot includes X OFDM symbols. In other words, the length of one subframe is 1ms. For each slot, the time length is defined by subcarrier spacing. For example, in a case of Orthogonal Frequency Division Multiplexing (OFDM) symbol subcarrier spacing of 15 kHz and a Normal Cyclic Prefix (NCP), X=7 and X=14 correspond to 0.5ms and 1ms, respectively. Further, in a case of subcarrier spacing of 60 kHz, X=7 and X=14 correspond to 0.125ms and 0.25ms, respectively. Furthermore, for example, in a case of X=14, W=10 when the subcarrier spacing is 15 kHz, and W=40 when the subcarrier spacing is 60 kHz. FIG. 3 illustrates a case of X=7 as an example. In addition, expansion can similarly be performed even in a case of X=14. Further, the uplink slot is similarly defined, and the downlink slot and the uplink slot may be separately defined. In addition, the bandwidth of the cell in FIG. 3 may also be defined as a Band Width Part (BWP). Furthermore, the slot may be defined as a Transmission Time Interval (TTI). The slot may not be defined as a TTI. The TTI may be a transmission period of the transport block. In the uplink, a Single-Carrier Frequency Division Multiple Access (SC-FDMA) access scheme, also referred to as Discrete Fourier Transform-Spreading OFDM (DFT-S-OFDM), may be utilized. In the uplink, PUCCH(s), PUSCH(s), PRACH(s) and the like may be transmitted. An uplink radio frame may include multiple pairs of uplink resource blocks (RBs). The uplink RB pair is a unit for assigning uplink radio resources, defined by a predetermined bandwidth (e.g., RB bandwidth) and a time slot. The uplink RB pair includes two uplink RBs that are continuous in the time domain.

The signal or the physical channel transmitted in each of the slots may be expressed by a resource grid. The resource grid is defined by a plurality of subcarriers and a plurality of OFDM symbols for each numerology (e.g., subcarrier spacing and cyclic prefix length) and for each carrier. The number of subcarriers constituting one slot depends on each of downlink and uplink bandwidths of a cell, respectively. Each element within a resource grid is referred to as a resource element. The resource element may be identified by using a subcarrier number and an OFDM symbol number.

The resource grid is used to express mapping of a certain physical downlink channel (such as the PDSCH) or a certain physical uplink channel (such as the PUSCH) to resource elements. For example, in a case that the subcarrier spacing is 15 kHz and the number X of OFDM symbols included in a subframe is 14, and in the case of NCP, one physical resource block is defined by 14 consecutive OFDM symbols in the time domain and by 12*Nmax consecutive subcarriers in the frequency domain. Nmax is the maximum number of resource blocks determined by a subcarrier spacing configuration µ described below. In other words, the resource grid includes (14* 12*Nmax, µ) resource elements. Since Extended CP (ECP) is supported only by the subcarrier spacing of 60 kHz, one physical resource block is defined by, for example, 12 (the number of OFDM symbols included in one slot)*4 (the number of slots included in one subframe)=48 consecutive OFDM symbols in the time domain and by 12*Nmax, µ consecutive subcarriers in the frequency domain. In other words, the resource grid includes (48* 12*Nmax, µ) resource elements.

Reference resource blocks, common resource blocks, physical resource blocks, and virtual resource blocks are defined as resource blocks. One resource block is defined as twelve consecutive subcarriers in the frequency domain. The reference resource blocks are common to all subcarriers; for example, resource blocks may be configured with subcarrier spacing of 15 kHz and numbered in an ascending order. A subcarrier index 0 at a reference resource block index 0 may be referred to as a reference point A (which may simply be referred to as a "reference point " ). The common resource blocks are resource blocks numbered from 0 in an ascending order at each subcarrier spacing configuration µ from the reference point A. The resource grid described above is defined by the common resource blocks. The physical resource blocks are resource blocks included in a Bandwidth Part (BWP) described below and numbered from 0 in an ascending order, and the physical resource blocks are resource blocks included in a BWP and numbered from 0 in an ascending order. A certain physical uplink channel is first mapped to a virtual resource block. Thereafter, the virtual resource block is mapped to a physical resource block. Hereinafter, a resource block may be a virtual resource block, a physical resource block, a common resource block, or a reference resource block.

Next, the subcarrier spacing configuration µ will be described. As described above, one or more OFDM numerologies are supported by the NR. In a certain BWP, the subcarrier spacing configuration µ (µ = 0, 1, ... , 5) and the cyclic prefix length are given by a higher layer for a downlink BWP and given by a higher layer for an uplink BWP. Here, when µ is given, a subcarrier spacing Δf is given by Δf = 2^µ · 15 (kHz).

In the subcarrier spacing configuration µ, the slots are counted in an ascending order from 0 to N^{subframe, µ}_{ slot}-1 within a subframe and counted in an ascending order from 0 to N^{frame, µ}_{slot}-1 within a frame. N^{slot}_{symb} consecutive OFDM symbols are present in a slot based on the slot configuration and the cyclic prefix. N^{slot}_{symb} is 14. The start of the slot n^{µ}_{s} in the subframe is aligned in time with the start of the (n^{µ}_{s} N^{ slot}_{ symb})th OFDM symbol in the same subframe.

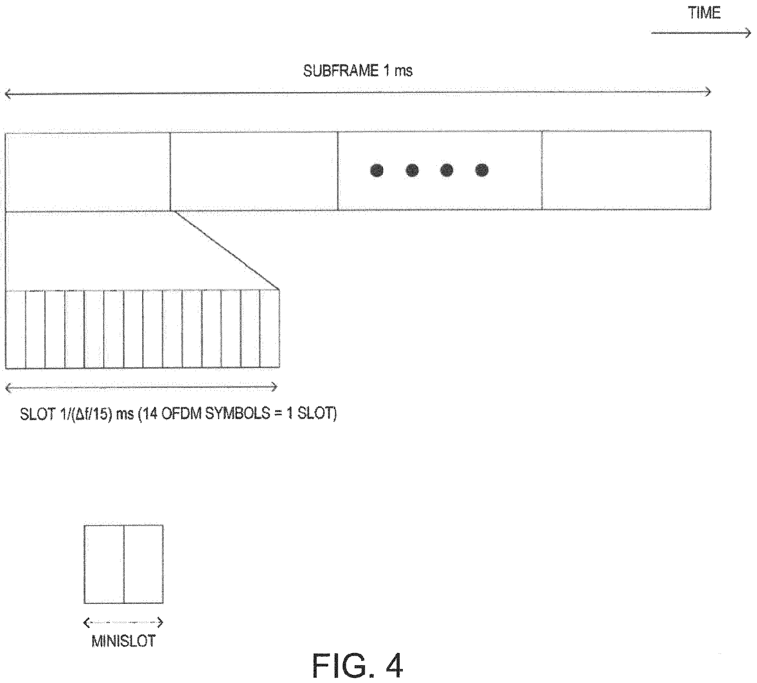

Next, a subframe, a slot, and a mini-slot will be described below. FIG. 4 is a diagram illustrating a relationship among a subframe, a slot, and a mini-slot in the time domain according to an embodiment of the present invention. As illustrated in FIG. 4, three types of time units are defined. The subframe is 1ms regardless of the subcarrier spacing, the number of OFDM symbols included in a slot is 7 or 14, and the slot length differs depending on the subcarrier spacing. Here, in a case that the subcarrier spacing is 15 kHz, fourteen OFDM symbols are included in one subframe. The downlink slot may be referred to as a PDSCH mapping type A. The uplink slot may be referred to as a PUSCH mapping type A.

The mini-slot (which may be referred to as a sub-slot) is a time unit including fewer OFDM symbols than OFDM symbols included in the slot. In FIG. 4, a case in which the mini-slot includes two OFDM symbols is illustrated as an example. The OFDM symbols in the mini-slot may match the timing for the OFDM symbols constituting the slot. Besides, the minimum unit for scheduling may be a slot or a mini-slot. In addition, allocating a mini-slot may be referred to as non-slot based scheduling. Also, scheduling a mini-slot may be expressed as scheduling a resource in which the relative time positions of the starting positions of a reference signal and data are fixed. The downlink mini-slot may be referred to as a PDSCH mapping type B. The uplink mini-slot may be referred to as a PUSCH mapping type B.

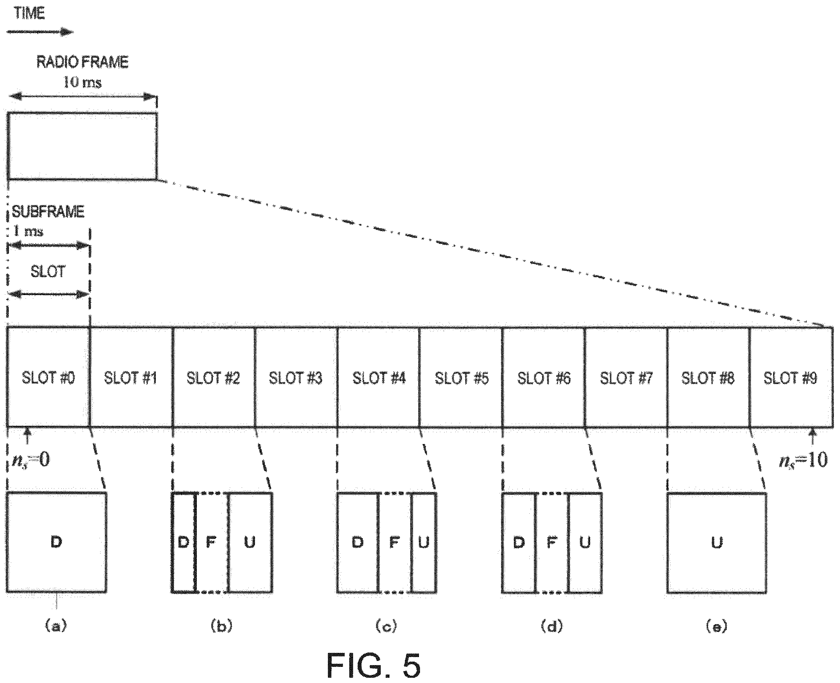

FIG. 5 is a diagram illustrating an example of a slot or a subframe according to an embodiment of the present invention. Here, a case that the slot length is 1ms at the subcarrier spacing of 15 kHz is illustrated as an example. In FIG. 5, D indicates the downlink and U indicates the uplink. As illustrated in FIG. 5, a certain time period (for example, a minimum time period to be allocated to one UE in the system) may include one or more of the following:
- Downlink symbol
- Flexible symbol
- Uplink symbol.

The ratios thereof may be predetermined as a slot format. In addition, the ratio thereof may be defined by the number of downlink OFDM symbols included in a slot or defined by a starting position and an ending position in the slot. Further, the ratio thereof may also be defined by the number of uplink OFDM symbols or DFT-S-OFDM symbols included in a slot or defined by a starting position and an ending position in the slot. Furthermore, scheduling slot may be expressed as scheduling a resource in which the relative time positions of a reference signal and a slot boundary are fixed.

The terminal apparatus 1 may receive a downlink signal or a downlink channel with a downlink symbol or a flexible symbol. The terminal apparatus 1 may transmit an uplink signal or a downlink channel with an uplink symbol or a flexible symbol.

FIG. 5(a) is an example in which a certain time period (which may be referred to as, for example, a minimum unit of time resource that can be allocated to one UE, a time unit, or the like; and a plurality of minimum units of the time resource may be bundled and referred to as a time unit) is entirely used for downlink transmission. FIG. 5 (b) illustrates an example in which an uplink is scheduled, for example, via a PDCCH in a first time resource, and an uplink signal is transmitted via a flexible symbol including a processing delay of the PDCCH, a time for switching from a downlink to an uplink, and generation of a transmission signal. FIG. 5(c) illustrates an example in which a certain time period is used to transmit a PDCCH and/or a downlink PDSCH in a first time resource and used to transmit a PUSCH or a PUCCH with a gap for a processing delay, a time for switching from a downlink to an uplink, and generation of a transmission signal. Here, in an example, an uplink signal may be used to transmit HARQ-ACK and/or CSI, i.e., UCI. FIG. 5(d) illustrates an example in which a certain time period is used to transmit a PDCCH and/or a PDSCH in a first time resource and used to transmit an uplink PUSCH and/or a PUCCH with a gap for a processing delay, a time for switching from a downlink to an uplink, and generation of a transmission signal. Here, in an example, an uplink signal may be used to transmit uplink data, i.e., UL-SCH. FIG. 5 (e) is an example in which a certain time period is entirely used for uplink transmission (PUSCH or PUCCH).

The downlink part and uplink part described above may include a plurality of OFDM symbols similar to those in the LTE.

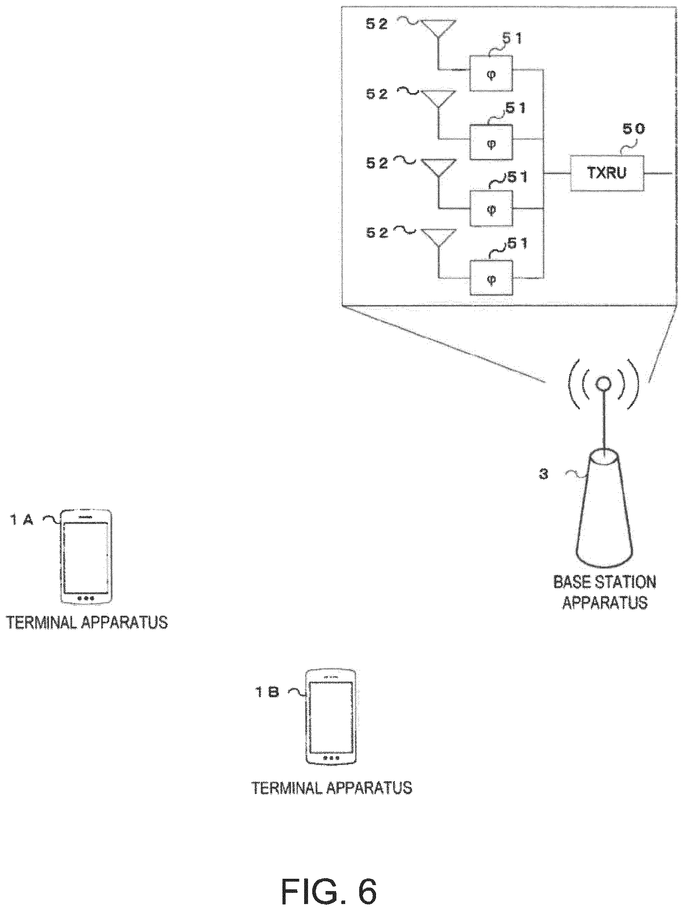

FIG. 6 is a diagram illustrating an example of beamforming according to an embodiment of the present invention. A plurality of antenna elements are connected to one transceiver unit (TXRU) 50, a phase is controlled by a phase shifter 51 for each antenna element, and a beam can be directed to an arbitrary direction with respect to a transmission signal by transmitting it from each antenna element 52. Typically, the TXRU may be defined as an antenna port, and only the antenna port may be defined in the terminal apparatus 1. Since the directivity can be directed in any direction by controlling the phase shifter 51, the base station apparatus 3 can communicate with the terminal apparatus 1 by using a beam having a high gain.

Hereinafter, a Band Width Part (BWP) will be described. The BWP may be referred to as a carrier BWP. The BWP may be configured for each of the downlink and the uplink. The BWP is defined as a set of consecutive physical resources selected from consecutive subsets of common resource blocks. The terminal apparatus 1 may be configured with up to four BWPs in which one downlink carrier BWP (DL BWP) is activated at a certain time. The terminal apparatus 1 may be configured with up to four BWPs in which one uplink carrier BWP (UL BWP) is activated at a certain time. In a case of carrier aggregation, the BWP may be configured in each serving cell. At this time, the fact that one BWP is configured in a certain serving cell may be expressed as a fact that no BWP is configured. Further, the fact that two or more BWPs are configured may be expressed as a fact that the BWP is configured.

### <MAC Entity Operation>

In an activated serving cell, there is always one active (activated) BWP. BWP switching for a certain serving cell is used to activate an inactive (deactivated) BWP and deactivate an active (activated) BWP. The BWP switching for a certain serving cell is controlled by a PDCCH indicating a downlink assignment or an uplink grant. The BWP switching for a certain serving cell may be further controlled by a BWP inactivity timer, RRC signaling, or the MAC entity itself at the start of a random access procedure. In addition of an SpCell (PCell or PSCell) or activation of an SCell, one BWP is first active without receiving a PDCCH indicating a downlink assignment or an uplink grant.

The first active DL BWP and the first active UL BWP may be specified by an RRC message transmitted from the base station apparatus 3 to the terminal apparatus 1. The active BWP for a certain serving cell is specified by an RRC or a PDCCH transmitted from the base station apparatus 3 to the terminal apparatus 1. In addition, the first active DL BWP and the first active UL BWP may be included in a Message 4. In an unpaired spectrum (e.g., TDD band, etc.), a DL BWP and a UL BWP are paired, and the BWP switching is common to the UL and the DL.

The MAC entity of the terminal apparatus 1 applies normal processing in an active BWP for each activated serving cell for which the BWP is configured. The normal processing includes transmitting the UL-SCH, transmitting the RACH, monitoring the PDCCH, transmitting the PUCCH, transmitting the SRS, and receiving the DL-SCH. The MAC entity of the terminal apparatus 1 does not transmit the UL-SCH, does not transmit the RACH, does not monitor the PDCCH, does not transmit the PUCCH, does not transmit the SRS, and does not receive the DL-SCH in an inactive BWP for each activated serving cell for which the BWP is configured. In a case that a certain serving cell is deactivated, an active BWP may not be present (for example, an active BWP is deactivated).

### <RRC Operation>

A BWP information element (IE) included in the RRC message (broadcast system information or information transmitted by a dedicated RRC message) is used to configure a BWP. The RRC message transmitted from the base station apparatus 3 is received by the terminal apparatus 1. For each serving cell, a network (such as the base station apparatus 3) configures, for the terminal apparatus 1, at least an initial BWP including at least a downlink BWP and one uplink BWP (such as in a case that the serving cell is configured with an uplink) or two uplink BWPs (such as in a case that a supplementary uplink is used).

Furthermore, the network may configure an additional uplink BWP or downlink BWP for a certain serving cell. The BWP configuration is divided into an uplink parameter and a downlink parameter. In addition, the BWP configuration is also divided into a common parameter and a dedicated parameter. The common parameter (e.g., a BWP uplink common IE, a BWP downlink common IE, etc.) is cell specific. The common parameter for an initial BWP of a primary cell is also provided in system information. For all other serving cells, the network provides the common parameters with dedicated signals. The BWP is identified by a BWP ID. The BWP ID of the initial BWP is 0. The BWP ID of the other BWP takes a value from 1 to 4.

When a higher layer parameter initialDownlinkBWP is not configured (provided) for terminal apparatus 1, the initial DL BWP (e.g., initial active DL BWP) may be defined, by the location and the number of consecutive PRBs, a subcarrier spacing, and a cyclic prefix, for reception of a PDCCH in a control resource set (CORESET) for a type 0 PDCCH common search space. The position of the consecutive PRBs begins at a PRB with the lowest index and ends at a PRB with the highest index among the PRBs of the control resource set for the type 0 PDCCH common search space. When the higher layer parameter initialDownlinkBWP is configured (provided) for the terminal apparatus 1, the initial DL BWP may be indicated by the higher layer parameter initialDownlinkBWP. The higher layer parameter initialDownlinkBWP may be included in SIB1 (systemInformationBlockType1, ServingCellConfigCommonSIB) or ServingCellCongfigCommon. An information element ServingCellCongfigCommonSIB is used in SIB1 to configure a cell-specific parameter of the serving cell for the terminal apparatus 1.

That is, when the higher layer parameter initialDownlinkBWP is not configured (provided) for the terminal apparatus 1, the size of the initial DL BWP may be the number of resource blocks of the control resource set (CORESET #0) for the type 0 PDCCH common search space. When the higher layer parameter initialDownlinkBWP is configured (provided) for the terminal apparatus 1, the size of the initial DL BWP may be given by locationAndBandwidth included in the higher layer parameter initialDownlinkBWP. The higher layer parameter locationAndBandwidth may indicate the position and bandwidth of the frequency domain of the initial DL BWP.

As described above, a plurality of DL BWPs may be configured for the terminal apparatus 1. In addition, among DL BWPs configured for the terminal apparatus 1, a default DL BWP can be configured by a higher layer parameter defaultDownlinkBWP-Id. When the higher layer parameter defaultDownlinkBWP-Id is not provided for the terminal apparatus 1, the default DL BWP is the initial DL BWP.

The initial UL BWP may be provided to the terminal apparatus 1 by SIB1 (systemInformationBlockType1) or initialUplinkBWP. The information element initialUplinkBWP is used to configure the initial UL BWP. For operation in an SpCell or a secondary cell, the initial UL BWP (initial active UL BWP) may be configured (provided) for the terminal apparatus 1 by the higher layer parameter initialUplinkBWP. When a supplementary uplink carrier is configured for the terminal apparatus 1, an initial UL BWP of the supplementary uplink carrier may be configured for the terminal apparatus 1 by initialUplinkBWP included in a higher layer parameter supplementaryUplink.

Hereinafter, a control resource set (CORESET) of the present embodiment will be described.

A control resource set (CORESET) is time and frequency resources for searching for downlink control information. The CORESET configuration information includes a CORESET identifier (ControlResourceId, CORESET-ID) and information for identifying a CORESET frequency resource. The information element ControlResourceSetId (CORESET identifier) is used to identify a control resource set in a certain serving cell. The CORESET identifier is used among BWPs in a certain serving cell. The CORESET identifier is unique among the BWPs in the serving cell. The number of CORESETs in each BWP is limited to three including an initial CORESET. In a certain serving cell, the value of the CORESET identifier takes a value from 0 to 11.

The control resource set identified by the CORESET identifier 0 (ControlResourceSetId 0) is referred to as CORESET #0. CORESET #0 may be configured by pdcch-ConfigSIB 1 included in MIB or PDCCH-ConfigCommon included in ServingCellCongfigCommon. That is, the configuration information of CORESET #0 may be pdcch-ConfigSIB 1 included in MIB or PDCCH-ConfigCommon included in ServingCellCongfigCommon.

The configuration information of CORESET #0 may be configured by controlResourceSetZero included in PDCCH-ConfigSIB1 or PDCCH-ConfigCommon. In other words, an information element controlResourceSetZero is used to indicate CORESET #0 (common CORESET) of the initial DL BWP. A CORESET indicated by pdcch-ConfigSIB1 is CORESET #0. The information element pdcch-ConfigSIB1 in the MIB or dedicated configuration is used to configure the initial DL BWP. Although the CORESET configuration information pdcch-ConfigSIB 1 for CORESET #0 does not include information that explicitly identifies a CORESET identifier and a CORESET frequency resource (e.g., the number of consecutive resource blocks) and a time resource (e.g., the number of consecutive symbols), the CORESET frequency resource (e.g., the number of consecutive resource blocks) and the time resource (e.g., the number of consecutive symbols) for CORESET #0 can be implicitly identified by information included in pdcch-ConfigSIB1.

The information element PDCCH-ConfigCommon is used to configure a cell-specific PDCCH parameter provided by the SIB. In addition, PDCCH-ConfigCommon may also be provided at the time of handover and the addition of PSCell and/or SCell. The configuration information of CORESET #0 is included in the configuration of the initial BWP. That is, the configuration information of CORESET #0 may not be included in the configuration of a BWP other than the initial BWP. The controlResourceSetZero corresponds to 4 bits (e.g., 4 MSB bits or 4 most significant bits) in pdcch-ConfigSIB 1. CORESET #0 is a control resource set for the type 0 PDCCH common search space.

Configuration information of an additional common CORESET may also be configured by commonControlResourceSet included in PDCCH-ConfigCommon. In addition, the configuration information of the additional common CORESET may be used to specify the additional common CORESET for system information and/or a paging procedure. The configuration information of the additional common CORESET may be used to specify the additional common CORESET used for a random access procedure. The configuration information of the additional common CORESET may be included in configuration of each BWP. The CORESET identifier indicated by commonControlResourceSet takes a value other than 0.

A common CORESET may be a CORESET (e.g., an additional common CORESET) used for a random access procedure. In addition, a CORESET configured by the configuration information of CORESET #0 and/or the configuration information of the additional common CORESET may be included in the common CORESET in the present embodiment. In other words, the common CORESET may include CORESET #0 and/or the additional common CORESET. CORESET #0 may be referred to as common CORESET #0. The terminal apparatus 1 may refer to (acquire) the configuration information of the common CORESET in a BWP other than the BWP in which the common CORESET is configured.

The configuration information of one or more CORESETs may be configured by PDCCH-Config. The information element PDCCH-Config is used to configure UE-specific PDCCH parameters (e.g., CORSET, search space, etc.) for a certain BWP. The PDCCH-Config may be included in the configuration of each BWP.

That is, in the present embodiment, the configuration information of the common CORESET indicated by the MIB is pdcch-ConfigSIB 1, the configuration information of the common CORESET indicated by the PDCCH-ConfigCommon is controlResourceSetZero, and the configuration information of the common CORESET (additional common CORESET) indicated by the PDCCH-ConfigCommon is commonControlResourceSet. In addition, the configuration information of one or more CORESETs (UE specifically configured Control Resource Sets, UE-specific CORESETs) indicated by the PDCCH-Config is controlResourceSetToAddModList.

A search space is defined to search for PDCCH candidates. The searchSpaceType included in configuration information of a search space indicates whether the search space is a common search space (CSS) or a UE-specific search space (USS). The UE-specific search space is derived at least from the value of a C-RNTI configured by the terminal apparatus 1. That is, the UE-specific search space is derived individually for each terminal apparatus 1. The common search space is a search space shared among a plurality of terminal apparatuses 1 and includes CCEs (Control Channel Elements) each having a predetermined index. The CCE includes a plurality of resource elements. Information of a DCI format monitored in the search space is included in the configuration information of the search space.

The configuration information of the search space includes the CORESET identifier identified by the CORESET configuration information. The CORESET identified by the CORESET identifier included in the configuration information of the search space is associated with the search space. In other words, the CORESET associated with the search space is a CORESET identified by the CORESET identifier included in the search space. The DCI format indicated by the configuration information of the search space is monitored in the associated CORESET. Each search space is associated with one CORESET. For example, the configuration information of the search space for a random access procedure may be configured by ra-SearchSpace. That is, the DCI format attached with a CRC scrambled by an RA-RNTI or a TC-RNTI is monitored in the CORESET associated with ra-SearchSpace.

The terminal apparatus 1 monitors a set of PDCCH candidates in one or more CORESETs allocated in each active serving cell configured to monitor the PDCCH. The set of PDCCH candidates corresponds to one or more search space sets. Monitoring means decoding each PDCCH candidate according to one or more monitored DCI formats. The set of PDCCH candidates monitored by the terminal apparatus 1 is defined by PDCCH search space sets. One search space set is a common search space set or a UE-specific search space set. In the above description, the search space set is referred to as a search space, the common search space set is referred to as a common search space, and the UE-specific search space set is referred to as a UE-specific search space. The terminal apparatus 1 monitors the PDCCH candidates with one or more of the following search space sets.
- Type0-PDCCH common search space set (Type0 common search space set): this search space set is configured by a higher layer parameter such as pdcch-ConfigSIB 1 indicated by MIB, or searchSpaceSIB 1 indicated by PDCCH-ConfigCommon, or searchSpaceZero included in PDCCH-ConfigCommon. The search space is used to monitor the DCI format with a CRC scrambled by an SI-RNRI in a primary cell.
- Type0A-PDCCH common search space set (Type0A common search space set): this search space set is configured by a higher layer parameter such as a search space (searchSpaceOtherSystemInformation) indicated by PDCCH-ConfigCommon. The search space is used to monitor the DCI format with a CRC scrambled by an SI-RNRI in a primary cell.
- Type1-PDCCH common search space set (Type1 common search space set): this search space set is configured by a higher layer parameter such as a search space for a random access procedure (ra-SearchSpace) indicated by PDCCH-ConfigCommon. The search space is used to monitor the DCI format with a CRC scrambled by an RA-RNRI or a TC-RNTI in a primary cell. Type1-PDCCH common search space set is a search space set used for a random access procedure.
- Type2-PDCCH common search space set (Type2 common search space set): this search space set is configured by a higher layer parameter such as a search space for a paging procedure (pagingSearchSpace) indicated by PDCCH-ConfigCommon. The search space is used to monitor the DCI format with a CRC scrambled by a P-RNTI in a primary cell.
- Type3-PDCCH common search space set (Type3 common search space set): in this search space set, a search space type indicated by a higher layer parameter such as PDCCH-Config is configured by a common search space (SearchSpace). The search space is used to monitor the DCI format with a CRC scrambled by an INT-RNTI, an SFI-RNTI, a TPC-PUSCH-RNTI, a TPC-PUCCH-RNTI, or a TPC-SRS-RNTI. For the primary cell, the search space is used to monitor the DCI format with a CRC scrambled by a C-RNTI, CS-RNTI(s), or an MSC-C-RNTI.
- UE-specific search space set: in this search space set, a search space type indicated by a higher layer parameter such as PDCCH-Config is configured by a UE-specific search space (SearchSpace). The search space is used to monitor the DCI format with a CRC scrambled by a C-RNTI, CS-RNTI(s), or an MSC-C-RNTI.

If the terminal apparatus 1 is provided with one or more search space sets by corresponding higher layer parameters (searchSpaceZero, searchSpaceSIB 1, searchSpaceOtherSystemInformation, pagingSearchSpace, ra-SearchSpace, etc.) and provided with a C-RNTI or a CS-RNTI, the terminal apparatus 1 may monitor PDCCH candidates for DCI format 0_ 0 and DCI format 1_ 0 with a C-RNTI or a CS-RNTI in the one or more search space sets.

Configuration information of the BWP is divided into configuration information of the DL BWP and configuration information of the UL BWP. The configuration information of the BWP includes an information element bwp-Id (BWP identifier). The BWP identifier included in the configuration information of the DL BWP is used to identify (refer to) the DL BWP in a certain serving cell. The BWP identifier included in the configuration information of the UL BWP is used to identify (refer to) the UL BWP in a certain serving cell. The BWP identifier is assigned to each of the DL BWP and the UL BWP.

For example, the BWP identifier corresponding to the DL BWP may also be referred to as a DL BWP index. The BWP identifier corresponding to the UL BWP may also be referred to as a UL BWP index. The initial DL BWP is referenced by a DL BWP identifier 0. The initial UL BWP is referenced by a UL BWP identifier 0. Each of other DL BWPs and other UL BWPs may be referenced from the BWP identifiers 1 to maxNrofBWPs.

In other words, the BWP identifier set to 0 (bwp-Id=0) is associated with the initial BWP and cannot be used for other BWPs. The maxNrofBWPs is the maximum number of BWPs per serving cell and is 4. That is, the values of other BWPs identifier take a value from 1 to 4. The configuration information of other higher layers is associated with a specific BWP by using the BWP identifier. The expression that the DL BWP and the UL BWP have the same BWP identifier may mean that the DL BWP and the UL BWP are paired.

The terminal apparatus 1 may be configured with one primary cell and up to 15 secondary cells.

Hereinafter, a procedure for receiving the PDSCH will be described.

The terminal apparatus 1 may decode (receive) a corresponding PDSCH by detection of a PDCCH including DCI format 1_0 or DCI format 1_1. The corresponding PDSCH is scheduled (indicated) by the DCI format (DCI). The starting position (starting symbol) of the scheduled PDSCH is referred to as S. The starting symbol S of the PDSCH may be the first symbol with which the PDSCH is transmitted (mapped) in a certain slot. The starting symbol S corresponds to the start of a slot.

For example, when the value of S is 0, the terminal apparatus 1 may receive the PDSCH from the first symbol in a certain slot. In addition, for example, when the value of S is 2, the terminal apparatus 1 may receive the PDSCH from the third symbol of a certain slot. The number of consecutive symbols of the scheduled PDSCH is referred to as L. The number of consecutive symbols L counts from the starting symbol S. The determination of S and L assigned to the PDSCH will be described later.

The PDSCH mapping types have a PDSCH mapping type A and a PDSCH mapping type B. In the PDSCH mapping type A, S takes a value from 0 to 3. L takes a value from 3 to 14. However, the sum of S and L takes a value from 3 to 14. In the PDSCH mapping type B, S takes a value from 0 to 12. L takes a value from {2, 4, 7}. However, the sum of S and L takes a value from 2 to 14.

The position of a DMRS symbol for the PDSCH depends on the PDSCH mapping type. The position of a first DMRS symbol for the PDSCH depends on the PDSCH mapping type. In the PDSCH mapping type A, the position of the first DMRS symbol may be indicated by a higher layer parameter dmrs-TypeA-Position. In other words, the higher layer parameter dmrs-TypeA-Position is used to indicate the position of the first DMRS for a PDSCH or a PUSCH. dmrs-TypeA-Position may be set to either 'pos2' or 'pos3'.

For example, when dmrs-TypeA-Position is set to 'pos2', the position of the first DMRS symbol for the PDSCH may be the third symbol in the slot. For example, when dmrs-TypeA-Position is set to 'pos3', the position of the first DMRS symbol for the PDSCH may be the fourth symbol in the slot. Here, S takes a value of 3 only when dmrs-TypeA-Position is set to 'pos3'. In other words, when dmrs-TypeA-Position is set to 'pos2', S takes a value from 0 to 2. In the PDSCH mapping type B, the position of the first DMRS symbol is the first symbol of an allocated PDSCH.

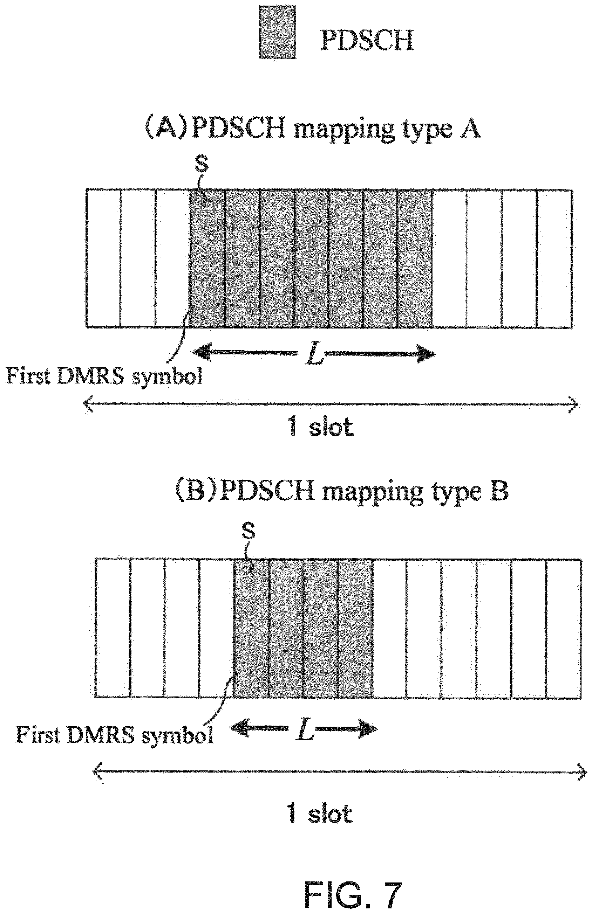

FIG. 7 is a diagram illustrating an example of PDSCH mapping types according to an embodiment of the present invention. FIG. 7 (A) is a diagram illustrating an example of a PDSCH mapping type A. In FIG. 7 (A), S of the allocated PDSCH is 3. L of the allocated PDSCH is 7. In FIG. 7 (A), the position of the first DMRS symbol for the PDSCH is the fourth symbol in a slot. That is, dmrs-TypeA-Position is set to 'pos3'. FIG. 7 (B) is a diagram illustrating an example of a PDSCH mapping type A. In FIG. 7 (B), S of the allocated PDSCH is 4. L of the allocated PDSCH is 4. In FIG. 7 (B), the position of the first DMRS symbol for the PDSCH is the first symbol to which the PDSCH is allocated.

Hereinafter, a method for identifying PDSCH time domain resource allocation will be described.

The base station apparatus 3 may schedule the terminal apparatus 1 to receive the PDSCH by DCI. Further, the terminal apparatus 1 may receive the PDSCH by detection of DCI addressed to the apparatus itself. When identifying PDSCH time domain resource allocation, the terminal apparatus 1 first determines a resource allocation table to be applied to the PDSCH. The resource allocation table includes one or more PDSCH time domain resource allocation configurations. Then, the terminal apparatus 1 may select one PDSCH time domain resource allocation configuration in the determined resource allocation table based on a value indicated by a 'Time domain resource assignment' field included in the DCI that schedules the PDSCH. In other words, the base station apparatus 3 determines PDSCH resource allocation for the terminal apparatus 1, generates a value of the 'Time domain resource assignment' field, and transmits the DCI including the 'Time domain resource assignment' field to the terminal apparatus 1. The terminal apparatus 1 identifies PDSCH resource allocation in a time direction based on the value set in the 'Time domain resource assignment' field.

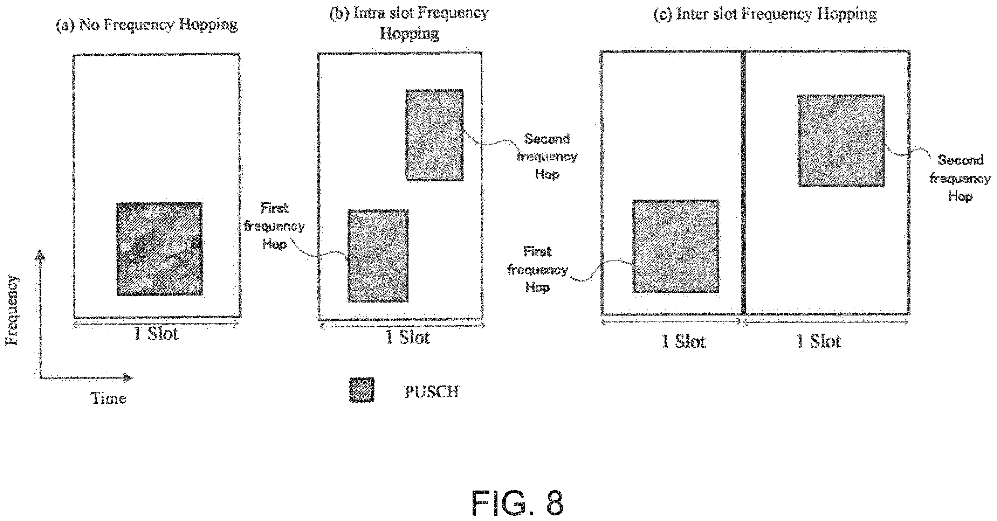

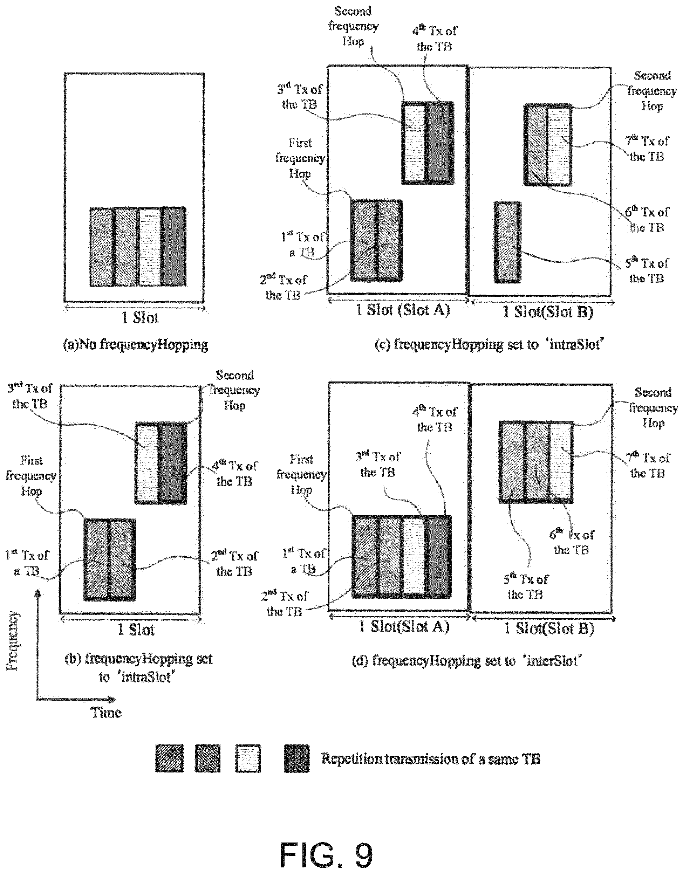

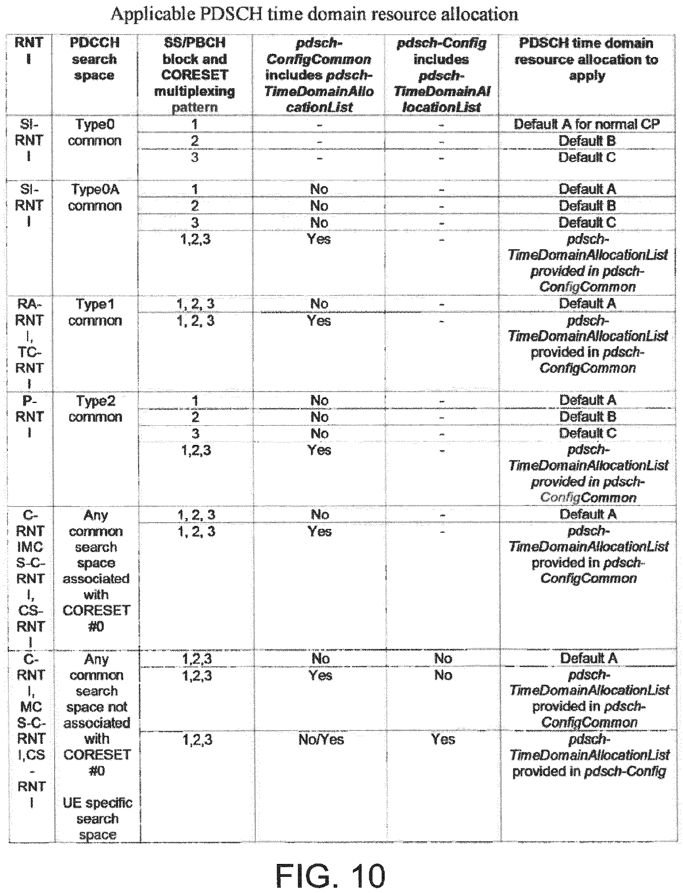

FIG. 8 is a diagram illustrating an example of frequency hopping according to an embodiment of the present invention. FIG. 9 is a diagram illustrating an example of determination of the number of repetitive transmissions and frequency hopping according to an embodiment of the present invention. Details of FIG. 8 and FIG. 9 will be described later. FIG. 10 is a diagram defining which resource allocation table is applied to PDSCH time domain resource allocation according to an embodiment of the present invention. The terminal apparatus 1 may determine a resource allocation table to be applied to the PDSCH time domain resource allocation with reference to FIG.10. The resource allocation table includes one or more PDSCH time domain resource allocation configurations. In the present embodiment, the resource allocation tables are categorized into (I) a predefined resource allocation table and (II) a resource allocation table configured from an RRC signal of a higher layer. The predefined resource allocation tables are defined as a default PDSCH time domain resource allocation A, a default PDSCH time domain resource allocation B, and a default PDSCH time domain resource allocation C. Hereinafter, the default PDSCH time domain resource allocation A is referred to as a default table A. The default PDSCH time domain resource allocation B is referred to as a default table B. The default PDSCH time domain resource allocation C is referred to as a default table C.

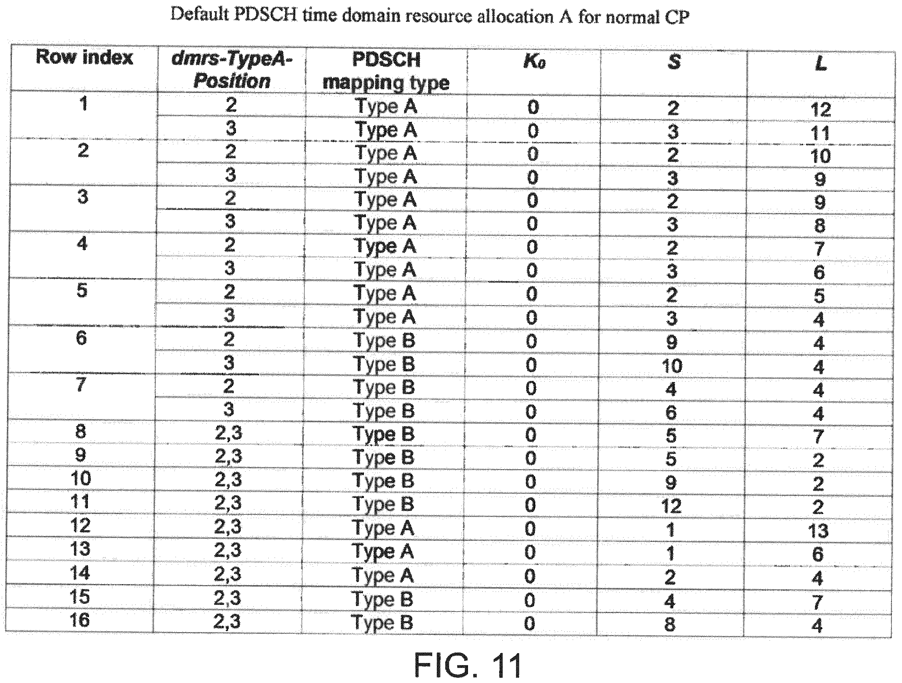

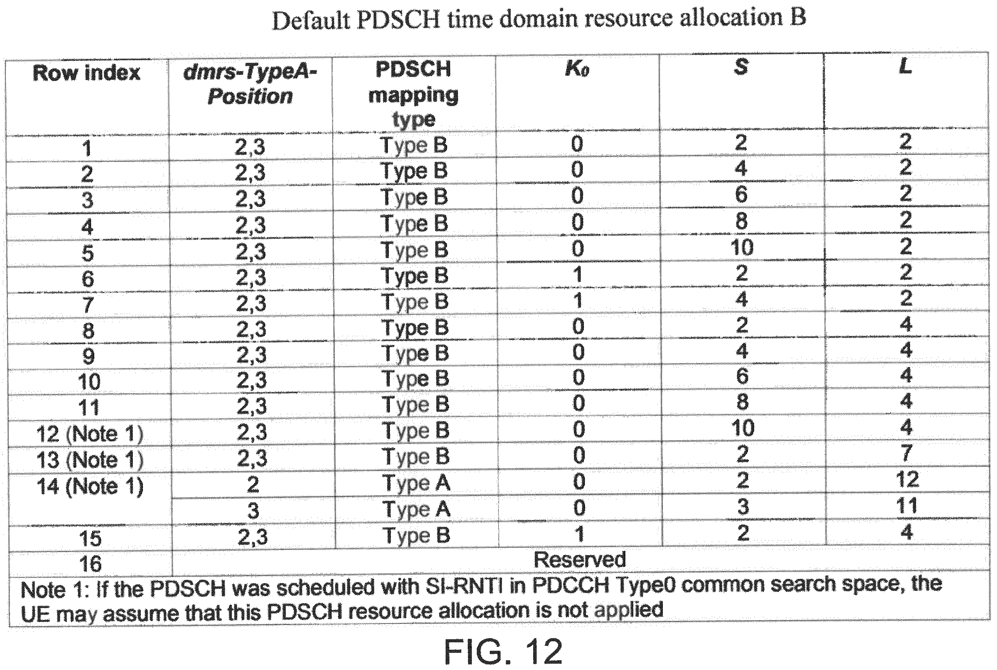

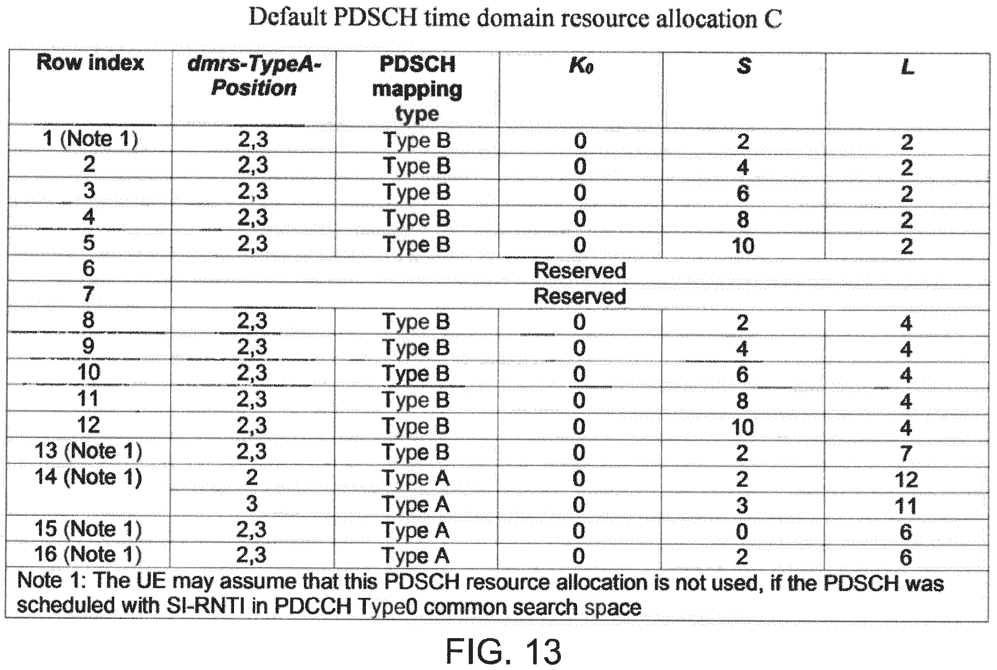

FIG. 11 is a diagram illustrating an example of a default table A according to an embodiment of the present invention. FIG. 12 is a diagram illustrating an example of a default table B according to an embodiment of the present invention. FIG. 13 is a diagram illustrating an example of a default table C according to an embodiment of the present invention. Details of FIGs. 11-13 are described as follows.

Referring to FIG. 11, the default table A includes 16 rows. Each row in the default table A indicates a PDSCH time domain resource allocation configuration. Specifically, in FIG. 11, the indexed row defines a PDSCH mapping type, a slot offset K₀ between a PDCCH including DCI and a PDSCH, the starting symbol S of the PDSCH in a slot, and the number of consecutively allocated symbols L. The resource allocation table configured from the RRC signal of the higher layer is given by a signal pdsch-TimeDomainAllocationList of the higher layer. The information element PDSCH-TimeDomainResourceAllocation indicates the PDSCH time domain resource allocation configuration. PDSCH-TimeDomainResourceAllocation can be used to configure a time domain relationship between the PDCCH including DCI and the PDSCH. pdsch-TimeDomainAllocationList includes one or more information elements PDSCH-TimeDomainResourceAllocation.

In other words, pdsch-TimeDomainAllocationList is a list that includes one or more elements (information elements). One information element PDSCH-TimeDomainResourceAllocation may also be referred to as one entry (or one row). pdsch-TimeDomainAllocationList may include up to 16 entries. Each entry may be defined by K₀, mappingType, and startSymbolAndLength. K₀ indicates a slot offset between the PDCCH including DCI and the PDSCH. When PDSCH-TimeDomainResourceAllocation does not indicate K₀, the terminal apparatus 1 may assume that the value of K₀ is 0. The mappingType indicates either the PDSCH mapping type A or the PDSCH mapping type B. The startSymbolAndLength is an index that gives a valid combination of the starting symbol S of the PDSCH and the number of consecutively allocated symbols L. The startSymbolAndLength may be referred to as a start and length indicator (SLIV).

In other words, unlike a default table that directly defines the starting symbol S and the consecutive symbols L, the starting symbol S and the consecutive symbols L are given based on the SLIV. The base station apparatus 3 can set the value of the SLIV so that the PDSCH time domain resource allocation does not exceed a slot boundary. The slot offset K₀ and SLIV will be described later.

The higher layer signal pdsch-TimeDomainAllocationList may be included in pdsch-ConfigCommon and/or pdsch-Config. The information element pdsch-ConfigCommon is used to configure a cell-specific parameter for a PDSCH for a certain BWP. The information element pdsch-Config is used to configure a UE-specific parameter for a PDSCH for a certain BWP. Similar to FIG. 11, the default table B in FIG. 12 defines a PDSCH mapping type. The PDSCH mapping type indicates either the PDSCH mapping type A or the PDSCH mapping type B. Similar to FIG. 11, the default table C in FIG. 13 defines a PDSCH mapping type. The PDSCH mapping type indicates either the PDSCH mapping type A or the PDSCH mapping type B.

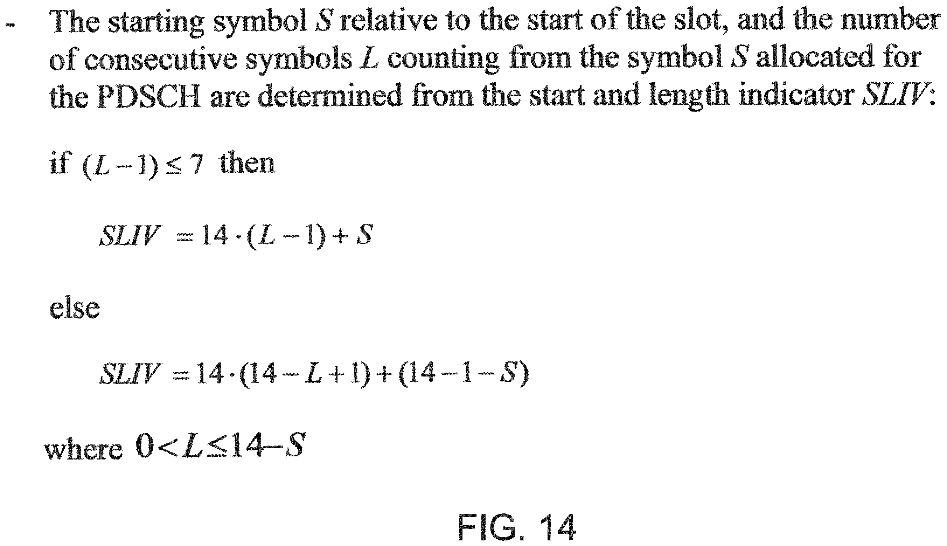

FIG. 14 is a diagram illustrating an example of calculating an SLIV according to an embodiment of the present invention.

In FIG. 14, the number of symbols included in a slot is 14. FIG. 14 illustrates an example of calculating a SLIV in the case of a normal cyclic prefix (NCP). The value of the SLIV is calculated based on the number of symbols in a slot, the starting symbol S, and the number of consecutive symbols L. Here, the value of L is equal to or greater than 1 and does not exceed (14-S). In the case of ECP, 6 and 12 are used for 7 and 14 in FIG. 14 when the SLIV is calculated.

The slot offset K₀ will be described below.

As described above, in the subcarrier spacing configuration µ, the slots are counted in an ascending order from 0 to N^{subframe, µ}_{slot}-1 within a subframe and counted in an ascending order from 0 to N^{frame, µ}_{slot}-1 within a frame. K₀ is the number of slots based on subcarrier spacing of the PDSCH. K₀ may take a value from 0 to 32. In a certain subframe or frame, the slot number counts from 0 in an ascending order. The slot number n with the subcarrier spacing set to 15 kHz corresponds to the slot numbers 2n and 2n+1 with the subcarrier spacing set to 30 kHz.

The terminal apparatus 1 detects DCI that schedules the PDSCH. The slot allocated to the PDSCH is given by Floor (n*2^{µPDSCH}/2^{µPDCCH}) + K₀ (Equation 1). The function Floor (A) outputs a largest integer that does not exceed A. n is a slot in which the PDCCH that schedules the PDSCH is detected. µ_{PDSCH} is a subcarrier spacing configuration for the PDSCH. µ_{PDCCH} is a subcarrier spacing configuration for the PDCCH.

The terminal apparatus 1 may determine which resource allocation table to be applied to the PDSCH time domain resource allocation with reference to FIG. 10. In other words, the terminal apparatus 1 may determine the resource allocation table applied to the PDSCH scheduled by DCI at least based on a part or all of the following elements from (A) to (F).
Element A: type of RNTI that scrambles a CRC attached to DCI.
Element B: type of a search space in which DCI is detected.
Element C: whether a CORESET associated with the search space is CORESET #0.
Element D: whether pdsch-ConfigCommon includes pdsch-TimeDomainAllocationList.
Element E: whether pdsch-Config includes pdsch-TimeDomainAllocationList.
Element F: SS/PBCH and CORESET multiplexing pattern.

In Element A, the type of an RNTI that scrambles a CRC attached to DCI is any one of an SI-RNTI, an RA-RNTI, a TC-RNTI, a P-RNTI, a C-RNTI, an MCS-C-RNTI, or a CS-RNTI.

In Element B, the type of a search space in which DCI is detected is a common search space or a UE-specific search space. The common search space includes a type 0 common search space, a type 1 common search space, and a type 2 common search space.

In an example A, the terminal apparatus 1 may detect DCI in any common search space associated with CORESET #0. The detected DCI is attached with a CRC scrambled by any of a C-RNTI, an MCS-C-RNTI, or a CS-RNTI. Further, the terminal apparatus 1 may determine a resource allocation table to be applied to the PDSCH scheduled by the DCI. When pdsch-ConfigCommon includes pdsch-TimeDomainAllocationList for the terminal apparatus 1, the terminal apparatus 1 may determine the resource allocation table configured from an RRC signal of a higher layer. The resource allocation table is given by pdsch-TimeDomainAllocationList included in pdsch-ConfigCommon. In addition, when pdsch-ConfigCommon does not include pdsch-TimeDomainAllocationList for the terminal apparatus 1, the terminal apparatus 1 may determine a default table A. In other words, the terminal apparatus 1 may use the default table A, which indicates the PDSCH time domain resource allocation configuration, to be applied to the determination of the PDSCH time domain resource allocation.

In addition, in an example B, the terminal apparatus 1 may detect DCI in any common search space that is not associated with CORESET #0. The detected DCI is attached with a CRC scrambled by any of a C-RNTI, an MCS-C-RNTI, or a CS-RNTI. Further, the terminal apparatus 1 may determine a resource allocation table to be applied to the PDSCH scheduled by the DCI. When pdsch-Config includes pdsch-TimeDomainAllocationList for the terminal apparatus 1, the terminal apparatus 1 may determine the resource allocation table applied to the PDSCH time domain resource allocation as a resource allocation table given from pdsch-TimeDomainAllocationList provided by pdsch-Config. In other words, when pdsch-Config includes pdsch-TimeDomainAllocationList, the terminal apparatus 1 may use pdsch-TimeDomainAllocationList provided by pdsch-Config to be applied to the determination of the PDSCH time domain resource allocation regardless of whether pdsch-ConfigCommon includes pdsch-TimeDomainAllocationList.

Further, when pdsch-Config does not include pdsch-TimeDomainAllocationList and pdsch-ConfigCommon includes pdsch-TimeDomainAllocationList, the terminal apparatus 1 may determine the resource allocation table applied to the PDSCH time domain resource allocation as a resource allocation table given from pdsch-TimeDomainAllocationList provided by pdsch-ConfigCommon. In other words, the terminal apparatus 1 uses pdsch-TimeDomainAllocationList provided by pdsch-ConfigCommon to be applied to the determination of the PDSCH time domain resource allocation. Further, when pdsch-Config does not include pdsch-TimeDomainAllocationList and pdsch-ConfigCommon does not include pdsch-TimeDomainAllocationList, the terminal apparatus 1 may determine the resource allocation table applied to the PDSCH time domain resource allocation as a default table A.

Further, in an example C, the terminal apparatus 1 may detect DCI in a UE-specific search space. The detected DCI is attached with a CRC scrambled by any of a C-RNTI, an MCS-C-RNTI, or a CS-RNTI. Further, the terminal apparatus 1 may determine a resource allocation table to be applied to the PDSCH scheduled by the DCI. When pdsch-Config includes pdsch-TimeDomainAllocationList for the terminal apparatus 1, the terminal apparatus 1 may determine the resource allocation table applied to the PDSCH time domain resource allocation as a resource allocation table given by pdsch-TimeDomainAllocationList provided by pdsch-Config.

In other words, when pdsch-Config includes pdsch-TimeDomainAllocationList, the terminal apparatus 1 may use pdsch-TimeDomainAllocationList provided by pdsch-Config to be applied to the determination of the PDSCH time domain resource allocation regardless of whether pdsch-ConfigCommon includes pdsch-TimeDomainAllocationList. Further, when pdsch-Config does not include pdsch-TimeDomainAllocationList and pdsch-ConfigCommon includes pdsch-TimeDomainAllocationList, the terminal apparatus 1 may determine the resource allocation table applied to the PDSCH time domain resource allocation as a resource allocation table given from pdsch-TimeDomainAllocationList provided by pdsch-ConfigCommon.

In other words, the terminal apparatus 1 uses pdsch-TimeDomainAllocationList provided by pdsch-ConfigCommon to be applied to the determination of the PDSCH time domain resource allocation. Further, when pdsch-Config does not include pdsch-TimeDomainAllocationList and pdsch-ConfigCommon does not include pdsch-TimeDomainAllocationList, the terminal apparatus 1 may determine the resource allocation table applied to the PDSCH time domain resource allocation as a default table A.

As seen from the examples B and C, the method for determining the resource allocation table applied to the PDSCH detected in the UE-specific search space is the same as the method for determining the resource allocation table applied to the PDSCH detected in any common search space that is not associated with CORESET #0.

Then, the terminal apparatus 1 may select one PDSCH time domain resource allocation configuration in the determined resource allocation table based on a value indicated by a 'Time domain resource assignment' field included in the DCI that schedules the PDSCH. For example, when the resource allocation table applied to the PDSCH time domain resource allocation is the default table A, the value m indicated by the 'Time domain resource assignment' field may indicate the row index m+1 of the default table A. At this time, the PDSCH time domain resource allocation is a time domain resource allocation configuration indicated by the row index m+1. The terminal apparatus 1 receives the PDSCH assuming the time domain resource allocation configuration indicated by the row index m+1. For example, when the value m indicated by the 'Time domain resource assignment' field is 0, the terminal apparatus 1 uses the PDSCH time domain resource allocation configuration indicated by the row index 1 of the default table A to identify resource allocation of the PDSCH scheduled by the DCI in a time direction.

In addition, when the resource allocation table applied to the PDSCH time domain resource allocation is a resource allocation table given by pdsch-TimeDomainAllocationList, the value m indicated by the 'Time domain resource assignment' field corresponds to the (m+1)th element (entry, row) in the list pdsch-TimeDomainAllocationList.

For example, when the value m indicated by the 'Time domain resource assignment' field is 0, the terminal apparatus 1 may refer to the first element (entry) in the list pdsch-TimeDomainAllocationList. For example, when the value m indicated by the 'Time domain resource assignment' field is 1, the terminal apparatus 1 may refer to the second element (entry) in the list pdsch-TimeDomainAllocationList.

The number of bits (size) of the 'Time domain resource assignment' field included in DCI will be described below.

The terminal apparatus 1 may decode (receive) a corresponding PDSCH by detection of a PDCCH including DCI format 1_0 or DCI format 1_1. The number of bits of the 'Time domain resource assignment' field included in DCI format 1_0 may be a fixed number of bits. For example, the fixed number of bits may be 4. In other words, the size of the 'Time domain resource assignment' field included in DCI format 1_0 is 4 bits. In addition, the size of the 'Time domain resource assignment' field included in DCI format 1_1 may be a variable number of bits. For example, the number of bits of the 'Time domain resource assignment' field included in DCI format 1_1 may be any of 0, 1, 2, 3 and 4.

Hereinafter, the determination of the number of bits of the 'Time domain resource assignment' field included in DCI format 1_1 will be described.

The number of bits of the 'Time domain resource assignment' field included in DCI format 1_1 may be given at least based on (I) whether pdsch-ConfigCommon includes pdsch-TimeDomainAllocationList and/or (II) whether pdsch-Config includes pdsch-TimeDomainAllocationList and/or (III) the number of rows included in a predefined default table. In the present embodiment, DCI format 1_1 is attached with a CRC scrambled by any of a C-RNTI, an MCS-C-RNTI, and a CS-RNTI. DCI format 1_1 may be detected in a UE-specific search space. In the present embodiment, the meaning that 'pdsch-Config includes pdsch-TimeDomainAllocationList' may mean that 'pdsch-TimeDomainAllocationList is provided by pdsch-Config'. The meaning that 'pdsch-ConfigCommon includes pdsch-TimeDomainAllocationList' may mean that 'pdsch-TimeDomainAllocationList is provided by pdsch-ConfigCommon'.

The number of bits of the 'Time domain resource assignment' field may be given as ceiling (log₂(I)). The function Ceiling (A) outputs a smallest integer that is not smaller than A. When pdsch-TimeDomainAllocationList is configured (provided) for the terminal apparatus 1, the value of I may be the number of entries included in pdsch-TimeDomainAllocationList. When pdsch-TimeDomainAllocationList is not configured (provided) for the terminal apparatus 1, the value of I may be the number of rows in a default table (default table A).

In other words, when pdsch-TimeDomainAllocationList is configured for the terminal apparatus 1, the number of bits of the 'Time domain resource assignment' field may be given based on the number of entries included in pdsch-TimeDomainAllocationList. When pdsch-TimeDomainAllocationList is not configured for the terminal apparatus 1, the number of bits of the 'Time domain resource assignment' field may be given based on the number of rows in a default table (default table A).

Specifically, when pdsch-Config includes pdsch-TimeDomainAllocationList, the value of I may be the number of entries included in pdsch-TimeDomainAllocationList provided by pdsch-Config. In addition, when pdsch-Config does not include pdsch-TimeDomainAllocationList and pdsch-ConfigCommon includes pdsch-TimeDomainAllocationList, the value of I may be the number of entries included in pdsch-TimeDomainAllocationList provided by pdsch-ConfigCommon. Further, when pdsch-Config does not include pdsch-TimeDomainAllocationList and pdsch-ConfigCommon does not include pdsch-TimeDomainAllocationList, the value of I may be the number of rows included in a default table (e.g., default table A).

In other words, when pdsch-TimeDomainAllocationList is configured (provided) for the terminal apparatus 1, the number of bits of the 'Time domain resource assignment' field may also be given as ceiling (log₂(I)). When pdsch-TimeDomainAllocationList is not configured (provided) for the terminal apparatus 1, the number of bits of the 'Time domain resource assignment' field may be a fixed number of bits. For example, the fixed number of bits may be 4 bits.

I may be the number of entries included in pdsch-TimeDomainAllocationList. Specifically, when pdsch-Config includes pdsch-TimeDomainAllocationList, the value of I may be the number of entries included in pdsch-TimeDomainAllocationList provided by pdsch-Config. In addition, when pdsch-Config does not include pdsch-TimeDomainAllocationList and pdsch-ConfigCommon includes pdsch-TimeDomainAllocationList, the value of I may be the number of entries included in pdsch-TimeDomainAllocationList provided by pdsch-ConfigCommon.

As a result, the terminal apparatus 1 can identify the number of bits of the 'Time domain resource assignment' field generated by the base station apparatus 3. In other words, the terminal apparatus 1 can correctly receive the PDSCH that is scheduled by the base station apparatus 3 for the terminal apparatus 1.

Hereinafter, a procedure for receiving the PUSCH will be described.

The terminal apparatus 1 may transmit a corresponding PUSCH by detection of a PDCCH including DCI format 0_0 or DCI format 0_1. In other words, the corresponding PUSCH may be scheduled (indicated) by the DCI format (DCI). In addition, the PUSCH may also be scheduled by an RAR UL grant included in an RAR message. The starting position (starting symbol) of the scheduled PUSCH is referred to as S. The starting symbol S of the PUSCH may be the first symbol with which the PUSCH is transmitted (mapped) in a certain slot. The starting symbol S corresponds to the start of a slot. For example, when the value of S is 0, the terminal apparatus 1 may transmit the PUSCH from the first symbol in a certain slot. Further, for example, when the value of S is 2, the terminal apparatus 1 may transmit the PUSCH from the third symbol of a certain slot. The number of consecutive symbols of the scheduled PUSCH is referred to as L. The number of consecutive symbols L counts from the starting symbol S. The determination of S and L assigned to the PUSCH will be described later.

The PUSCH mapping types have a PUSCH mapping type A and a PUSCH mapping type B. In the PUSCH mapping type A, the value of S is 0. L takes a value from 4 to 14. However, the sum of S and L takes a value from 4 to 14. In the PUSCH mapping type B, the S takes a value from 0 to 13. L takes a value from 1 to 14. However, the sum of S and L takes a value from 1 to 14.

The position of a DMRS symbol for the PUSCH depends on the PUSCH mapping type. The position of a first DMRS symbol for the PUSCH depends on the PUSCH mapping type. In the PUSCH mapping type A, the position of the first DMRS symbol may be indicated by a higher layer parameter dmrs-TypeA-Position. dmrs-TypeA-Position is set to either 'pos2' or 'pos3'. For example, when dmrs-TypeA-Position is set to 'pos2', the position of the first DMRS symbol for the PUSCH may be the third symbol in the slot. For example, when dmrs-TypeA-Position is set to 'pos3', the position of the first DMRS symbol for the PUSCH may be the fourth symbol in the slot. In the PUSCH mapping type B, the position of the first DMRS symbol may be the first symbol of an allocated PUSCH.

Hereinafter, a method for identifying PUSCH time domain resource allocation will be described.

The base station apparatus 3 may schedule the terminal apparatus 1 to transmit the PUSCH by DCI. In addition, the terminal apparatus 1 may transmit the PUSCH by detection of DCI addressed to the apparatus itself. When identifying PUSCH time domain resource allocation, the terminal apparatus 1 first determines a resource allocation table to be applied to the PUSCH. The resource allocation table includes one or more PUSCH time domain resource allocation configurations. Then, the terminal apparatus 1 may select one PUSCH time domain resource allocation configuration in the determined resource allocation table based on a value indicated by a 'Time domain resource assignment' field included in the DCI that schedules the PUSCH. In other words, the base station apparatus 3 determines PUSCH resource allocation for the terminal apparatus 1, generates a value of the 'Time domain resource assignment' field, and transmits the DCI including the 'Time domain resource assignment' field to the terminal apparatus 1. The terminal apparatus 1 identifies PUSCH resource allocation in a time direction based on the value set in the 'Time domain resource assignment' field.

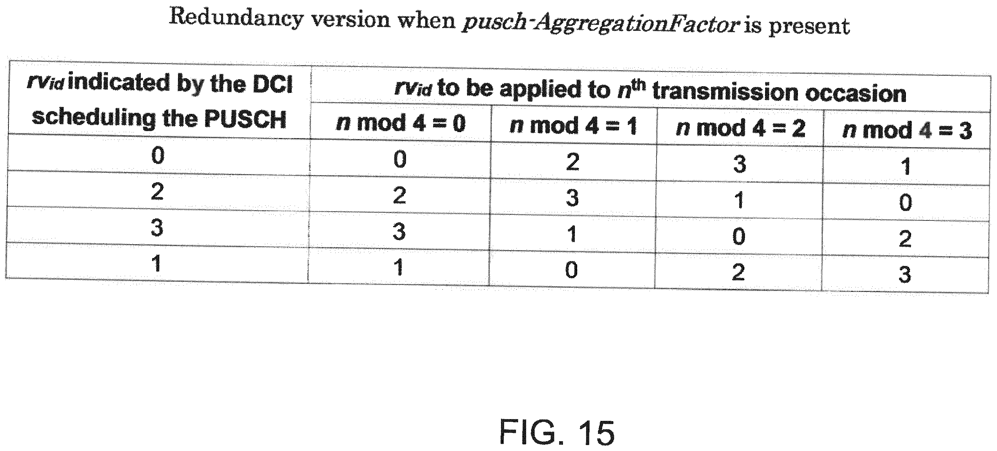

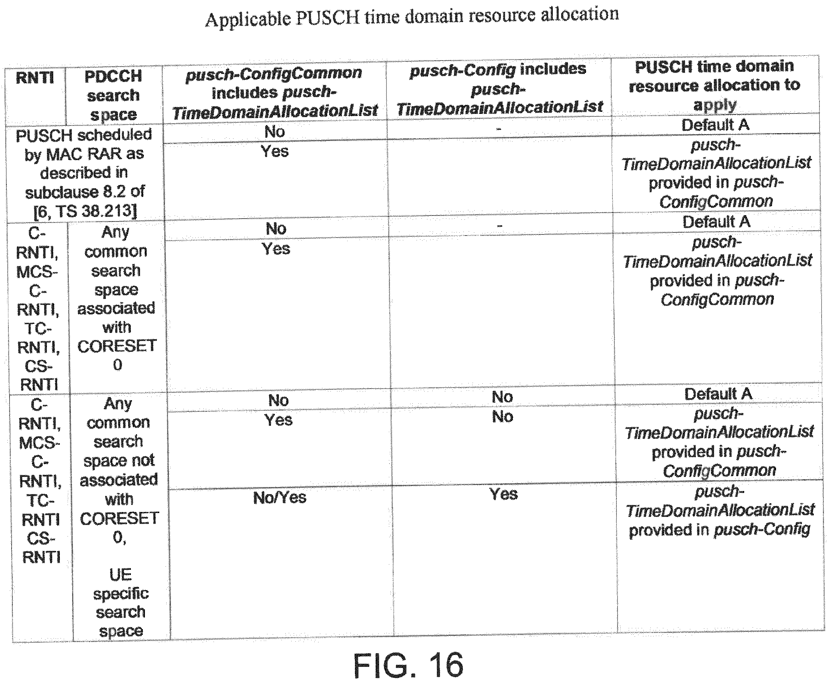

FIG. 15 is a diagram illustrating an example of a redundancy version applied to a transmission occasion according to an embodiment of the present invention. Detail of FIG. 15 will be described later. FIG. 16 is a diagram defining which resource allocation table is applied to a PUSCH time domain resource allocation according to an embodiment of the present invention. The terminal apparatus 1 may determine a resource allocation table to be applied to the PUSCH time domain resource allocation with reference to FIG.16. The resource allocation table includes one or more PUSCH time domain resource allocation configurations. In the present embodiment, the resource allocation tables are categorized into (I) a predefined resource allocation table and (II) a resource allocation table configured from an RRC signal of a higher layer. The predefined resource allocation table is defined as a default PUSCH time domain resource allocation A. Hereinafter, the default PUSCH time domain resource allocation A is referred to as a PUSCH default table A.

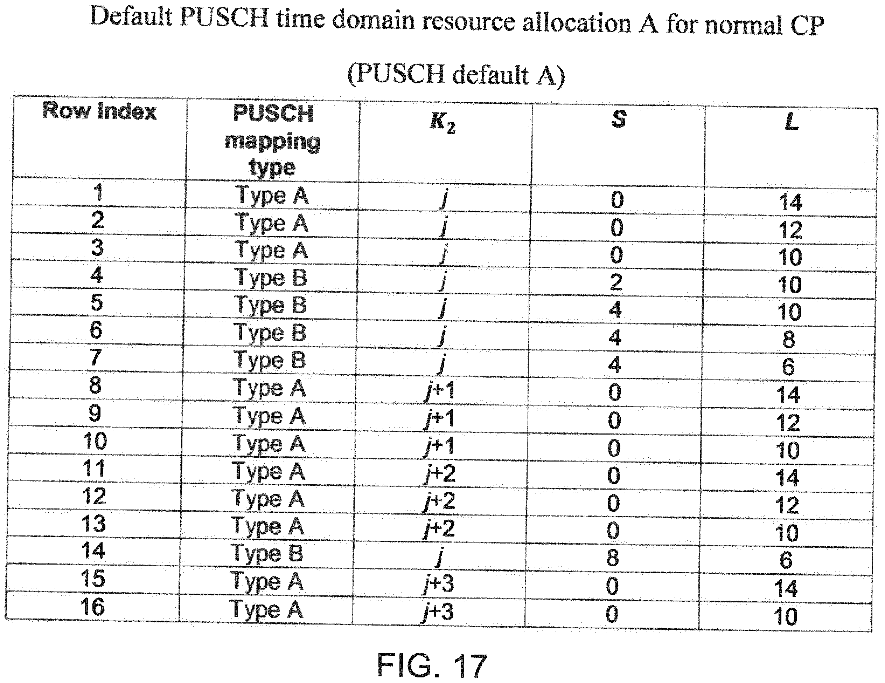

FIG. 17 is a diagram illustrating an example of a PUSCH default table A for a normal cyclic prefix (NCP) according to an embodiment of the present invention. Referring to FIG. 17, the PUSCH default table A includes 16 rows. Each row in the PUSCH default table A indicates a PUSCH time domain resource allocation configuration. Specifically, in FIG. 17, the indexed row defines a PUSCH mapping type, a slot offset K₂ between a PDCCH including DCI and a PUSCH, the starting symbol S of the PUSCH in a slot, and the number of consecutively allocated symbols L. The resource allocation table configured from the RRC signal of the higher layer is given by a signal pusch-TimeDomainAllocationList of the higher layer. The information element PUSCH-TimeDomainResourceAllocation indicates the PUSCH time domain resource allocation configuration. PUSCH-TimeDomainResourceAllocation can be used to configure a time domain relationship between the PDCCH including DCI and the PUSCH. pusch-TimeDomainAllocationList includes one or more information elements PUSCH-TimeDomainResourceAllocation.

In other words, pusch-TimeDomainAllocationList is a list that includes one or more elements (information elements). One information element PDSCH-TimeDomainResourceAllocation may be referred to as one entry (or one row). pusch-TimeDomainAllocationList may include up to 16 entries. Each entry may be defined by K₂, mappingType, and startSymbolAndLength. K₂ indicates a slot offset between the PDCCH including DCI and a scheduled PUSCH. If PUSCH-TimeDomainResourceAllocation does not indicate K₂, the terminal apparatus 1 may assume that the value of K₂ is 1 when the subcarrier spacing of the PUSCH is 15 kHz or 30 kHz, assume that the value of K₂ is 2 when the subcarrier spacing of the PUSCH is 60 kHz, and assume that the value of K₂ is 3 when the subcarrier spacing of the PUSCH is 120 kHz.

The mappingType indicates either the PUSCH mapping type A or the PUSCH mapping type B. The startSymbolAndLength is an index that gives a valid combination of the starting symbol S of the PUSCH and the number of consecutively allocated symbols L. The startSymbolAndLength may be referred to as a start and length indicator (SLIV). In other words, unlike a default table that directly defines the starting symbol S and the consecutive symbols L, the starting symbol S and the consecutive symbols L are given based on the SLIV. The base station apparatus 3 can set the value of the SLIV so that the PUSCH time domain resource allocation does not exceed a slot boundary. As illustrated in the equation in FIG. 14, the value of SLIV is calculated based on the number of symbols in a slot, the starting symbol S, and the number of consecutive symbols L.

The higher layer signal pusch-TimeDomainAllocationList may be included in pusch-ConfigCommon and/or pusch-Config. The information element pusch-ConfigCommon is used to configure a cell-specific parameter for a PUSCH for a certain BWP. The information element pusch-Config is used to configure a UE-specific parameter for a PUSCH for a certain BWP.

The terminal apparatus 1 detects DCI that schedules the PUSCH. The slots in which the PUSCH is transmitted are given by Floor (n*2^{µPUSCH}/2^{µPDCCH}) + K₂ (Equation 4). n is a slot in which the PDCCH that schedules the PUSCH is detected. µ_{PUSCH} is a subcarrier spacing configuration for the PUSCH. µ_{PDCCH} is a subcarrier spacing configuration for the PDCCH.

In FIG. 17, the value of K₂ is any of j, j+1, j+2, and j+3. The value of j is a value identified for subcarrier spacing of the PUSCH. For example, when the subcarrier spacing to which the PUSCH is applied is 15 kHz or 30 kHz, the value of j may be one slot. For example, when the subcarrier spacing to which the PUSCH is applied is 60 kHz, the value of j may be two slots. For example, when the subcarrier spacing to which the PUSCH is applied is 120 kHz, the value of j may be three slots.

As described above, the terminal apparatus 1 may determine which resource allocation table to be applied to the PUSCH time domain resource allocation with reference to FIG. 16.

In an example D, the terminal apparatus 1 may determine a resource allocation table to be applied to the PUSCH scheduled by an RAR UL grant. When pusch-ConfigCommon includes pusch-TimeDomainAllocationList for the terminal apparatus 1, the terminal apparatus 1 may determine the resource allocation table configured from an RRC signal of a higher layer. The resource allocation table is given by pusch-TimeDomainAllocationList included in pusch-ConfigCommon. In addition, when pusch-ConfigCommon does not include pusch-TimeDomainAllocationList for the terminal apparatus 1, the terminal apparatus 1 may determine a PUSCH default table A. In other words, the terminal apparatus 1 may use the default table A, which indicates the PUSCH time domain resource allocation configuration, to be applied to the determination of the PUSCH time domain resource allocation.

In addition, in an example E, the terminal apparatus 1 may detect DCI in any common search space associated with CORESET #0. The detected DCI is attached with a CRC scrambled by any of a C-RNTI, an MCS-C-RNTI, a TC-RNTI, or a CS-RNTI. Further, the terminal apparatus 1 may determine a resource allocation table to be applied to the PUSCH scheduled by the DCI. When pusch-ConfigCommon includes pusch-TimeDomainAllocationList for the terminal apparatus 1, the terminal apparatus 1 may determine the resource allocation table applied to the PUSCH time domain resource allocation as a resource allocation table given by pusch-TimeDomainAllocationList provided by pusch-ConfigCommon. In addition, when pusch-ConfigCommon does not include pusch-TimeDomainAllocationList, the terminal apparatus 1 may determine the resource allocation table applied to the PUSCH time domain resource allocation as a PUSCH default table A.

In addition, in an example F, the terminal apparatus 1 may detect DCI in (I) any common search space associated with CORESET #0 or (II) a UE-specific search space. The detected DCI is attached with a CRC scrambled by any of a C-RNTI, an MCS-C-RNTI, a TC-RNTI, or a CS-RNTI. In addition, the terminal apparatus 1 may determine a resource allocation table to be applied to the PUSCH scheduled by the DCI. When pusch-Config includes pusch-TimeDomainAllocationList for the terminal apparatus 1, the terminal apparatus 1 may determine the resource allocation table applied to the PUSCH time domain resource allocation as a resource allocation table given by pusch-TimeDomainAllocationList provided by pusch-Config.

In other words, when pusch-Config includes pusch-TimeDomainAllocationList, the terminal apparatus 1 may use pusch-TimeDomainAllocationList provided by pusch-Config to be applied to the determination of the PUSCH time domain resource allocation regardless of whether pusch-ConfigCommon includes pusch-TimeDomainAllocationList. Further, when pusch-Config does not include pusch-TimeDomainAllocationList and pusch-ConfigCommon includes pusch-TimeDomainAllocationList, the terminal apparatus 1 may determine the resource allocation table applied to the PUSCH time domain resource allocation as a resource allocation table given from pusch-TimeDomainAllocationList provided by pusch-ConfigCommon.

In other words, the terminal apparatus 1 uses pusch-TimeDomainAllocationList provided by pusch-ConfigCommon to be applied to the determination of the PUSCH time domain resource allocation. Further, when pusch-Config does not include pusch-TimeDomainAllocationList and pusch-ConfigCommon does not include pusch-TimeDomainAllocationList, the terminal apparatus 1 may determine the resource allocation table applied to the PUSCH time domain resource allocation as a PUSCH default table A.

Next, the terminal apparatus 1 may select one PUSCH time domain resource allocation configuration in the determined resource allocation table based on a value indicated by a 'Time domain resource assignment' field included in the DCI that schedules the PUSCH. For example, when the resource allocation table applied to the PUSCH time domain resource allocation is the PUSCH default table A, the value m indicated by the 'Time domain resource assignment' field may indicate the row index m+1 of the default table A. At this time, the PUSCH time domain resource allocation is a time domain resource allocation configuration indicated by the row index m+1. The terminal apparatus 1 transmits the PUSCH assuming the time domain resource allocation configuration indicated by the row index m+1. For example, when the value m indicated by the 'Time domain resource assignment' field is 0, the terminal apparatus 1 uses the PUSCH time domain resource allocation configuration indicated by the row index 1 of the PUSCH default table A to identify resource allocation of the PUSCH scheduled by the DCI in a time direction.

In addition, when the resource allocation table applied to the PUSCH time domain resource allocation is a resource allocation table given by pusch-TimeDomainAllocationList, the value m indicated by the 'Time domain resource assignment' field corresponds to the (m+1)th element (entry, row) in the list pusch-TimeDomainAllocationList.

For example, when the value m indicated by the 'Time domain resource assignment' field is 0, the terminal apparatus 1 may refer to the first element (entry) in the list pusch-TimeDomainAllocationList. For example, when the value m indicated by the 'Time domain resource assignment' field is 1, the terminal apparatus 1 may refer to the second element (entry) in the list pusch-TimeDomainAllocationList.

The number of bits (size) of the 'Time domain resource assignment' field included in DCI will be described below.

The terminal apparatus 1 may transmit a corresponding PUSCH by detection of a PDCCH including DCI format 0_0 or DCI format 0_1. The number of bits of the 'Time domain resource assignment' field included in DCI format 0_0 may be a fixed number of bits. For example, the fixed number of bits may be 4. In other words, the size of the 'Time domain resource assignment' field included in DCI format 0_0 is 4 bits. In addition, the size of the 'Time domain resource assignment' field included in DCI format 0_1 may be a variable number of bits. For example, the number of bits of the 'Time domain resource assignment' field included in DCI format 0_1 may be any of 0, 1, 2, 3 and 4.

Hereinafter, the determination of the number of bits of the 'Time domain resource assignment' field included in DCI format 0_1 will be described.

The number of bits of the 'Time domain resource assignment' field may be given as ceiling (log₂(I)). When pusch-TimeDomainAllocationList is configured (provided) for the terminal apparatus 1, the value of I may be the number of entries included in pusch-TimeDomainAllocationList. When pusch-TimeDomainAllocationList is not configured (provided) for the terminal apparatus 1, the value of I may be the number of rows in a PUSCH default table A. In other words, when pusch-TimeDomainAllocationList is configured for the terminal apparatus 1, the number of bits of the 'Time domain resource assignment' field may be given based on the number of entries included in pusch-TimeDomainAllocationList. When pusch-TimeDomainAllocationList is not configured for the terminal apparatus 1, the number of bits of the 'Time domain resource assignment' field may be given based on the number of rows in a default table (default table A).

Specifically, when pusch-Config includes pusch-TimeDomainAllocationList, the value of I may be the number of entries included in pusch-TimeDomainAllocationList provided by pusch-Config. In addition, when pusch-Config does not include pusch-TimeDomainAllocationList and pusch-ConfigCommon includes pusch-TimeDomainAllocationList, the value of I may be the number of entries included in pusch-TimeDomainAllocationList provided by pusch-ConfigCommon. Further, when pusch-Config does not include pusch-TimeDomainAllocationList and pusch-ConfigCommon does not include pusch-TimeDomainAllocationList, the value of I may be the number of rows included in a PUSCH default table A.

Hereinafter, slot aggregation transmission (multi-slot transmission) in the present embodiment will be described.

A higher layer parameter pusch-AggregationFactor is used to indicate the number of repetitive transmissions of data (transport block). The higher layer parameter pusch-AggregationFactor indicates a value of 2, 4, or 8. The base station apparatus 3 may transmit to the terminal apparatus 1 the higher parameter pusch-AggregationFactor indicating the number of repetitions of data transmission. The base station apparatus 3 can use pusch-AggregationFactor to cause the terminal apparatus 1 to repeat transmission of a transport block for a predetermined number of times. The terminal apparatus 1 may receive the higher layer parameter pusch-AggregationFactor from the base station apparatus 3 and repeat transmission of the transport block by using the number of repetitions indicated by pusch-AggregationFactor. However, when the terminal apparatus 1 does not receive pusch-AggregationFactor from the base station apparatus, the number of repetitive transmissions of the transport block can be regarded as one. In other words, in this case, the terminal apparatus 1 can transmit the transport block scheduled by the PDCCH once. In other words, when the terminal apparatus 1 does not receive pusch-AggregationFactor from the base station apparatus, the terminal apparatus 1 does not have to perform slot aggregation transmission (multi-slot transmission) for the transport block scheduled by the PDCCH.

Specifically, the terminal apparatus 1 may receive a PDCCH including a DCI format attached with a CRC scrambled by a C-RNTI or an MCS-C-RNTI and transmit a PUSCH scheduled by the PDCCH. When pusch-AggregationFactor is configured in the terminal apparatus 1, the terminal apparatus 1 may transmit the PUSCH N times in N consecutive slots from slots in which the PUSCH is first transmitted. PUSCH transmission (transmission of transport block) may be performed once for each slot. In other words, transmission of the same transport block (repetitive transmission) is performed only once in one slot. The value of N is indicated by pusch-AggregationFactor. When pusch-AggregationFactor is not configured in the terminal apparatus 1, the value of N may be 1. The slots in which the PUSCH is first transmitted may be given by Equation 4 as described above. The PUSCH time domain resource allocation given based on the PDCCH that schedules the PUSCH may be applied to N consecutive slots. In other words, the same symbol allocation (the same starting symbol S and the same number of consecutively allocated symbols L) may be applied to N consecutive slots.

The terminal apparatus 1 may repeatedly transmit the transport block in N consecutive slots from slots in which the PUSCH is first transmitted. The terminal apparatus 1 may repeatedly transmit the transport block using the same symbol allocation in each slot. When the higher layer parameter pusch-AggregationFactor is configured, the slot aggregation transmission performed by the terminal apparatus 1 may be referred to as a first aggregation transmission. In other words, the higher layer parameter pusch-AggregationFactor is used to indicate the number of repetitive transmissions for the first aggregation transmission. The higher layer parameter pusch-AggregationFactor is also referred to as a first aggregation transmission parameter.

In the first aggregation transmission, the first transmission occasion (0th transmission occasion) may be in a slot in which the PUSCH is first transmitted. The second transmission occasion (1st transmission occasion) may be in the next slot from the slot in which the PUSCH is first transmitted. The Nth transmission occasion ((N - 1)th transmission occasion) may be in the Nth slot from the slot in which the PUSCH is first transmitted. A redundancy version applied to the transmission of the transport block may be determined based on the Nth transmission occasion ((n - 1)th transmission occasion) of the transport block and rv_{id} indicated by DCI that schedules the PUSCH. The sequence of redundancy versions is {0, 2, 3, 1}. The variable rv_{id} is an index for the sequence of the redundancy version. This variable is updated with modulo 4. The redundancy version is used for coding (rate matching) of the transport block transmitted on the PUSCH. The redundancy version can be incremented in the order of 0, 2, 3, 1. The repetitive transmission of the transport block may be performed in the order of redundancy versions.

Detail of FIG. 15 is described as follows.

As shown in FIG. 15, the redundancy version rv_{id} applied to the first transmission occasion is the value indicated by the DCI that schedules the PUSCH (transport block). For example, when the DCI scheduling the PUSCH indicates the value of rv_{id} as 0, the terminal apparatus 1 may determine the redundancy version rv_{id} provided for the transmission occasion with reference to the first row of FIG. 15. The redundancy version applied to the transmission occasion can be incremented in the order of 0, 2, 3, 1. For example, when the DCI scheduling the PUSCH indicates the value of rv_{id} as 2, the terminal apparatus 1 may determine the redundancy version rv_{id} provided for the transmission occasion with reference to the second row of FIG. 15. The redundancy version applied to the transmission occasion can be incremented in the order of 2, 3, 1, 0.

When at least one symbol in a symbol allocation for a certain transmission occasion is indicated by a higher layer parameter as a downlink symbol, the terminal apparatus 1 may not transmit the transport block in the slot in the transmission occasion.

In the present embodiment, the base station apparatus 3 may transmit a higher layer parameter pusch-AggregationFactor-r16 to the terminal apparatus 1. The higher layer parameter pusch-AggregationFactor-r16 is used to indicate the number of repetitive transmissions of data (transport block). The higher layer parameter pusch-AggregationFactor-r16 may be used to indicate the number of repetitive transmissions for slot aggregation transmission and/or mini-slot aggregation transmission. The slot aggregation transmission and the mini-slot aggregation transmission will be described later.

In this embodiment, pusch-AggregationFactor-r16 is set to, for example, any of values of n1, n2, and n3. The values of n1, n2, and n3 may be 2, 4, and 8 and may be other values. n1, n2, and n3 indicate the number of repetitive transmissions of the transport block. In other words, pusch-AggregationFactor-r16 may indicate a value of the number of times of one repetitive transmission. The number of repetitive transmissions of the transport block may be the number of repetitive transmissions within a slot (such as Nᵣₑₚ), the number of repetitive transmissions included within a slot and between slots (such as Nₜₒₜₐₗ), or the number of repetitive transmissions between slots (such as Nₜₒₜₐₗ). Alternatively, the base station apparatus 3 may transmit to the terminal apparatus 1 pusch-AggregationFactor-r16 including more than one element so that the number of repetitive transmissions can be configured more flexibly for the terminal apparatus 1. Each element (information element or entry) may be used to indicate the number of repetitive transmissions of a transport block. In other words, pusch-AggregationFactor-r16 may indicate a value of the number of times of multiple repetitive transmissions (i.e., more than one repetitive transmission).

In the present embodiment, when the higher layer parameter pusch-AggregationFactor-r16 is configured, the slot aggregation transmission performed by the terminal apparatus 1 may be referred to as a second aggregation transmission. In other words, the higher layer parameter pusch-AggregationFactor-r16 is used to indicate the number of repetitive transmissions for the second aggregation transmission. The higher layer parameter pusch-AggregationFactor-r16 is also referred to as a second aggregation transmission parameter. Further, the base station apparatus 3 may indicate any element via a field included in a DCI that schedules the transport block and may notify the terminal apparatus 1 of the number of repetitive transmissions of the transport block.

A specific procedure thereof will be described later. Further, the base station apparatus 3 may indicate any element via a MAC CE (MAC Control Element) and may notify the terminal apparatus 1 of the number of repetitive transmissions of the transport block. That is, the base station apparatus 3 may indicate any element via a field included in the DCI and/or the MAC CE and may dynamically notify the terminal apparatus 1 of the number of repetitive transmissions. The application of the function of the number of dynamic repetitions to the terminal apparatus 1 may mean that the terminal apparatus 1 is dynamically notified of the number of repetitive transmissions from the base station apparatus 3.

In addition, the terminal apparatus 1 may notify the base station apparatus 3 of the number of repetitive transmissions of the transport block via a MAC CE (MAC Control Element) on the PUSCH. The number of repetitive transmissions of the transport block signaled by the MAC CE may be the total number of repetitive transmissions of the transport block or may be the remaining number of repetitive transmissions of the transport block. Similarly, when the terminal apparatus 1 receives the repetitive transmission of the transport block on the PDSCH, the base station apparatus 3 may notify the terminal apparatus 1 of the number of repetitive transmissions of the transport block via a MAC CE (MAC Control Element) on the PDSCH. The number of repetitive transmissions of the transport block signaled by the MAC CE may be the total number of repetitive transmissions of the transport block or may be the remaining number of repetitive transmissions of the transport block. As a result, the terminal apparatus 1 and the base station apparatus 3 can dynamically change the number of repetitive transmissions of the transport block.

As a first example, the base station apparatus 3 may not transmit pusch-AggregationFactor and pusch-AggregationFactor-r16 to the terminal apparatus 1. That is, pusch-AggregationFactor and pusch-AggregationFactor-r16 may not be configured in the terminal apparatus 1. In other words, the terminal apparatus 1 may receive from the base station apparatus 3 an RRC message that does not include (does not configure) pusch-AggregationFactor and pusch-AggregationFactor-r16. In this case, the terminal apparatus 1 may transmit the PUSCH in the slots given by Equation 4 as described above. In other words, the number of repetitive transmissions of the transport block may be one. That is, the terminal apparatus 1 may not perform slot aggregation transmission and/or mini-slot aggregation transmission.

In addition, as a second example, the base station apparatus 3 may transmit pusch-AggregationFactor and may not transmit pusch-AggregationFactor-r16 to the terminal apparatus 1. That is, pusch-AggregationFactor may be configured in the terminal apparatus 1, and pusch-AggregationFactor-r16 may not be configured in the terminal apparatus 1. In other words, the terminal apparatus 1 may receive from the base station apparatus 3 an RRC message that includes (configures) pusch-AggregationFactor but does not include (does not configure) pusch-AggregationFactor-r16. In this case, the terminal apparatus 1 may transmit the PUSCH N times in N consecutive slots from the slots given by Equation 4 as described above. In other words, the number of repetitive transmissions of the transport block may be N indicated by pusch-AggregationFactor. The terminal apparatus 1 may perform the first aggregation transmission on the PUSCH scheduled by the DCI. The PDCCH including the DCI that schedules the PUSCH may be transmitted by a CSS or a USS. The same symbol allocation may be applied to the N consecutive slots.

In addition, as a third example, the base station apparatus 3 may not transmit pusch-AggregationFactor and may transmit pusch-AggregationFactor-r16 to the terminal apparatus 1. That is, pusch-AggregationFactor may not be configured in the terminal apparatus 1, and pusch-AggregationFactor-r16 may be configured in the terminal apparatus 1. In other words, the terminal apparatus 1 may receive from the base station apparatus 3 an RRC message that does not include (does not configure) pusch-AggregationFactor but includes (configures) pusch-AggregationFactor-r16. In this case, the terminal apparatus 1 may transmit the PUSCH M times in one slot or a plurality of slots from the slots given by Equation 4 as described above.

Unlike the first aggregation transmission, the plurality of slots may be consecutive or not consecutive. In other words, the number of repetitive transmissions M of the transport block may be indicated by pusch-AggregationFactor-r16. The PDCCH including the DCI that schedules the PUSCH may be transmitted by a CSS or a USS. The same symbol allocation may not be applied to a plurality of slots. In other words, the PUSCH time domain resource allocation (symbol allocation) applied to the first repetitive transmission of the transport block (first PUSCH) may be given based on the DCI that schedules the transport block. However, the PUSCH symbol allocation applied to the repetitive transmission of the transport block from the second time may be different from the symbol allocation given based on the PDCCH (such as DCI) that schedules the PUSCH. This is referred to as symbol allocation extension.

Specifically, the starting symbol S applied to the repetitive transmission of the transport block from the second time may be different from the starting symbol S given based on the PDCCH (starting symbol extension). The starting symbol S applied to the first repetitive transmission of the transport block may be indicated by the 'Time domain resource assignment' field included in the DCI that schedules the transport block transmission. The number of consecutively allocated symbols of the PUSCH applied to the first repetitive transmission of the transport block may be given at least based on the number of symbols L given based on the SLIV indicated by the 'Time domain resource assignment' field included in the DCI and/or available symbols in a slot. The number of symbols L given based on the SLIV indicated by the 'Time domain resource assignment' field may be the number of symbols corresponding to the total repetitive transmissions of the transport block. The number of consecutive symbols (number of consecutively available symbols) L1 from the starting symbol S of the first repetitive transmission of the transport block to the last symbol number (last available symbol) of the slot may be the number of consecutively allocated symbols of the PUSCH applied to the first repetitive transmission of the transport block.

When the number of symbols L1 is equal to or greater than the number of symbols L given based on the SLIV indicated by the 'Time domain resource assignment' field, the number of consecutively allocated symbols of the PUSCH applied to the first repetitive transmission of the transport block may be the number of symbols L given based on the SLIV indicated by the 'Time domain resource assignment' field. Further, the terminal apparatus 1 may not perform next repetitive transmission of the transport block (second repetitive transmission of the transport block). When the number of symbols L1 is less than the number of symbols L given based on the SLIV indicated by the 'Time domain resource assignment' field, the number of consecutively allocated symbols of the PUSCH applied to the first repetitive transmission of the transport block may be the number of symbols L1. Then, the terminal apparatus 1 may perform next repetitive transmission of the transport block (second repetitive transmission of the transport block).

The terminal apparatus 1 and the base station apparatus 3 may determine the number of symbols L for the first repetitive transmission of the transport block based on one, a plurality or all of the starting symbol S given based on a PDCCH, the number of symbols L given based on the PDCCH, and the number of symbols in a slot (e.g., the number of available symbols). In addition, the terminal apparatus 1 may determine whether to transmit a second PUSCH based on one, a plurality, or all of the number of symbols applied to the first PUSCH transmission, and the starting symbol S and the number of symbols L given based on the SLIV indicated by a DCI field.

The starting symbol S applied to the repetitive transmission of the transport block from the second time (second PUSCH) may be the 0th symbol, which is the start of a slot. In addition, the starting symbol S applied to the repetitive transmission of the transport block from the second time may be the same as the starting symbol S given based on the PDCCH. Further, the starting symbol S applied to the repetitive transmission of the transport block from the second time may be the first available symbol from the start of a slot. Further, the number of consecutively allocated symbols L of the PUSCH applied to the repetitive transmission of the transport block from the second time may be different from the number of consecutively allocated symbols L given based on the PDCCH (symbol number extension). Further, the number of consecutively allocated symbols L of the PUSCH applied to the repetitive transmission of the transport block from the second time may be the same as the number of consecutively allocated symbols L given based on the PDCCH. Further, the number of consecutively allocated symbols of the PUSCH applied to the repetitive transmission of the transport block from the second time may be given at least based on the number of remaining symbols obtained by subtracting (i) the number of consecutive symbols of the PUSCH applied to the first repetitive transmission of the transport block from (ii) the number of symbols L given based on the SLIV indicated by the 'Time domain resource assignment' field.

The starting symbol and/or the number of symbols in each repetitive transmission may be determined based on available symbols. That is, the terminal apparatus 1 may determine the number of symbols L of the Xth PUSCH based on one, a plurality or all of the starting symbol S given based on a PDCCH, the number of symbols L given based on the PDCCH, the number of symbols in a slot, available symbols in the slot, Nₜₒₜₐₗ, Nᵣₑₚ, and Nₛₗₒₜₛ. In addition, the terminal apparatus 1 may determine whether to transmit the Xth PUSCH based on one, a plurality, or all of the number of symbols applied to transmissions of PUSCHs from the first PUSCH to the X-1th PUSCH and the starting symbol S and the number of symbols L given based on the SLIV indicated by a DCI field.

Further, in a third example, when pusch-AggregationFactor-r16 includes one and/or more than one element, the terminal apparatus 1 may select one from a plurality of elements by using a 'Repetition Number' field included in the DCI (number of dynamic repetitions). The 'Repetition Number' field included in the DCI may be present when pusch-AggregationFactor-r16 includes one and/or more than one element; otherwise, it may not be present. The 'Repetition Number' field included in the DCI may not be present when pusch-AggregationFactor-r16 is not configured. Further, a value indicated in the selected element is the number of repetitive transmissions of the transport block scheduled by DCI. Further, the terminal apparatus 1 may repeatedly transmit the transport block for a notified number of times. The number of bits in the 'Repetition Number' field may be given as ceiling (log₂(X+1)) or ceiling (log₂(X)). X is the number of elements included in pusch-AggregationFactor-r16. When the number of bits in the 'Repetition Number' field is given as ceiling (log₂(X)), a value m indicated in the 'Repetition Number' field may correspond to the (m+1)th element included in pusch-AggregationFactor-r16. Further, the number of repetitive transmissions of the transport block may be a value indicated by the (m+1)th element.

For example, when the value m indicated in the 'Repetition Number' field is 0, the terminal apparatus 1 may refer to the first element included in pusch-AggregationFactor-r16. The value indicated by the element may be greater than 1. The value indicated by the element may be equal to 1. In addition, when the number of bits in the 'Repetition Number' field is given as ceiling (log₂(X+1)), the value m indicated in the 'Repetition Number' field may correspond to the mth element included in pusch-AggregationFactor-r16. However, here, the value m is a non-zero value. When the value m indicated in the 'Repetition Number' field is 0, the terminal apparatus 1 may consider the number of repetitive transmissions as 1. The value indicated by each element may be greater than 1.

When pusch-AggregationFactor-r16 is configured, the symbol allocation extension (starting symbol extension and/or symbol number extension), the number of dynamic repetitions, and/or the mini-slot aggregation transmission function(s) are applied for aggregation transmission (second aggregation transmission).

In addition, as a fourth example, the base station apparatus 3 may transmit pusch-AggregationFactor and pusch-AggregationFactor-r16 to the terminal apparatus 1. That is, pusch-AggregationFactor and pusch-AggregationFactor-r16 may be configured in the terminal apparatus 1. In other words, the terminal apparatus 1 may receive from the base station apparatus 3 an RRC message that includes (configures) pusch-AggregationFactor and pusch-AggregationFactor-r16. Basically, the application of the symbol allocation extension (starting symbol extension and/or symbol number extension), the number of dynamic repetitions, and/or the mini-slot aggregation transmission function(s) is the operation performed when the push-AggregationFactor-r16 is configured as described in the third example.

Hereinafter, the terminal apparatus 1 with pusch-AggregationFactor-r16 configured may determine whether the 'Repetition Number' field is present in a certain DCI based on at least a part or all of the following elements from (A) to (D).
Element A: type of RNTI that scrambles a CRC attached to DCI.
Element B: type of search space in which DCI is detected.
Element C: type of DCI format.
Element D: information indicated in a DCI field

In Element A, the 'Repetition Number' field may not be present in the DCI in a case that the type of an RNTI that scrambles a CRC attached to DCI is any of an SI-RNTI, an RA-RNTI, a TC-RNTI, a P-RNTI, a C-RNTI, an MCS-C-RNTI, or a CS-RNTI. In addition, the 'Repetition Number' field included in the DCI may be present in a case that the type of an RNTI that scrambles a CRC attached to the DCI is a NEW-RNTI.

In Element B, the type of a search space in which the terminal apparatus 1 monitors DCI is a common search space or a UE-specific search space. The common search space includes a type 0 common search space, a type 1 common search space, and a type 2 common search space. The 'Repetition Number' field may not be present in the DCI in a case that the search space in which the DCI is monitored is a common search space. The 'Repetition Number' field may be present in the DCI in a case that the search space in which the DCI is monitored is a UE-specific search space.

In Element C, the type of a DCI format is DCI format 0_0, DCI format 0_1, or DCI format 0_2. The 'Repetition Number' field may not be present in the DCI in a case that the DCI is DCI format 0_0 and DCI format 0_1. The 'Repetition Number' field may be present in the DCI in a case that the DCI is DCI format 0_2. In addition, the 'Repetition Number' field may not be present in the DCI in a case that the DCI is DCI format 0_0. The 'Repetition Number' field may be present in the DCI in a case that the DCI is DCI format 0_1 or DCI format 0_2.

In addition, for example, the 'Repetition Number' field may not be present in the DCI in a case that DCI format 0_0 is monitored in the common search space. The 'Repetition Number' field may be present in the DCI in a case that DCI format 0_0 is monitored in the UE-specific search space. Further, for example, the 'Repetition Number' field may be present in the DCI in a case that DCI format 0_1 is scrambled by a NEW-RNTI. The 'Repetition Number' field may not be present in the DCI in a case that DCI format 0_1 is scrambled by an RNTI other than the NEW-RNTI.

Hereinafter, the terminal apparatus 1 with pusch-AggregationFactor-r16 configured may determine, based on at least a part or all of the following elements from (A) to (C), whether the function(s) performed when pusch-AggregationFactor-r16 is configured as described above is applied to PUSCH transmission schedule by the DCI.
Element A: type of RNTI that scrambles a CRC attached to DCI.
Element B: type of search space in which DCI is detected.
Element C: type of DCI format.

In Element A, the function(s) performed when pusch-AggregationFactor-r16 is configured may not be applied to the PUSCH transmission schedule by the DCI in a case that the type of an RNTI that scrambles a CRC attached to DCI is any of an SI-RNTI, an RA-RNTI, a TC-RNTI, a P-RNTI, a C-RNTI, an MCS-C-RNTI, or a CS-RNTI. In addition, the function(s) performed when pusch-AggregationFactor-r16 is configured may be applied to the PUSCH transmission schedule by the DCI in a case that the type of the RNTI that scrambles the CRC attached to the DCI is a NEW-RNTI.

In Element B, the type of a search space in which the terminal apparatus 1 monitors DCI is a common search space or a UE-specific search space. The common search space includes a type 0 common search space, a type 1 common search space, and a type 2 common search space. In addition, the function(s) performed when pusch-AggregationFactor-r16 is configured may not be applied to the PUSCH transmission schedule by the DCI in a case that the search space in which the DCI is monitored is a common search space. In addition, the function(s) performed when pusch-AggregationFactor-r16 is configured may be applied to the PUSCH transmission schedule by the DCI in a case that the search space in which the DCI is monitored is a UE-specific search space.

In Element C, the type of a DCI format is DCI format 0_0, DCI format 0_1, or DCI format 0_2. The function(s) performed when pusch-AggregationFactor-r16 is configured may not be applied to the PUSCH transmission schedule by the DCI in a case that the DCI is DCI format 0_0 and DCI format 0_1. The function(s) performed when pusch-AggregationFactor-r16 is configured may be applied to the PUSCH transmission schedule by the DCI in a case that the DCI is DCI format 0_2. The function(s) performed when pusch-AggregationFactor-r16 is configured may not be applied to the PUSCH transmission schedule by the DCI in a case that the DCI is DCI format 0_0. The function(s) performed when pusch-AggregationFactor-r16 is configured may be applied to the PUSCH transmission schedule by the DCI in a case that the DCI is DCI format 0_1 or DCI format 0_2.

In addition, for example, the function(s) performed when pusch-AggregationFactor-r16 is configured may not be applied to the PUSCH transmission schedule by the DCI in a case that DCI format 0_0 is monitored in the common search space. The function(s) performed when pusch-AggregationFactor-r16 is configured may be applied to the PUSCH transmission schedule by the DCI in a case that DCI format 0_0 is monitored in the UE-specific search space.

As described above, in a case that the function(s) performed when pusch-AggregationFactor-r16 is configured is not applied, the first aggregation transmission is performed in the PUSCH transmission scheduled by the DCI if pusch-AggregationFactor is configured. In other words, the terminal apparatus 1 may repeatedly transmit the transport block N times in N consecutive slots. The value of N may be given by pusch-AggregationFactor. The same symbol allocation may be applied to the N slots. In addition, in a case that the function(s) performed when pusch-AggregationFactor-r16 is configured is not applied, the PUSCH transmission scheduled by the DCI may be performed once if pusch-AggregationFactor is not configured. In other words, the terminal apparatus 1 may transmit the transport block once.

Hereinafter, the mini-slot aggregation transmission (subslot aggregation transmission, multi-subslot transmission, intra-slot aggregation transmission) in the present embodiment will be described.

As described above, in slot aggregation transmission (slot aggregation transmission in the first aggregation transmission and the second aggregation transmission), one uplink grant may schedule two or more than two PUSCH repetitive transmissions. Each repetitive transmission is performed in each consecutive slot (or each available slot). In other words, in the slot aggregation, the maximum number of repetitive transmissions of the same transport block is only one in one slot (one available slot). The available slot may be a slot in which the transport block is actually repeatedly transmitted.

In mini-slot aggregation transmission, one uplink grant may schedule two or more than two PUSCH repetitive transmissions. The repetitive transmission may be performed within the same slot or over consecutive available slots. For the scheduled PUSCH repetitive transmission, the number of repetitive transmissions performed in each slot may be different based on the symbols available for the PUSCH repetitive transmission in the slot (available slot). In other words, in the mini-slot aggregation transmission, the number of repetitive transmissions of the same transport block may be one or more than one in one slot (one available slot). In other words, in the mini-slot aggregation transmission, the terminal apparatus 1 can transmit one or more repetitive transmissions of the same transport block to the base station apparatus 3 in one slot. In other words, mini-slot aggregation transmission can be said to mean a mode that supports intra-slot aggregation. The symbol allocation extension (starting symbol extension and/or symbol number extension), and/or the number of dynamic repetitions described above may be applied to the mini-slot aggregation transmission.

In the present embodiment, the terminal apparatus 1 may determine whether the aggregation transmission is applied to the PUSCH transmission scheduled by an uplink grant or whether any aggregation transmission type is applied at least based on (I) a higher layer parameter and/or (II) a field included in the uplink grant. The types of aggregation transmission may include a first aggregation transmission and a second aggregation transmission. As another example, the second aggregation transmission may be categorized into slot aggregation transmission and mini-slot aggregation transmission. In other words, the types of aggregation transmission may include first slot aggregation transmission (first aggregation transmission), second slot aggregation transmission (slot aggregation transmission in the second aggregation transmission), and mini-slot aggregation transmission.

In aspect A of the present embodiment, the base station apparatus 3 may notify the terminal apparatus 1 of which of slot aggregation transmission and mini-slot aggregation transmission is to be configured by a higher layer parameter. Which of the slot aggregation transmission and the mini-slot aggregation transmission is configured may mean which of the slot aggregation transmission and the mini-slot aggregation transmission is applied. For example, pusch-AggregationFactor may be used to indicate the number of repetitive transmissions of the first aggregation transmission (first slot aggregation transmission). pusch-AggregationFactor-r16 may be used to indicate the number of repetitive transmissions of the second slot aggregation transmission and/or the mini-slot aggregation transmission. pusch-AggregationFactor-r16 may be a common parameter for the second slot aggregation transmission and/or the mini-slot aggregation transmission.

A higher layer parameter repTxWithinSlot-r16 may be used to indicate the mini-slot aggregation transmission. When the higher layer parameter repTxWithinSlot-r16 is set to be valid, the terminal apparatus 1 may consider that the mini-slot aggregation transmission is applied to the transport block transmission and perform the mini-slot aggregation transmission. In other words, when push-AggregationFactor-r16 is configured and repTxWithinSlot-r16 is configured (set to be valid) in the terminal apparatus 1, the terminal apparatus 1 may consider that the mini-slot aggregation transmission is applied. The number of repetitive transmissions for the mini-slot aggregation transmission may be indicated by pusch-AggregationFactor-r16. In addition, when push-AggregationFactor-r16 is configured and repTxWithinSlot-r16 is not configured in the terminal apparatus 1, the terminal apparatus 1 may consider that the second slot aggregation transmission is applied. The number of repetitive transmissions for the second slot aggregation transmission may be indicated by pusch-AggregationFactor-r16.

Further, when push-AggregationFactor is configured and pusch-AggregationFactor-r16 is not configured in the terminal apparatus 1, the terminal apparatus 1 may consider that the first slot aggregation transmission is applied. Further, when the pusch-AggregationFactor and pusch-AggregationFactor-r16 are not configured in the terminal apparatus 1, the terminal apparatus 1 may consider that the aggregation transmission is not applied and transmit the PUSCH scheduled by an uplink grant once. In the present embodiment, the fact that the higher layer parameter (e.g., repTxWithinSlot-r16) is configured may mean that the higher layer parameter (e.g., repTxWithinSlot-r16) is set to be valid or may also mean that the higher layer parameter (e.g., repTxWithinSlot-r16) is transmitted from the base station apparatus 3. In the present embodiment, the fact that the higher layer parameter (e.g., repTxWithinSlot-r16) is not configured may mean that the higher layer parameter (e.g., repTxWithinSlot-r16) is configured to be invalid or may also mean that the higher layer parameter (e.g., repTxWithinSlot-r16) is not transmitted from the base station apparatus 3.

In aspect B of the present embodiment, the base station apparatus 3 may notify the terminal apparatus 1 of which of slot aggregation transmission and mini-slot aggregation transmission is to be configured by a higher layer parameter. pusch-AggregationFactor may be used to indicate the number of repetitive transmissions of the first slot aggregation transmission. pusch-AggregationFactor-r16 may be used to indicate the number of repetitive transmissions of the second slot aggregation transmission and/or the mini-slot aggregation transmission. pusch-AggregationFactor-r16 may be a common parameter for the second slot aggregation transmission and/or the mini-slot aggregation transmission. When pusch-AggregationFactor-r16 is configured in the terminal apparatus 1, the second slot aggregation transmission and/or the mini-slot aggregation transmission may be applied to the terminal apparatus 1.

Next, the terminal apparatus 1 may further determine which of the slot aggregation transmission and the mini-slot aggregation transmission is applied based on a field included in the uplink grant that schedules the PUSCH transmission (PUSCH repetitive transmission). As an example, a certain field included in the uplink grant may be used to indicate which of the slot aggregation transmission and the mini-slot aggregation transmission is applied. The field may be 1 bit in length. In addition, the terminal apparatus 1 may determine which of the slot aggregation transmission and the mini-slot aggregation transmission is applied based on the field included in the uplink grant transmitted from the base station apparatus 3. The terminal apparatus 1 may determine that the slot aggregation transmission is applied when the field indicates 0 and may determine that the mini-slot aggregation transmission is applied when the field indicates 1.

In addition, as an example, the terminal apparatus 1 may determine which of the slot aggregation transmission and the mini-slot aggregation transmission is applied based on the 'Time domain resource assignment' field included in the uplink grant transmitted from the base station apparatus 3. As described above, the 'Time domain resource assignment' field is used to indicate the PUSCH time domain resource allocation. The terminal apparatus 1 may determine which of the slot aggregation transmission and the mini-slot aggregation transmission is applied based on whether the number of consecutively allocated symbols L obtained based on the 'Time domain resource assignment' field exceeds a predetermined value. The terminal apparatus 1 may determine that the slot aggregation transmission is applied when the number of symbols L exceeds the predetermined value. In addition, the terminal apparatus 1 may determine that the mini-slot aggregation transmission is applied when the number of symbols L does not exceed the predetermined value. The predetermined value may be a value indicated by a higher layer parameter. The predetermined value may be a value predefined in a specification or the like. For example, the predetermined value may be 7 symbols.

In aspect C of the present embodiment, the base station apparatus 3 may notify the terminal apparatus 1 of which of slot aggregation transmission and mini-slot aggregation transmission is to be configured by a higher layer parameter. For example, the base station apparatus 3 may configure a higher layer parameter indicating the number of repetitive transmissions for each of the second slot aggregation transmission and the mini-slot aggregation transmission, respectively. For example, pusch-AggregationFactor-r16 may be used to indicate the number of repetitive transmissions of the second slot aggregation transmission. pusch-MiniAggregationFactor-r16 may be used to indicate the number of repetitive transmissions of the mini-slot aggregation transmission. The base station apparatus 3 may transmit a corresponding higher layer parameter when attempting to configure either the second slot aggregation transmission or the mini-slot aggregation transmission for the terminal apparatus 1. In other words, the terminal apparatus 1 may consider that the first slot aggregation transmission is applied when the base station apparatus 3 transmits pusch-AggregationFactor-r16 to the terminal apparatus 1. The terminal apparatus 1 may consider that the mini-slot aggregation transmission is applied when the base station apparatus 3 transmits pusch-MiniAggregationFactor-r16 to the terminal apparatus 1.

In addition, in aspect A, B, or C of the present embodiment, the terminal apparatus 1 may determine which of the slot aggregation transmission and the mini-slot aggregation transmission is applied based on a PUSCH mapping type obtained based on the 'Time domain resource assignment' field included in the uplink grant. Specifically, in a case that the second slot aggregation transmission and/or the mini-slot aggregation transmission is applied, the terminal apparatus 1 may consider that the second slot aggregation transmission and/or the mini-slot aggregation transmission is applied when the PUSCH mapping type obtained based on the 'Time domain resource assignment' field is the PUSCH mapping type A.

Further, if pusch-AggregationFactor is transmitted from the base station apparatus 3, the terminal apparatus 1 may determine that the first slot aggregation transmission is applied to the PUSCH transmission scheduled by the uplink grant. The number of repetitive transmissions of the slot aggregation transmission is indicated by pusch-AggregationFactor. If pusch-AggregationFactor is transmitted from the base station apparatus 3, the terminal apparatus 1 may transmit the PUSCH scheduled by the uplink grant once. In other words, when the first condition is met and pusch-AggregationFactor is configured, the terminal apparatus 1 and the base station apparatus 3 may apply the same symbol allocation in each slot, and the transport block may be repeatedly transmitted N times in N consecutive slots.

When pusch-AggregationFactor is not configured, the transport block may be transmitted once, and when the second condition is met, the second aggregation transmission as described above may be applied to transmit the transport block. Here, the first condition at least includes that the PUSCH mapping type is indicated as type A in the DCI that schedules the PUSCH transmission. The second condition at least includes that the PUSCH mapping type is indicated as type B in the DCI that schedules the PUSCH transmission. The value of N is given in pusch-AggregationFactor. That is, the mapping type of the PUSCH to which the second slot aggregation transmission and/or the mini-slot aggregation transmission is applied may be type B. The mapping type of the PUSCH to which the first slot aggregation transmission is applied may be type A or type B.

In addition, in aspect A, B, or C of the present embodiment, the terminal apparatus 1 may determine which of the slot aggregation transmission and the mini-slot aggregation transmission is applied based on the number of symbols L given based on the SLIV indicated from the 'Time domain resource assignment' field included in the uplink grant. That is, the terminal apparatus 1 may determine which of the slot aggregation transmission and the mini-slot aggregation transmission is applied based on whether the number of symbols L given based on the SLIV indicated from the 'Time domain resource assignment' field included in the uplink grant exceeds a third value. Specifically, in a case that the second slot aggregation transmission and/or the mini-slot aggregation transmission is applied, the terminal apparatus 1 may consider that the second slot aggregation transmission is applied when the number of symbols L obtained based on the 'Time domain resource assignment' field is greater than the third value. Further, the terminal apparatus 1 may consider that the mini-slot aggregation transmission is applied when the number of symbols L obtained based on the 'Time domain resource assignment' field is equal to or less than the third value.

In addition, in aspect A, B, or C of the present embodiment, the terminal apparatus 1 may determine which of the slot aggregation transmission and the mini-slot aggregation transmission is applied based on the starting symbol S and the number of symbols L given based on the SLIV indicated from the 'Time domain resource assignment' field included in the uplink grant. That is, the terminal apparatus 1 may determine which of the slot aggregation transmission and the mini-slot aggregation transmission is applied based on whether the sum of S and L (S + L) given based on the SLIV indicated from the 'Time domain resource assignment' field included in the uplink grant exceeds a third value. Specifically, in a case that the second slot aggregation transmission and/or the mini-slot aggregation transmission is applied, the terminal apparatus 1 may consider that the second slot aggregation transmission is applied when the sum (S + L) obtained based on the 'Time domain resource assignment' field is greater than the third value. Further, the terminal apparatus 1 may consider that the mini-slot aggregation transmission is applied when the sum (S + L) obtained based on the 'Time domain resource assignment' field is equal to or less than the third value. The third value may be a predefined value. For example, the third value may be 14 symbols. The third value may also be 7 symbols.

The transport block size applied to the mini-slot aggregation transmission will be described below.

The transport block size (TBS) is the number of bits of a transport block. The terminal apparatus 1 determines an MCS index (I_{MCS}) for the PUSCH based on a 'Modulation and coding scheme' field included in the DCI transmitted from the base station apparatus 3. The terminal apparatus 1 determines a modulation order (Qₘ) and a target code rate (R) for the PUSCH with reference to the determined MCS index (I_{MCS}) for the PUSCH. The terminal apparatus 1 determines a redundancy version (rv) for the PUSCH based on a 'redundancy version' field included in the DCI. Further, the terminal apparatus 1 determines the transport block size by using the number of layers and the total number of physical resource blocks (n_{PRB}) allocated to the PUSCH.

The terminal apparatus 1 receives the DCI transmitted from the base station apparatus 3. The terminal apparatus 1 transmits on the PUSCH the transport block scheduled by the DCI to the base station apparatus 3. The PUSCH may include Nₜₒₜₐₗ repetitive transmissions of the same transport block within one or more slots. The first repetitive transmission of the transport block is the first PUSCH. The Nₜₒₜₐₗth repetitive transmission of the transport block may correspond to the Nₜₒₜₐₗth PUSCH. In other words, the PUSCHs may include PUSCHs from the first PUSCH to the Nₜₒₜₐₗth PUSCH.

The terminal apparatus 1 first determines the number of the resource elements N'_{RE} within one PRB in order to determine the transport block size of the transport block. The terminal apparatus 1 may calculate N'_{RE} based on N'_{RE} = N^{RB}_{SC} * N^{sh}_{symb} - N^{PRB}_{DMRS} - N^{PRB}ₒₕ (Equation 2). Here, N^{RB}_{SC} is the number of subcarriers in the frequency domain within one physical resource block. In other words, N^{RB}_{SC} may be 12. N^{sh}_{symb} is a first number of indicated in the DCI. The first number of symbols may be the number of symbols L given based on the SLIV indicated by the 'Time domain resource assignment' field included in the DCI that schedules the transport block. A second number of symbols is a number of symbols used for the first PUSCH transmission. The second number of symbols is given based on the first number of symbols and the number of available symbols. The terminal apparatus 1 calculates the number of resource elements based on the first number of symbols.

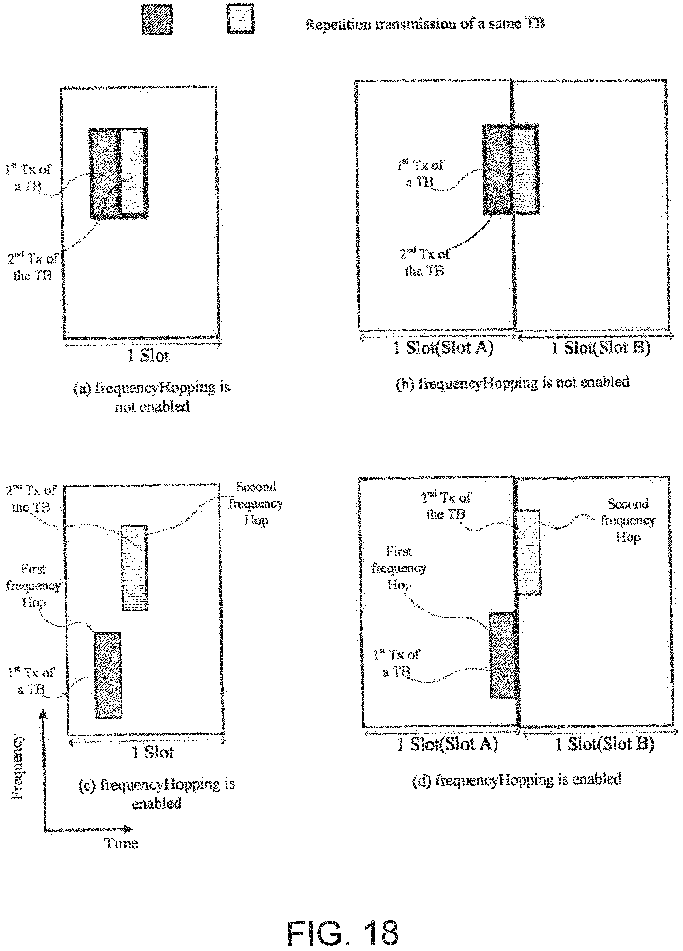

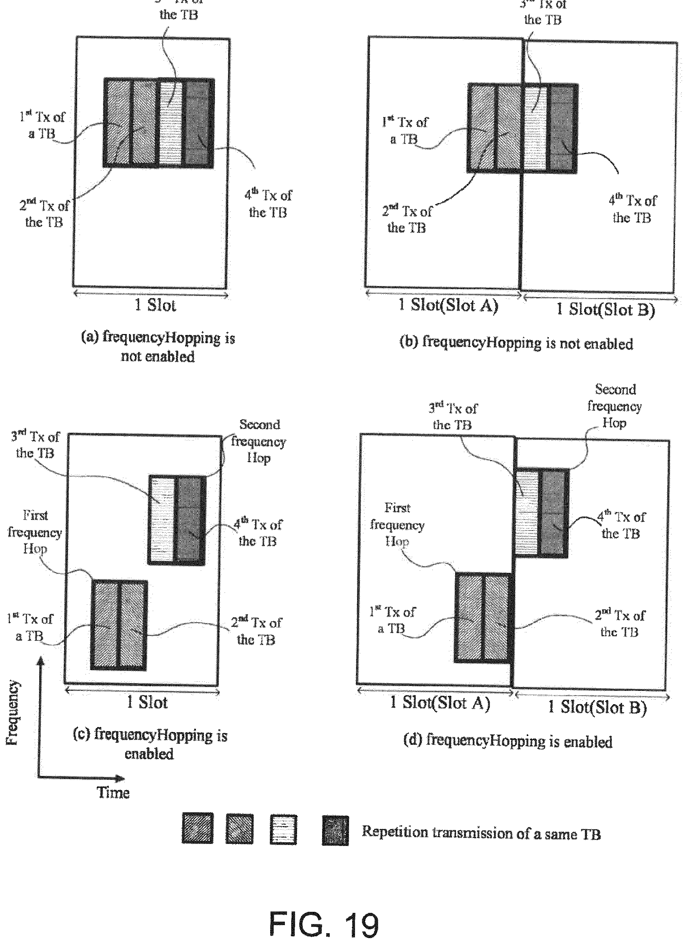

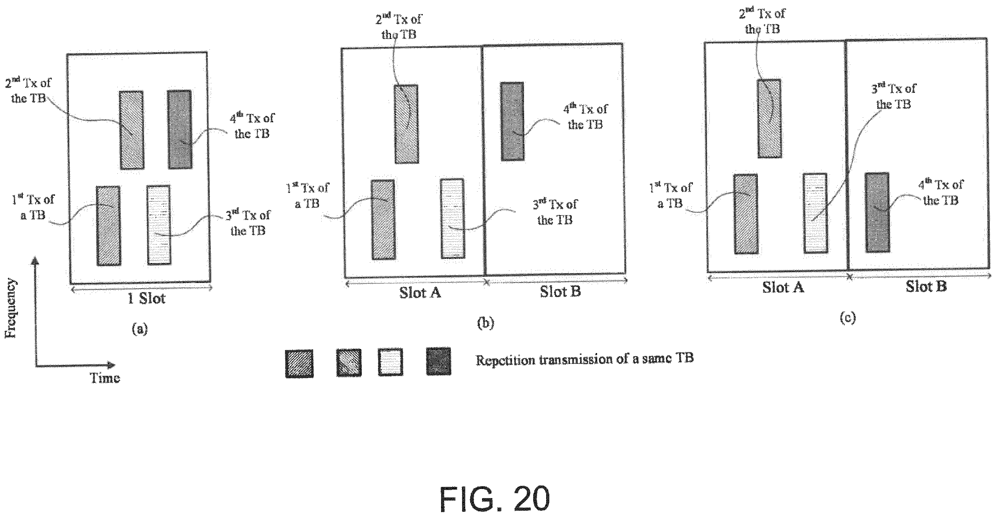

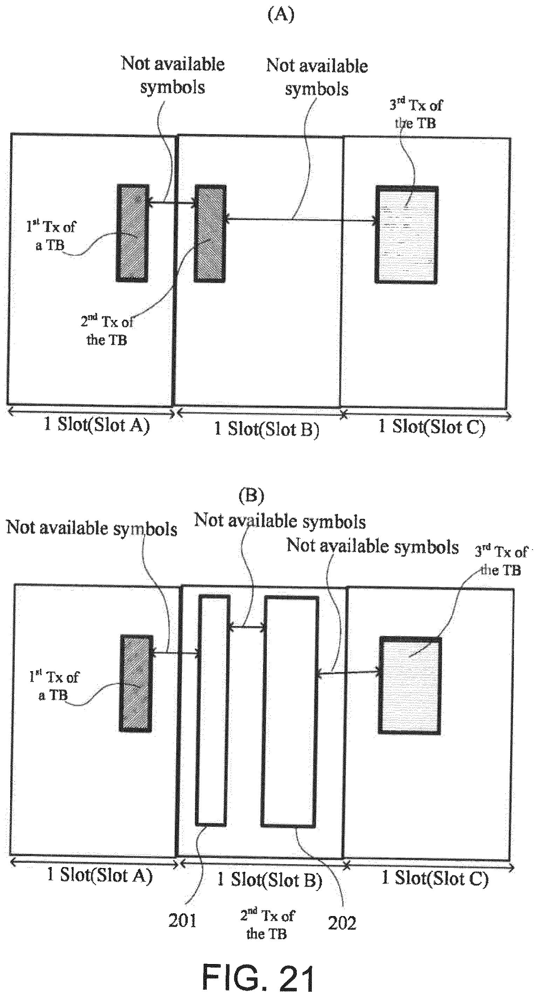

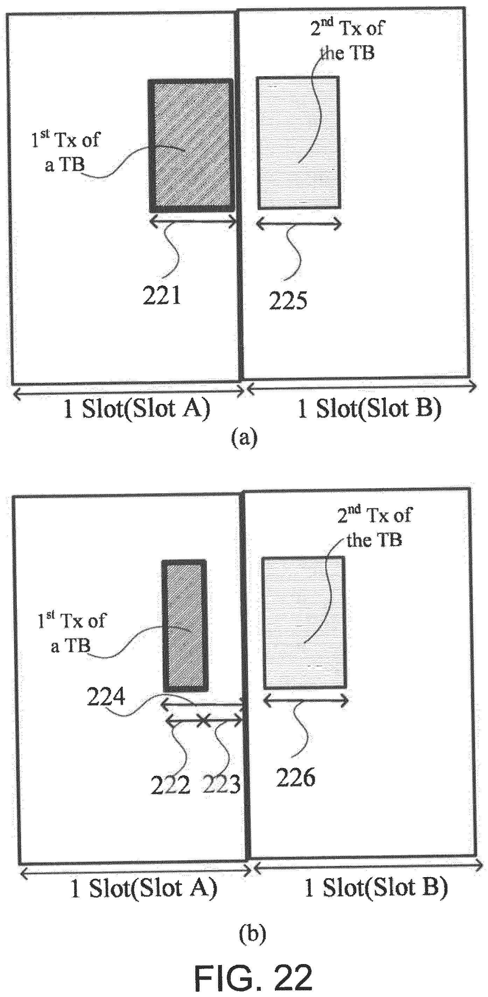

FIG. 18 is a diagram illustrating another example of determination of the number of repetitive transmissions and frequency hopping according to an embodiment of the present invention. FIG. 19 is a diagram illustrating another example of determination of the number of repetitive transmissions and frequency hopping according to an embodiment of the present invention. FIG. 20 is a diagram illustrating another example of the number of repetitive transmissions and frequency hopping according to an embodiment of the present invention. FIG. 21 is a diagram illustrating an example of slot aggregation transmission (second aggregation transmission) according to an embodiment of the present invention. Details of FIGs. 18-21 will be described later. FIG. 22 is a diagram illustrating an example of the number of symbols used to determine a transport block size according to an embodiment of the present invention.

In FIG. 22, the first number of symbols may be the number of symbols L given based on the SLIV indicated by the 'Time domain resource assignment' field included in the DCI that schedules a transport block. In other words, in FIGs. 22(a) and 22(b), the number of symbols corresponding to each of 221, 225, 224, and 226 is the first number of symbols. The number of symbols used for the first PUSCH transmission (first repetitive transmission of the transport block) is the second number of symbols. In FIG. 22(a), the symbol corresponding to 221 may be an available symbol. The terminal apparatus 1 calculates the number of resource elements based on the first number of symbols and determines the transport block size for the first PUSCH.

Further, in FIG. 22(b), the symbol corresponding to 222 may be an available symbol. The symbol corresponding to 223 may be an unavailable symbol. That is, the terminal apparatus 1 cannot transmit the first PUSCH by using the symbol corresponding to 223. The number of symbols used for the first PUSCH transmission may be the number of symbols corresponds to 222. That is, the second number of symbols is given based on the first number of symbols and the number of available symbols. However, the terminal apparatus 1 calculates the number of resource elements based on the first number of symbols and determines the transport block size for the first PUSCH.

N^{PRB}_{DMRS} is the number of DMRS resource elements, including the overhead of DMRS CDM group(s) without data, per PRB within the predetermined number of symbols mentioned above.

N^{PRB}ₒₕ is the overhead configured by a higher layer parameter xOverhead included in PUSCH-ServingCellConfig configured from the base station apparatus 3. The value of N^{PRB}ₒₕ may be set to any of 0, 6, 12, or 18 by xOverhead. The value of N^{PRB}ₒₕ may be a value corresponding to one slot. The number of symbols used to determine the transport block size is N'_{RE} that is calculated, for instance based on N'_{RE} = N^{RB}_{SC} * N^{sh}_{symb} - N^{PRB}_{DMRS} - Nₛₗₒₜₛ * N^{PRB}ₒₕ (Equation 6).

As described above, Nₛₗₒₜₛ may be the number of slots in which the transport block is repeatedly transmitted. That is, the number of overheads may be given based on the number of slots corresponding to the symbols used to determine the transport block size and/or the higher layer parameter xOverhead. Further, when the number of symbols corresponding to the total repetitive transmissions of the transport block in one or more slots is used to determine the transport block size, the terminal apparatus 1 may calculate N'_{RE} based on N'_{RE} = N^{RB}_{SC} * N^{sh}_{symb} - N^{PRB}_{DMRS} - N^{PRB}ₒₕ (Equation 2). That is, the number of overheads may be configured from a higher layer parameter regardless of the number of slots corresponding to the symbols used to determine the transport block size. When N^{PRB}ₒₕ (xOverhead) is not configured, the terminal apparatus 1 may assume that N^{PRB}ₒₕ is set to 0.

Further, the terminal apparatus 1 may assume that N^{PRB}ₒₕ is set to 0 before PUSCH-ServingCellConfig is configured for the terminal apparatus 1. Further, for the PUSCH and/or PUSCH retransmission scheduled by an RAR UL grant, the terminal apparatus 1 may assume that N^{PRB}ₒₕ is set to 0 when calculating N'_{RE}. Specifically, in a contention based random access procedure, the terminal apparatus 1 may assume that N^{PRB}ₒₕ is set to 0 for Msg3 PUSCH transmission (and/or Msg3 PUSCH retransmission). In the contention based random access procedure, the PUSCH scheduled by the RAR UL grant may be referred to as Msg3 PUSCH. In the contention based random access procedure, the scheduled PUSCH retransmission (Msg3 PUSCH retransmission) may be scheduled by DCI format 0_0 attached with a CRC scrambled by a TC-RNTI. Further, in a non-contention based random access procedure, for the PUSCH scheduled by an RAR UL grant (and/or the scheduled PUSCH retransmission), the terminal apparatus 1 may assume that N^{PRB}ₒₕ is set to 0 when calculating N'_{RE}. Further, in the non-contention based random access procedure, for the PUSCH scheduled by an RAR UL grant (and/or the scheduled PUSCH retransmission), the terminal apparatus 1 may assume that N^{PRB}ₒₕ is set to a value indicated by xOverhead when calculating N'_{RE}. In the non-contention based random access procedure, the scheduled PUSCH retransmission may be scheduled by DCI format 0_0 (or DCI format 0_1) attached with a CRC scrambled by a C-RNTI (or an MCS-C-RNTI).

Similarly, the terminal apparatus 1 may calculate N'_{RE} based on N'_{RE} = N^{RB}_{SC} * N^{sh}_{symb} - N^{PRB}_{DMRS} - N^{PRB}ₒₕ (Equation 2) in order to determine the transport block size for the PDSCH. Here, the value of N^{PRB}ₒₕ may be set to any of 0, 6, 12, or 18 by a higher layer parameter xOverhead included in PDSCH-ServingCellconfig. When N^{PRB}ₒₕ (xOverhead) is not configured, the terminal apparatus 1 may assume that N^{PRB}ₒₕ is set to 0. Further, the terminal apparatus 1 may assume that N^{PRB}ₒₕ is set to 0 before PDSCH-ServingCellconfig is configured for the terminal apparatus 1. However, when the PDSCH is scheduled by the PDCCH with a CRC scrambled by a certain RNTI, the terminal apparatus 1 may assume that N^{PRB}ₒₕ is set to 0 when calculating N'_{RE}. The RNTI may be an SI-RNTI, an RA-RNTI, a TC-RNTI, and/or a P-RNTI. However, when the PDSCH is scheduled by the PDCCH with the CRC scrambled by the RNTI, the terminal apparatus 1 may assume that N^{PRB}ₒₕ is set to 0 regardless of the presence or absence of the higher layer parameter xOverhead and/or the value to which xOverhead is configured. In this manner, a common transport block size can be determined for the PDSCH scheduled by the PDCCH with the CRC scrambled by the RNTI between the terminal apparatus 1 and the base station apparatus 3.

Next, the terminal apparatus 1 may determine the total number NRE of the resource elements. The terminal apparatus 1 may calculate NRE based on NRE = min(156, N'_{RE}) * n_{PRB} (Equation 3). n_{PRB} is the total number of allocated PRBs. n_{PRB} may be given by a frequency resource allocation field included in the DCI that schedules the PUSCH.

Hereinafter, a procedure for determining the number of repetitive transmissions and a procedure for frequency hopping in the present embodiment will be described.

The terminal apparatus 1 may determine Nₜₒₜₐₗ. Nₜₒₜₐₗ is the total number of times the same transport block scheduled by one uplink grant is repeatedly transmitted (total number of PUSCHs repeatedly transmitted). In other words, Nₜₒₜₐₗ is the number of one or more PUSCHs scheduled by one uplink grant. The terminal apparatus 1 may determine Nᵣₑₚ. Nᵣₑₚ is the number of times the same transport block is repeatedly transmitted within a slot (number of PUSCHs repeatedly transmitted). In other words, Nᵣₑₚ is the number of one or more PUSCHs configured in a slot for one or more PUSCHs scheduled by one uplink grant. The terminal apparatus 1 may determine Nₛₗₒₜₛ. Nₛₗₒₜₛ is the number of slots in which the same transport block scheduled by one uplink grant is repeatedly transmitted. In other words, Nₛₗₒₜₛ is the number of slots used for one or more PUSCHs scheduled by one uplink grant. The terminal apparatus 1 may derive Nₜₒₜₐₗ from Nᵣₑₚ and Nₛₗₒₜₛ. The terminal apparatus 1 may derive Nᵣₑₚ from Nₜₒₜₐₗ and Nₛₗₒₜₛ. The terminal apparatus 1 may derive Nₛₗₒₜₛ from Nᵣₑₚ and Nₜₒₜₐₗ. Nₛₗₒₜₛ may be 1 or 2. Nᵣₑₚ may be a different value between slots. Nᵣₑₚ may be the same value between slots.

A higher layer parameter frequencyHopping may be configured (provided) in the terminal apparatus 1. The higher layer parameter frequencyHopping may be set to either 'intraSlot' or 'interSlot'. When frequencyHopping is set to 'intraSlot', the terminal apparatus 1 may perform PUSCH transmission with intra-slot frequency hopping. That is, the fact that the intra-slot frequency hopping is set in the terminal apparatus 1 may mean that frequencyHopping is set to 'intraSlot' and that a value of 'Frequency hopping flag' field included in the DCI that schedules the PUSCH is set to 1. When frequencyHopping is set to 'interSlot', the terminal apparatus 1 may perform PUSCH transmission with inter-slot frequency hopping. That is, the fact that the inter-slot frequency hopping is set in the terminal apparatus 1 may mean that frequencyHopping is set to 'interSlot' and that a value of 'Frequency hopping flag' field included in the DCI that schedules the PUSCH is set to 1. Further, when the base station apparatus 3 does not transmit frequencyHopping to the terminal apparatus 1, the terminal apparatus 1 may perform PUSCH transmission without frequency hopping. That is, the fact that the frequency hopping is not configured in the terminal apparatus 1 may include the fact that frequencyHopping is not transmitted. Further, the fact that the frequency hopping is not configured in the terminal apparatus 1 may include the fact that a value of 'Frequency hopping flag' field included in the DCI that schedules the PUSCH is set to 0 even if frequencyHopping is transmitted.

Detail of FIG. 8 is described as follows. FIG. 8(a) is an example of PUSCH transmission without frequency hopping. FIG. 8(b) is an example of PUSCH transmission with intra-slot frequency hopping. FIG. 8(c) is an example of PUSCH transmission with inter-slot frequency hopping. FIG. 8 may be applied to slot aggregation transmission. FIG. 8 may be applied to mini-slot aggregation transmission in which the number of repetitive transmissions is 1 within one slot.

In FIG. 8 (b), the PUSCH transmission with intra-slot frequency hopping includes a first frequency hop (first frequency unit) and a second frequency hop (second frequency unit) in a slot. The number of symbols of the first frequency hop may be given by Floor(N^{PUSCH,s}_{symb}/2). The number of symbols of the second frequency hop may be given by N^{PUSCH,s}_{symb} - Floor(N^{PUSCH,s}_{symb}/2). N^{PUSCH,s}_{symb} is the length of one PUSCH transmission in an OFDM symbol within one slot. In other words, N^{PUSCH,s}_{symb} may be the number of OFDM symbols used for one scheduled PUSCH in one slot. The values of N^{PUSCH,s}_{symb} may be indicated by a field included in a DCI format or an RAR UL grant. N^{PUSCH,s}_{symb} may be the number of consecutively allocated symbols obtained based on the 'Time domain resource assignment' field included in an uplink grant that schedules the transmission of a transport block. The resource block difference RB_{offset} between the starting RB of the first frequency hop and the starting RB of the first frequency hop may be referred to as a resource block frequency offset. That is, RB_{offset} is an RB frequency offset between two frequency hops. Also, RB_{offset} may be referred to as a frequency offset for the second frequency hop.

For example, the starting RB of the first frequency hop is referred to as RBₛₜₐᵣₜ. The starting RB of the second frequency hop may be given by (RBₛₜₐᵣₜ + RB_{offset}) mod N^{size}_{BWP} (Equation 5). RBₛₜₐᵣₜ may be given by a frequency resource allocation field included in the DCI that schedules the PUSCH. N^{size}_{BWP} is the size of an activated BWP (the number of physical resource blocks). The function (A) mod (B) divides A and B and outputs an indivisible remainder number. The value of the frequency offset RB_{offset} is configured by a higher layer parameter frequencyHoppingOffsetLists included in PUSCH-Config. The higher layer parameter frequencyHoppingOffsetLists is used to indicate a set of frequency offset (frequency hopping offset) values when frequency hopping is applied. In FIG. 8 (b), intra-slot frequency hopping may be applied to single-slot PUSCH transmission and/or multi-slot (slot aggregation) PUSCH transmission.

In FIG. 8 (c), inter-slot frequency hopping may be applied to multi-slot PUSCH transmission. RB_{offset} is an RB frequency offset between two frequency hops. The starting RB of the PUSCH transmitted in a slot may be determined based on the slot number n^{u}ₛ. When n^{u}ₛ mod 2 is 0, the starting RB of the PUSCH within the slot is RBₛₜₐᵣₜ. When n^{u}ₛ mod 2 is 1, the starting RB of the PUSCH within the slot may be given by (RBₛₜₐᵣₜ+RB_{offset}) mod N^{size}_{BWP} (Equation 5). RBₛₜₐᵣₜ may be given by a frequency resource allocation field included in the DCI that schedules the PUSCH. In FIG. 8(c), the terminal apparatus 1 repeatedly transmits the same transport block in two consecutive slots.

Intra-slot frequency hopping may be applied to single-slot transmission or slot aggregation transmission. Inter-slot frequency hopping may be applied to slot aggregation transmission.

Detail of FIG. 9 is described as follows. FIG. 9(a) is an example of PUSCH transmission without frequency hopping. FIG. 9(b) is an example of PUSCH transmission with intra-slot frequency hopping. FIG. 9(c) is another example of PUSCH transmission with intra-slot frequency hopping. FIG. 9(d) is an example of PUSCH transmission with inter-slot frequency hopping. FIG. 9 may be applied to slot aggregation transmission. The frequency hopping as shown in FIG. 9 may be applied to mini-slot aggregation transmission. In addition, the frequency hopping as shown in FIG. 9 may be applied to mini-slot aggregation transmission in which the number of repetitive transmissions is greater than 1 within one slot.

FIG. 9(a) illustrates a case that frequency hopping is not configured, slot aggregation is not configured, or the number of slot aggregation transmissions is 1, and the number of mini-slot aggregation transmissions is 4. At this time, Nᵣₑₚ=4, Nₜₒₜₐₗ=1, and Nₛₗₒₜₛ=1.

When frequencyHopping is set to 'intraSlot', the mini-slot aggregation transmission within a slot includes a first frequency hop and a second frequency hop in the slot. The number of repetitive transmissions included in the first frequency hop may be given by Floor(Nᵣₑₚ/2). The number of repetitive transmissions included in the second frequency hop may be given by Nᵣₑₚ - Floor(Nᵣₑₚ/2). Nᵣₑₚ is the number of times the same transport block is repeatedly transmitted within a slot. Further, the resource block difference RB_{offset} between the starting RB of the first frequency hop and the starting RB of the first frequency hop may be referred to as a resource block frequency offset. That is, RB_{offset} is an RB frequency offset between the two frequency hops.

In addition, RB_{offset} may be referred to as a frequency offset for the second frequency hop. For example, the starting RB of the first frequency hop is referred to as RBₛₜₐᵣₜ. The starting RB of the second frequency hop may be given by (RBₛₜₐᵣₜ+RB_{offset}) mod N^{size}_{BWP} (Equation 5). RBₛₜₐᵣₜ may be given by a frequency resource allocation field. The function (A) mod (B) divides A and B and outputs an indivisible remainder number. When Nᵣₑₚ is 1, the number of frequency hops may be 1. In other words, when frequencyHopping is set to 'intraSlot', the terminal apparatus 1 may perform PUSCH transmission without intra-slot frequency hopping. The starting RB of the PUSCH transmission without intra-slot frequency hopping may be given by (RBₛₜₐᵣₜ+RB_{offset}) mod N^{size}_{BWP} (Equation 5). Further, even if Nᵣₑₚ is 1, the number of frequency hops may be regarded as 2. That is, the number of symbols of the first frequency hop may be 0. The number of symbols of the second frequency hop may be Nᵣₑₚ * N^{PUSCH,s}_{symb}.

In FIG. 9 (b), the total number of repetitive transmissions Nₜₒₜₐₗ of the transport block is 4. The total number of repetitive transmissions Nₜₒₜₐₗ may be signaled by a higher layer parameter and/or a field within the DCI that schedules the transport block transmission. In FIG. 9(b), Nₜₒₜₐₗ transport block repetitive transmissions (Nₜₒₜₐₗ PUSCH transmissions) are performed within one slot. In FIG. 9(b), Nᵣₑₚ=4 PUSCH transmissions may include Nᵣₑₚ=4 repetitive transmissions of the same transport block within one slot. The first frequency hop includes the first (Floor(Nᵣₑₚ/2) = 2 ) repetitive transmissions. The second frequency hop includes (Nᵣₑₚ - Floor(Nᵣₑₚ/2) = 2) repetitive transmissions. The first frequency hop includes symbols corresponding to the first two repetitive transmissions. The second frequency hop includes symbols corresponding to the last two repetitive transmissions. At this time, Nᵣₑₚ=4, Nₜₒₜₐₗ=1, and Nₛₗₒₜₛ=1.

In FIG. 9 (c), the total number of repetitive transmissions Nₜₒₜₐₗ of the transport block is 7. Nₜₒₜₐₗ may be signaled by a higher layer parameter and/or a field within the DCI that schedules the transport block transmission. In FIG. 9(c), Nₜₒₜₐₗ transport block repetitive transmissions are performed within two slots. Further, the terminal apparatus 1 may perform intra-slot frequency hopping for each of the slots in which the transport block is repeatedly transmitted.

In FIG. 9(c), the PUSCH transmissions may include Nᵣₑₚ=4 repetitive transmissions of the same transport block within the first one slot. The first frequency hop includes the first (Floor(Nᵣₑₚ/2)=2) repetitive transmissions. The second frequency hop includes (Nᵣₑₚ-Floor(Nᵣₑₚ/2) =2) repetitive transmissions. The first frequency hop includes symbols corresponding to the first two repetitive transmissions within the slot. The second frequency hop includes symbols corresponding to the last two repetitive transmissions within the slot. The PUSCH transmissions may include Nᵣₑₚ=3 repetitive transmissions of the same transport block within the next one slot. The first frequency hop includes the first (Floor(Nᵣₑₚ/2)=1) repetitive transmission. The second frequency hop includes (Nᵣₑₚ-Floor(Nᵣₑₚ/2)=2) repetitive transmissions. The first frequency hop includes a symbol corresponding to the first one repetitive transmission within the slot. The second frequency hop includes symbols corresponding to the last two repetitive transmissions within the slot. The symbol corresponding to one repetitive transmission in Slot A may be the same as or different from the symbol corresponding to one repetitive transmission in Slot B. The symbols corresponding to each of the repetitive transmissions in Slot A or Slot B may be the same or different. At this time, Nᵣₑₚ=4 in Slot A, Nᵣₑₚ=3 in Slot B, Nₜₒₜₐₗ=7, and Nₛₗₒₜₛ =2.

In FIG. 9 (d), the total number of repetitive transmissions Nₜₒₜₐₗ of the transport block is 7. Nₜₒₜₐₗ transport block repetitive transmissions are performed within two slots. Further, the terminal apparatus 1 may perform inter-slot frequency hopping in which the transport block is repeatedly transmitted. RB_{offset} is an RB frequency offset between two frequency hops. The starting RB of the PUSCH transmitted in a slot may be determined based on the slot number n^{u}ₛ. When n^{u}ₛ mod 2 is 0, the starting RB of the PUSCH within the slot is RBₛₜₐᵣₜ. When n^{u}ₛ mod 2 is 1, the starting RB of the PUSCH within the slot may be given by (RBₛₜₐᵣₜ+RB_{offset}) mod N^{size}_{BWP} (Equation 5). RBₛₜₐᵣₜ may be given by a frequency resource allocation field included in the DCI that schedules the PUSCH. At this time, Nᵣₑₚ=4 in Slot A, Nᵣₑₚ=3 in Slot B, Nₜₒₜₐₗ=7, and Nₛₗₒₜₛ=2.

In FIG. 9(d), for example, when the signaled Nₜₒₜₐₗ is 4, the terminal apparatus 1 perform the total number of repetitive transmissions in one slot (Slot A). In other words, in Slot B, the terminal apparatus 1 may not perform the repetitive transmission of the same transport block. In this case, the terminal apparatus 1 may consider that the inter-slot frequency hopping is not applied. That is, the terminal apparatus 1 may consider that frequency hopping is not configured and perform PUSCH transmission without the frequency hopping. That is, RBₛₜₐᵣₜ transmitted within the slot may be given, not based on a slot number, by a frequency resource allocation field included in the DCI. In addition, in this case, the terminal apparatus 1 may consider that the intra-slot frequency hopping is applied and perform the intra-slot frequency hopping as shown in FIG. 9(b). At this time, Nᵣₑₚ=4 in Slot A, Nᵣₑₚ=0 in Slot B, Nₜₒₜₐₗ=4, and Nₛₗₒₜₛ=1.

Hereinafter, another example of the intra-slot frequency hopping in the present embodiment will be described.

The terminal apparatus 1 with the intra-slot frequency hopping configured may determine a first frequency hop and a second frequency hop based on the number of repetitive transmissions of the same transport block in one slot.

When the number of repetitive transmissions of the same transport block is 1 in one slot, the terminal apparatus 1 may determine the number of symbols of the first frequency hop as Floor(N^{PUSCH,s}_{symb}/2) and determine the number of symbols of the second frequency hop as N^{PUSCH,s}_{symb} - Floor(N^{PUSCH,s}_{symb}/2). That is, when the number of repetitive transmissions of the same transport block is 1 in one slot, the number of symbols of the first frequency hop may be given by Floor(N^{PUSCH,s}_{symb}/2), and the number of symbols of the second frequency hop is given by N^{PUSCH,s}_{symb} - Floor(N^{PUSCH,s}_{symb}/2). Here, N^{PUSCH,s}_{symb} may be the length of PUSCH transmission in an OFDM symbol within one slot. N^{PUSCH,s}_{symb} may be the number of consecutively allocated symbols obtained based on the 'Time domain resource assignment' field included in an uplink grant that schedules the transmission of a transport block. That is, N^{PUSCH,s}_{symb} may be the number of symbols corresponding to one repetitive transmission of the transport block in one slot.

In addition, in a case that the number of repetitive transmissions of the same transport block is more than 1 within one slot, the terminal apparatus 1 may determine the number of repetitive transmissions included in the first frequency hop as Floor(Nᵣₑₚ/2) and determine the number of repetitive transmissions included in the second frequency hop as Nᵣₑₚ - Floor(Nᵣₑₚ/2). Nᵣₑₚ may be the number of times the same transport block is repeatedly transmitted within a slot. That is, in a case that the number of repetitive transmissions of the same transport block is more than 1 within one slot, the number of repetitive transmissions included in the first frequency hop may be given by Floor(Nᵣₑₚ/2), and the number of repetitive transmissions included in the second frequency hop may be given by Nᵣₑₚ - Floor(Nᵣₑₚ/2). The number of symbols of the first frequency hop may be a symbol corresponding to the repetitive transmission included in the first frequency hop. The number of symbols of the second frequency hop may be a symbol corresponding to the repetitive transmission included in the second frequency hop. For example, the number of symbols of the first frequency hop may be given by Floor(Nᵣₑₚ/2) * L. The number of symbols of the second frequency hop may be given by (Nᵣₑₚ - Floor(Nᵣₑₚ/2)) * L. Here, L may be the number of consecutively allocated symbols obtained based on the 'Time domain resource assignment' field included in an uplink grant that schedules the repetitive transmission of a transport block. That is, L may be the number of symbols corresponding to one repetitive transmission of the transport block in one slot. That is, L may be N^{PUSCH,s}_{symb} as described above. That is, when the number of repetitive transmissions of the same transport block within one slot is 1, the number of frequency hops in the slot may be 2.

In addition, when the number of repetitive transmissions of the same transport block in one slot is more than 1, the terminal apparatus 1 with the intra-slot frequency hopping configured may determine the number of frequency hops in the slot as Nᵣₑₚ. Nᵣₑₚ may be the number of times the same transport block is repeatedly transmitted within a slot. That is, when the number of repetitive transmissions of the same transport block within one slot is more than 1, the number of frequency hops in the slot may be the value of Nᵣₑₚ. The first frequency hop may correspond to the first repetitive transmission of the transport block. The second frequency hop may correspond to the second repetitive transmission of the transport block. The ith frequency hop may correspond to the ith repetitive transmission of the transport block. The Nᵣₑₚth frequency hop may correspond to the Nᵣₑₚth repetitive transmission of the transport block. In other words, i takes a value from 1 to Nᵣₑₚ. Further, i takes a value from 1 to Nₜₒₜₐₗ. The starting RB of the ((i - 1) mod 2 = 0)th frequency hop may be RBₛₜₐᵣₜ. The starting RB of the ((i - 1) mod 2 = 1)th frequency hop may be given by (RBₛₜₐᵣₜ + RB_{offset}) mod N^{size}_{BWP} (Equation 5). As described above, RBₛₜₐᵣₜ may be given by a frequency resource allocation field included in the DCI that schedules the PUSCH. RB_{offset} is an RB frequency offset, which is indicated by a higher layer parameter, between two frequency hops. That is, RB_{offset} is an RB frequency offset between the first frequency hop and the second frequency hop. That is, RB_{offset} is an RB frequency offset between the ith frequency hop and (i+1)th frequency hop.

Detail of FIG. 20 is described as follows. The frequency hopping as shown in FIG. 20 may be applied to mini-slot aggregation transmission. FIG. 20 is an example of PUSCH transmission to which intra-slot mini-slot transmission with intra-slot frequency hopping is applied. Further, the frequency hopping as shown in FIG. 20 may be applied to mini-slot aggregation transmission in which the number of repetitive transmissions is greater than 1 within one slot.

In FIG. 20(a), Nₜₒₜₐₗ=4, Nᵣₑₚ=4, and Nₛₗₒₜₛ=1. In FIG. 20(a), the terminal apparatus 1 may perform intra-slot frequency hopping in which the transport block is repeatedly transmitted. The first frequency hop may correspond to the first repetitive transmission of the transport block. The second frequency hop may correspond to the second repetitive transmission of the transport block. The third frequency hop may correspond to the third repetitive transmission of the transport block. The fourth frequency hop may correspond to the fourth repetitive transmission of the transport block. The starting RB of the first frequency hop and the third frequency hop may be RBₛₜₐᵣₜ. The starting RB of the second frequency hop and the fourth frequency hop may be given by Equation 5 as described above.

In FIG. 20(b), Nᵣₑₚ=3 in Slot A, Nᵣₑₚ=1 in Slot B, Nₜₒₜₐₗ=4, and Nₛₗₒₜₛ=2. In FIG. 20(b), the terminal apparatus 1 may perform intra-slot frequency hopping in which the transport block is repeatedly transmitted. When the ith repetitive transmission of the transport block satisfies ((i - 1) mod 2=0), the starting RB of the ith repetitive transmission of the transport block may be RBₛₜₐᵣₜ. When the ith repetitive transmission of the transport block satisfies ((i - 1) mod 2=1), the starting RB of the ith repetitive transmission of the transport block may be given by (RBₛₜₐᵣₜ+RB_{offset}) mod N^{size}_{BWP} (Equation 5). i takes a value from 1 to Nₜₒₜₐₗ. In FIG. 20(b), the starting RB of the first and third repetitive transmissions of the transport block may be RBₛₜₐᵣₜ. The starting RB of the second and fourth repetitive transmissions of the transport block may be given by Equation 5 as described above. That is, in FIG. 20(b), the starting RB of the repetitive transmission of the transport block may be given based on the order of the number of repetitive transmissions of the same transport block regardless of the slot in which the repetitive transmission is performed.

In FIG. 20(c), Nᵣₑₚ=3 in Slot A, Nᵣₑₚ=1 in Slot B, Nₜₒₜₐₗ=4, and Nₛₗₒₜₛ=2. In Slot A, when the ith repetitive transmission of the transport block satisfies ((i - 1) mod 2 = 0), the starting RB of the ith repetitive transmission of the transport block may be RBₛₜₐᵣₜ. When the ith repetitive transmission of the transport block satisfies ((i - 1) mod 2 = 1), the starting RB of the ith repetitive transmission of the transport block may be given by (RBₛₜₐᵣₜ+RB_{offset}) mod N^{size}_{BWP} (Equation 5). Here, i takes a value from 1 to Nᵣₑₚ in Slot A. In Slot B, when the ith repetitive transmission of the transport block satisfies ((i - 1) mod 2=0), the starting RB of the ith repetitive transmission of the transport block may be RBₛₜₐᵣₜ. When the ith repetitive transmission of the transport block satisfies ((i - 1) mod 2 = 1), the starting RB of the ith repetitive transmission of the transport block may be given by (RBₛₜₐᵣₜ+RB_{offset}) mod N^{size}_{BWP} (Equation 5). Here, i takes a value from 1 to Nᵣₑₚ in Slot B. In other words, in FIG. 20(c), the starting RB of the first, third and fourth repetitive transmissions of the transport block may be RBₛₜₐᵣₜ. The starting RB of the second repetitive transmission of the transport block may be given by Equation 5 as described above. That is, in FIG. 20(c), the starting RB of the repetitive transmission of the transport block may be given based on the order of the number of repetitive transmissions of the same transport block within the slot in which the repetitive transmission is performed.

Detail of FIG. 18 is described as follows. In FIG. 18, Nₜₒₜₐₗ=2 is assumed. FIG. 18(a) is an example of PUSCH transmission to which intra-slot mini-slot transmission is applied without frequency hopping. FIG. 18(b) is an example of PUSCH transmission to which inter-slot mini-slot transmission is applied without frequency hopping. FIG. 18(c) is an example of PUSCH transmission to which intra-slot mini-slot transmission with intra-slot frequency hopping is applied. FIG. 18(d) is an example of PUSCH transmission to which inter-slot mini-slot transmission with inter-slot frequency hopping is applied. FIG. 18 may be applied to a case that a second aggregation transmission is configured. The frequency hopping as shown in FIG. 18 may be applied to mini-slot aggregation transmission. In addition, the frequency hopping as shown in FIG. 18 may be applied to mini-slot aggregation transmission in which the number of repetitive transmissions is greater than 1 within one slot.

In FIG. 18(a), Nᵣₑₚ=2, Nₜₒₜₐₗ=2, and Nₛₗₒₜₛ=1. For example, the terminal apparatus 1 may receive Nₜₒₜₐₗ from a higher layer parameter and/or a field within the DCI that schedules the transport block transmission. The terminal apparatus 1 may receive Nᵣₑₚ from a higher layer parameter and/or a field within the DCI that schedules the transport block transmission. The starting symbol S of the first PUSCH is given based on the PDCCH transmitted from the base station apparatus 3 to the terminal apparatus 1. The number of consecutively allocated symbols L of the first PUSCH is given based on the PDCCH transmitted from the base station apparatus 3 to the terminal apparatus 1. The starting symbol S of the second PUSCH may be the first available symbol after the first PUSCH. The starting symbol S of the second PUSCH may be the first symbol consecutive to the first PUSCH. The number of consecutively allocated symbols L of the second PUSCH is given based on the PDCCH transmitted from the base station apparatus 3 to the terminal apparatus 1.

However, the consecutively allocated symbols of the second PUSCH are symbols from the starting symbol S of the second PUSCH to the last symbol of the slot and do not span the next slot. Therefore, when L symbols from the starting symbol S of the second PUSCH exceeds the last symbol number of the slot, L is the number of symbols from the starting symbol S of the second PUSCH to the last symbol number of the slot. That is, the terminal apparatus 1 and the base station apparatus 3 may determine the number of symbols L of the second PUSCH based on one, a plurality or all of the starting symbol S given based on a PDCCH, the number of symbols L given based on the PDCCH, and the number of symbols in a slot (e.g., the number of available symbols). That is, it can be said that the mini-slot aggregation, the starting symbol extension, and the symbol number extension are applied to the second PUSCH. The terminal apparatus 1 and the base station apparatus 3 may determine Nₛₗₒₜₛ=1 based on one, a plurality or all of Nᵣₑₚ, Nₜₒₜₐₗ, the starting symbol S given based on a PDCCH, the number of symbols L given based on the PDCCH, and the number of symbols in a slot (e.g., the number of available symbols). As another manner, the terminal apparatus 1 may receive information indicating that Nₛₗₒₜₛ=1 from the base station apparatus 3.

In FIG. 18(b), Nᵣₑₚ=1 in Slot A, Nᵣₑₚ=1 in Slot B, Nₜₒₜₐₗ=2, and Nₛₗₒₜₛ=2. For example, the terminal apparatus 1 may receive Nₜₒₜₐₗ from a higher layer parameter and/or a field within the DCI that schedules the transport block transmission. The terminal apparatus 1 may receive Nᵣₑₚ from a higher layer parameter and/or a field within the DCI that schedules the transport block transmission. The starting symbol S of the first PUSCH is given based on a PDCCH transmitted from the base station apparatus 3 to the terminal apparatus 1. The number of consecutively allocated symbols L of the first PUSCH is given based on the PDCCH transmitted from the base station apparatus 3 to the terminal apparatus 1. However, the consecutively allocated symbols of the first PUSCH are symbols from the starting symbol S of the first PUSCH given based on the PDCCH to the last symbol of the slot and do not span the next slot. Therefore, when L symbols from the starting symbol S of the first PUSCH exceeds the last symbol number of the slot, L is the number of symbols from the starting symbol S of the first PUSCH to the last symbol number of the slot. That is, the terminal apparatus 1 and the base station apparatus 3 may determine the number of symbols L of the first PUSCH based on one, a plurality or all of the starting symbol S given based on a PDCCH, the number of symbols L given based on the PDCCH, and the number of symbols in a slot (e.g., the number of available symbols). In a case that the mini-slot aggregation is not applied, if the base station apparatus notifies the number of symbols L with a value that does not span slots, no special processing is required; however, in the case of FIG. 18 (b), since L given based on the PDCCH may be a value regarding two slots, the above processing is valid.

The starting symbol S of the second PUSCH may be the first available symbol in Slot B. The starting symbol S of the second PUSCH may be the first symbol consecutive to the first PUSCH. The number of consecutively allocated symbols L of the second PUSCH is given based on the PDCCH transmitted from the base station apparatus 3 to the terminal apparatus 1. However, the consecutively allocated symbols of the second PUSCH may be the number of remaining symbols used for the first PUSCH transmission. That is, the value obtained by subtracting the number of symbols L of the first PUSCH from the number L given based on the PDCCH may be used as the number of symbols L of the second PUSCH. That is, the terminal apparatus 1 and the base station apparatus 3 may determine the number of symbols L of the second PUSCH based on one, a plurality or all of the starting symbol S given based on a PDCCH, the number of symbols L given based on the PDCCH, the number of symbols in a slot, and the number of symbols used in the first PUSCH. That is, it can be said that the starting symbol extension and the symbol number extension are applied to the second PUSCH. The terminal apparatus 1 and the base station apparatus 3 may determine Nₛₗₒₜₛ=2 based on one, a plurality or all of Nᵣₑₚ, Nₜₒₜₐₗ, the starting symbol S given based on a PDCCH, the number of symbols L given based on the PDCCH, and the number of symbols in a slot (e.g., the number of available symbols). As another manner, the terminal apparatus 1 may receive information indicating that Nₛₗₒₜₛ=2 from the base station apparatus 3.

Since FIG. 18(b) shows Nᵣₑₚ=1 in Slot A and Nᵣₑₚ=1 in Slot B, it can also be considered as slot aggregation. That is, FIG. 18(b) may be a symbol allocation extension (starting symbol extension and/or symbol number extension) in the second aggregation.

FIG. 18 (c) applies intra-slot frequency hopping to FIG. 18 (a). Since Nᵣₑₚ=2, Nₜₒₜₐₗ=2, and Nₛₗₒₜₛ=1, the first frequency hop includes the first (Floor(Nᵣₑₚ/2)=1) repetitive transmission. The second frequency hop includes (Nᵣₑₚ - Floor(Nᵣₑₚ/2) = 1) repetitive transmission(s).

FIG. 18 (d) applies inter-slot frequency hopping to FIG. 18 (b). The terminal apparatus 1 and the base station apparatus 3 may determine whether to apply inter-slot frequency hopping or intra-slot frequency hopping based on Nₛₗₒₜₛ. For example, when Nₛₗₒₜ=1, intra-slot frequency hopping is applied, and when Nₛₗₒₜₛ=2, intra-slot frequency hopping is applied.

Detail of FIG. 19 is described as follows. In FIG. 19, Nₜₒₜₐₗ=4 is assumed. FIG. 19(a) is an example of PUSCH transmission to which intra-slot mini-slot transmission is applied without frequency hopping. FIG. 19(b) is an example of PUSCH transmission to which inter-slot mini-slot transmission is applied without frequency hopping. FIG. 19(c) is an example of PUSCH transmission to which intra-slot mini-slot transmission with intra-slot frequency hopping is applied. FIG. 19(d) is an example of PUSCH transmission to which inter-slot mini-slot transmission with inter-slot frequency hopping is applied. FIG. 19 may be applied to a case that a second aggregation transmission is configured. The frequency hopping as shown in FIG. 19 may be applied to mini-slot aggregation transmission. In addition, the frequency hopping as shown in FIG. 19 may be applied to mini-slot aggregation transmission in which the number of repetitive transmissions is greater than 1 within one slot.

In FIG. 19(a), Nᵣₑₚ=4, Nₜₒₜₐₗ=4, and Nₛₗₒₜₛ=1. For example, the terminal apparatus 1 may receive Nₜₒₜₐₗ from a higher layer parameter and/or a field within the DCI that schedules the transport block transmission. The terminal apparatus 1 may receive Nᵣₑₚ from a higher layer parameter and/or a field within the DCI that schedules the transport block transmission. The starting symbol S of the first PUSCH is given based on the PDCCH transmitted from the base station apparatus 3 to the terminal apparatus 1. The number of consecutively allocated symbols L of the first PUSCH is given based on the PDCCH transmitted from the base station apparatus 3 to the terminal apparatus 1. That is, the time domain resource of the first PUSCH (first repetitive transmission of the transport block) may be indicated by a field in the DCI that schedules the transport block transmission. The starting symbol S of the second PUSCH may be the first available symbol after the first PUSCH. The starting symbol S of the second PUSCH may be the first symbol consecutive to the first PUSCH. The number of consecutively allocated symbols L of the second PUSCH is given based on the PDCCH transmitted from the base station apparatus 3 to the terminal apparatus 1. Similarly, the starting symbol S of the Xth PUSCH may be the first available symbol after the X-1th PUSCH. The starting symbol S of the Xth PUSCH may be the first symbol consecutive to the X-1th PUSCH. The number of consecutively allocated symbols L of the Xth PUSCH is given based on the PDCCH transmitted from the base station apparatus 3 to the terminal apparatus 1.

However, the consecutively allocated symbols of the Xth PUSCH are symbols from the starting symbol S of the Xth PUSCH to the last symbol of the slot and do not span the next slot. Therefore, when L symbols from the starting symbol S of the Xth PUSCH exceeds the last symbol number of the slot, L is the number of symbols from the starting symbol S of the second PUSCH to the last symbol number of the slot. Further, the X+1th PUSCH transmission is performed in the next slot. Alternatively, the X+1th PUSCH transmission is not performed in the next slot. Whether the X+1th PUSCH transmission is performed may be determined based on Nₛₗₒₜₛ. For example, when Nₛₗₒₜₛ=1, the X+1th PUSCH transmission is not performed. When Nₛₗₒₜₛ=2, the X+1th PUSCH is performed in the next slot.

As another manner, whether the X+1th PUSCH transmission is performed may be determined based on Nᵣₑₚ. That is, the Nᵣₑₚ+1th PUSCH transmission is not performed. As another manner, whether the X+1th PUSCH transmission is performed may be determined based on Nₜₒₜₐₗ. That is, the Nₜₒₜₐₗ+1th PUSCH transmission is not performed. That is, the terminal apparatus 1 and the base station apparatus 3 may determine the number of symbols L of the Xth PUSCH based on one, a plurality or all of the starting symbol S given based on a PDCCH, the number of symbols L given based on the PDCCH, the number of symbols in a slot, Nₜₒₜₐₗ, Nᵣₑₚ, and Nₛₗₒₜₛ. Further, whether the X+1th PUSCH transmission is performed may be determined based on one, a plurality, or all of Nₜₒₜₐₗ, Nᵣₑₚ, and Nₛₗₒₜₛ. That is, it can be said that the mini-slot aggregation, the starting symbol extension, and the symbol number extension are applied to the PUSCH transmission shown in FIG. 19 (a). The terminal apparatus 1 and the base station apparatus 3 may determine Nₛₗₒₜₛ=1 based on one, a plurality or all of Nᵣₑₚ, Nₜₒₜₐₗ, the starting symbol S given based on a PDCCH, the number of symbols L given based on the PDCCH, and the number of symbols in a slot (e.g., the number of available symbols). As another manner, the terminal apparatus 1 may receive information indicating that Nₛₗₒₜₛ=1 from the base station apparatus 3.

In addition, in FIG. 19(a), the starting symbol S of the first transmission occasion is given based on a PDCCH transmitted from the base station apparatus 3 to the terminal apparatus 1. The number of consecutively allocated symbols L of the first transmission occasion is given based on the PDCCH transmitted from the base station apparatus 3 to the terminal apparatus 1. That is, the first transmission occasion is used for the first PUSCH transmission. The terminal apparatus 1 may transmit the first PUSCH to the base station apparatus 3 in the first transmission occasion. The first PUSCH is the first repetitive transmission of the transport block. When the PUSCH is transmitted once, the number of repetitive transmissions of the transport block may be incremented by one. That is, the Xth PUSCH is the Xth repetitive transmission of the repetitive transmissions of the transport block.

The starting symbol S of the second transmission occasion may be the first available symbol after the first transmission occasion. The starting symbol S of the second transmission occasion may be the first symbol consecutive to the first transmission occasion. The starting symbol S of the second transmission occasion may be the first available symbol after the closest transmitted PUSCH. The starting symbol S of the second transmission occasion may be the first available symbol consecutive to the closest transmitted PUSCH. In the second transmission occasion, the closest transmitted PUSCH is the first PUSCH. The number of consecutively allocated symbols L of the second transmission occasion is given based on the PDCCH transmitted from the base station apparatus 3 to the terminal apparatus 1. The second PUSCH transmitted in the second transmission occasion is the second repetitive transmission of the transport block.

Similarly, the starting symbol S of the Xth transmission occasion may be the first available symbol after the X-1th transmission occasion. The starting symbol S of the Xth transmission occasion may be the first symbol consecutive to the X-1th transmission occasion. The starting symbol S of the Xth transmission occasion may be the first available symbol after the closest transmitted PUSCH. The starting symbol S of the Xth transmission occasion may be the first available symbol consecutive to the closest transmitted PUSCH. The number of consecutively allocated symbols L of the Xth transmission occasion is given based on the PDCCH transmitted from the base station apparatus 3 to the terminal apparatus 1. A symbol of the Xth transmission occasion may be an available symbol. In addition, a part or all of symbols of the Xth transmission occasion may not be an available symbol/symbols. That is, all the symbols included in the transmission occasion cannot be used for the PUSCH transmission. At this time, if the number of consecutively available symbols (maximum number) in the transmission occasion is equal to or greater than a first value, the terminal apparatus 1 may transmit the PUSCH (e.g., the Xth repetitive transmission of the transport block) to the base station apparatus 3 with the consecutively available symbols. If the number of consecutively available symbols (maximum number) in the transmission occasion is less than the first value, the terminal apparatus 1 may not transmit the PUSCH (e.g., the Xth repetitive transmission of the transport block) to the base station apparatus 3 in the transmission occasion.

Further, when the number of consecutively available symbols in the Xth transmission occasion is less than the first value, the terminal apparatus 1 may perform repetitive transmission of the transport block (e.g., the X-1th repetitive transmission of the transport block) by using available symbols in the Xth transmission occasion consecutive to the X-1th transmission occasion and using symbols of the X-1th transmission occasion. That is, in this case, the symbol used for the repetitive transmission of the transport block may be extended. Here, the first value may be a predefined value. For example, the first value may be one symbol or two symbols. In the uplink wireless communication between the terminal apparatus 1 and the base station apparatus 3, the first value may be two symbols when Discrete Fourier Transform Spread OFDM (DFT-S-OFDM) is used. In the uplink wireless communication between the terminal apparatus 1 and the base station apparatus 3, the first value may be one symbol when Orthogonal Frequency Division Multiplexing (OFDM) including Cyclic Prefix (CP) is used. Further, the first value may be indicated by a higher layer parameter. The first value may be determined at least based on the symbol L given based on the PDCCH. For example, the first value may be given by ceiling(L * F). F may be a value less than 1. Further, the first value may be given by (L - T). T may be a value equal to 1 or greater than 1. The value of F or T may be indicated by a higher layer parameter. The value of F or T may correspond to a different value for each different L.

Also, in a case that the number of consecutively available symbols (maximum number) in the Xth transmission occasion is greater than a first value, the terminal apparatus 1 may transmit the repetitive transmission of the transport block (e.g., the Xth repetitive transmission of the transport block) to the base station apparatus 3 with the consecutively available symbols. If the number of consecutively available symbols (maximum number) in the Xth transmission occasion is equal to or the first value or less than the first value, the terminal apparatus 1 may not transmit the repetitive transmission of the transport block (e.g., the Xth repetitive transmission of the transport block) to the base station apparatus 3 in the transmission occasion. Further, when the number of consecutively available symbols in the Xth transmission occasion is less than the first value, the terminal apparatus 1 may perform repetitive transmission of the transport block (e.g., the X-1th repetitive transmission of the transport block) by using available symbols in the Xth transmission occasion consecutive to the X-1th transmission occasion and using symbols of the X-1th transmission occasion. That is, in this case, the symbol used for the X-1th repetitive transmission of the transport block may be extended.

However, the consecutively allocated symbols of the Xth transmission occasion are symbols from the starting symbol S of the Xth transmission occasion to the last symbol of the slot and do not span the next slot. Therefore, the starting symbol S to L symbol of the Xth transmission occasion is the number of symbols up to the last symbol number of the slot. Further, the X+1th transmission occasion may be in the next slot. At this time, the starting symbol S of the X+1th transmission occasion may be the first available symbol of the slot. The starting symbol S of the X+1th transmission occasion may be the first symbol of the slot. The number of consecutively allocated symbols L of the X+1th transmission occasion is given based on the PDCCH transmitted from the base station apparatus 3 to the terminal apparatus 1.

The method for determining the starting symbol and the number of symbols of each PUSCH may also be used in slot aggregation. Detail of FIG. 21 is described as follows. FIG. 21 may be used in mini-slot aggregation transmission. For example, FIG. 21 shows a case that Nᵣₑₚ=1, Nₜₒₜₐₗ=3, and Nₛₗₒₜₛ=3. The starting symbol S of the first transmission occasion is given based on a PDCCH transmitted from the base station apparatus 3 to the terminal apparatus 1. The number of consecutively allocated symbols L of the first transmission occasion (slot) is given based on the PDCCH transmitted from the base station apparatus 3 to the terminal apparatus 1. That is, the first transmission occasion (slot) is used for the first PUSCH transmission. The terminal apparatus 1 may transmit the first PUSCH to the base station apparatus 3 in the first transmission occasion (slot). The first PUSCH is the first repetitive transmission of the transport block. When the PUSCH is transmitted once, the number of repetitive transmissions of the transport block may be incremented by one. That is, the Xth PUSCH is the Xth repetitive transmission of the repetitive transmissions of the transport block. The starting symbol S of the second transmission occasion (slot) may start from the first available symbol of the slot next to the first transmission occasion (slot). The number of consecutively allocated symbols L of the second transmission occasion (slot) is given based on the PDCCH transmitted from the base station apparatus 3 to the terminal apparatus 1.

The second PUSCH transmitted in the second transmission occasion is the second repetitive transmission of the transport block. Similarly, the starting symbol S of the Xth transmission occasion (slot) may start from the first available symbol of the slot next to the X-1th transmission occasion (slot). The number of consecutively allocated symbols L of the Xth transmission occasion (slot) is given based on the PDCCH transmitted from the base station apparatus 3 to the terminal apparatus 1. A symbol of the Xth transmission occasion (slot) may be an available symbol. Further, a part or all of symbols of the Xth transmission occasion (slot) may not be an available symbol or symbols. That is, a part or all of the symbols included in the transmission occasion (slot) cannot be used for the PUSCH transmission.

At this time, if the number of consecutively available symbols (maximum number) in the transmission occasion (slot) is equal to or greater than a first value, the terminal apparatus 1 may transmit the PUSCH to the base station apparatus 3 with the consecutively available symbols. If the number of consecutively available symbols (maximum number) in the transmission occasion (slot) is less than the first value, the terminal apparatus 1 may not transmit the PUSCH to the base station apparatus 3 in the transmission occasion (slot). Here, the first value may be indicated by a higher layer parameter. The first value may be determined at least based on the symbol L given based on the PDCCH. For example, the first value may be given by ceiling(L * F). F may be a value less than 1. Further, the first value may be given by (L - T). T may be a value equal to 1 or greater than 1. The value of F or T may be indicated by a higher layer parameter. The value of F or T may correspond to a different value for each different L.

As mentioned above, the terminal apparatus 1 determines whether to transmit the PUSCH in a certain transmission occasion. For example, the terminal apparatus 1 determines whether to transmit the Xth PUSCH in the Xth transmission occasion. If the terminal apparatus 1 determines that the Xth PUSCH is not transmitted in the Xth transmission occasion, it may determine whether to transmit the Xth PUSCH in the X+1th transmission occasion. When the number of transmission occasions reaches a second value, the terminal apparatus 1 may not transmit the PUSCH even if the number of the PUSCH transmissions (the number of repetitive transmission of the transport block) does not reach Nₜₒₜₐₗ. The second value may be a predefined value. Further, the second value may be indicated by a higher layer parameter. The second value may be determined at least based on the value of Nₜₒₜₐₗ. For example, the second value may be given by ceiling(Nₜₒₜₐₗ * T). Further, the second value may be given by (Nₜₒₜₐₗ + T). T may be a value equal to 1 or greater than 1. The value of T may be indicated by a higher layer parameter. The value of T may correspond to a different value for each different Nₜₒₜₐₗ.

Further, the slot in which the slot aggregation transmission is performed may include bursts of two or more than two available symbols (uplink transmission period or UL period). For example, in FIG. 21(B), Slot B has a burst 201 of available symbols and a burst 202 of available symbols. The burst of available symbols includes consecutively available symbols in the slot. There are unavailable symbols between the burst 201 and the burst 202. The terminal apparatus 1 may transmit the PUSCH (second) to the base station apparatus 3 in Slot B by using either the burst 201 or the burst 202. The number of symbols included in the burst 202 is greater than the number of symbols included in the burst 201. The terminal apparatus 1 may transmit the PUSCH to the base station apparatus 3 by using the burst having the maximum length (maximum number of available symbols) among a plurality of bursts. That is, the terminal apparatus 1 may transmit the PUSCH to the base station apparatus 3 by the burst 202.

Further, the terminal apparatus 1 may transmit the PUSCH to the base station apparatus 3 by using the earliest burst among the plurality of bursts. That is, the terminal apparatus 1 may transmit the PUSCH to the base station apparatus 3 by the burst 201. Further, the terminal apparatus 1 may transmit the PUSCH to the base station apparatus 3 by using the earliest burst among the plurality of bursts having the same length. That is, when the number of symbols included in the burst 201 and the number of symbols included in the burst 202 are the same, the terminal apparatus 1 may transmit the PUSCH to the base station apparatus 3 by the burst 201. Further, the terminal apparatus 1 may transmit the PUSCH to the base station apparatus 3 by using the earliest burst, which is equal to or larger than the first value as described, among the plurality of bursts. Further, the terminal apparatus 1 may perform repetitive transmission of the transport block by each of the plurality of bursts. That is, the terminal apparatus 1 may transmit the PUSCH (second repetitive transmission of the transport block) to the base station apparatus 3 by the burst 201.

The terminal apparatus 1 may transmit the PUSCH (third repetitive transmission of the transport block) to the base station apparatus 3 by the burst 202. That is, the terminal apparatus 1 may perform more than one repetitive transmission of the transport block within a slot having more than one burst. As a result, the terminal apparatus 1 and the base station apparatus 3 can efficiently use the resources in the slot having more than one burst. The number of consecutively available symbols in a burst used for repetitive transmission of the transport block may be equal to or greater than the first value. The starting symbol S of the PUSCH transmitted in Slot B may be the first symbol (the first available symbol) of the burst used for transmission. The number of consecutively allocated symbols of the PUSCH transmitted in Slot B may be the number of consecutively allocated symbols L given based on the PDCCH transmitted from the base station apparatus 3 to the terminal apparatus 1. Therefore, when L symbols from the first symbol of the burst used for transmission exceeds the last symbol number of the burst, L is the number of symbols from the first symbol of the burst used for transmission to the last symbol number of the burst.

Alternatively, the number of consecutively allocated symbols of the PUSCH transmitted in Slot B may be the length of the burst used for transmission. That is, the number of consecutively allocated symbols of the PUSCH transmitted in Slot B is for symbols from the first symbol of the burst used for transmission to the last symbol of the burst, and those symbols do not span the burst. The terminal apparatus 1 and the base station apparatus 3 may determine the number of symbols L of the transmitted PUSCH based on one, a plurality or all of the starting symbol S given based on a PDCCH, the number of symbols L given based on the PDCCH, the number of symbols in a slot, the number of bursts, the number of symbols in a burst, Nₜₒₜₐₗ, Nᵣₑₚ, and Nₛₗₒₜₛ. The present method may be generally used for Slot A, Slot B, and/or Slot C.

In FIG. 19(b), Nᵣₑₚ=2 in Slot A, Nᵣₑₚ=2 in Slot B, Nₜₒₜₐₗ=4, and Nₛₗₒₜₛ=2. Similar to FIG. 19(a), the terminal apparatus 1 and the base station apparatus 3 may determine the number of symbols L of the Xth PUSCH based on one, a plurality or all of the starting symbol S given based on a PDCCH, the number of symbols L given based on the PDCCH, the number of symbols in a slot, Nₜₒₜₐₗ, Nᵣₑₚ, and Nₛₗₒₜₛ. In addition, whether the X+1th PUSCH transmission is performed may be determined based on one, a plurality, or all of Nₜₒₜₐₗ, Nᵣₑₚ, and Nₛₗₒₜₛ.

FIG. 19(c) applies intra-slot frequency hopping to FIG. 19(a). Since Nᵣₑₚ=4, Nₜₒₜₐₗ=4, and Nₛₗₒₜₛ=1, the first frequency hop includes the first (Floor(Nᵣₑₚ/2) = 2) repetitive transmissions. The second frequency hop includes (Nᵣₑₚ - Floor(Nᵣₑₚ/2) = 2) repetitive transmissions.

In FIG. 19(d) applies inter-slot frequency hopping to FIG. 19(b). The terminal apparatus 1 and the base station apparatus 3 may determine whether to apply inter-slot frequency hopping or intra-slot frequency hopping based on Nₛₗₒₜₛ. For example, when Nₛₗₒₜₛ=1, intra-slot frequency hopping is applied, and when Nₛₗₒₜₛ=2, intra-slot frequency hopping is applied.

In the present embodiment, the ceiling function may be used instead of the Floor function in the calculation formula related to intra-slot frequency hopping. As an example, in formula Floor(Nᵣₑₚ/2), the ceiling function may be used instead of the Floor function, and Floor(Nᵣₑₚ/2) may be changed to ceiling(Nᵣₑₚ/2).

In the uplink transmission of the present embodiment, the available symbols may be symbols at least indicated as flexible and/or uplink by higher parameters TDD-UL-DL-ConfigurationCommon and/or TDD-UL-DL-ConfigDedicated. That is, the available symbols are not symbols indicated as downlink by the higher parameters TDD-UL-DL-ConfigurationCommon and/or TDD-UL-DL-ConfigDedicated. The higher parameters TDD-UL-DL-ConfigurationCommon and/or TDD-UL-DL-ConfigDedicated are used to determine an uplink/downlink TDD configuration. In addition, the available symbols are not symbols indicated as downlink by DCI format 2_0. Further, the available symbols are not symbols configured for transmission of a random access preamble. Further, the available symbols are not symbols configured for transmission of a sounding reference signal. In other words, the unavailable symbols may be symbols at least indicated as downlink by the higher parameters TDD-UL-DL-ConfigurationCommon and/or TDD-UL-DL-ConfigDedicated. The unavailable symbols may be symbols indicated as downlink by DCI format 2_0. The unavailable symbols may be symbols configured for transmission of a random access preamble. The unavailable symbols may be symbols configured for transmission of a sounding reference signal.

However, the available symbols are not symbols indicated at least by a higher layer parameter ssb-PositionsInBurst. ssb-PositionsInBurst is used to indicate a time domain position of an SS/PBCH block transmitted to the base station apparatus 3. That is, the terminal apparatus 1 knows by ssb-PositionsInBurst the position of the symbol for transmitting the SS/PBCH block. The symbol for transmitting the SS/PBCH block may be referred to as an SS/PBCH block symbol. That is, the available symbols are not SS/PBCH block symbols. That is, the unavailable symbols may be symbols for transmitting the SS/PBCH block.

However, the available symbols are not symbols at least indicated by pdcch-ConfigSIB1. That is, the available symbols are not symbols indicated by pdcch-ConfigSIB 1 for a CORESET of Type0-PDCCH common search space set. pdcch-ConfigSIB1 may be included in MIB or ServingCellConfigCommon. That is, the unusable symbols may be symbols for transmitting a CORESET of Type0-PDCCH common search space set.

As a result, the terminal apparatus 1 can transmit uplink data to the base station apparatus 3.

Hereinafter, the configurations of apparatuses according to the present embodiment will be described.

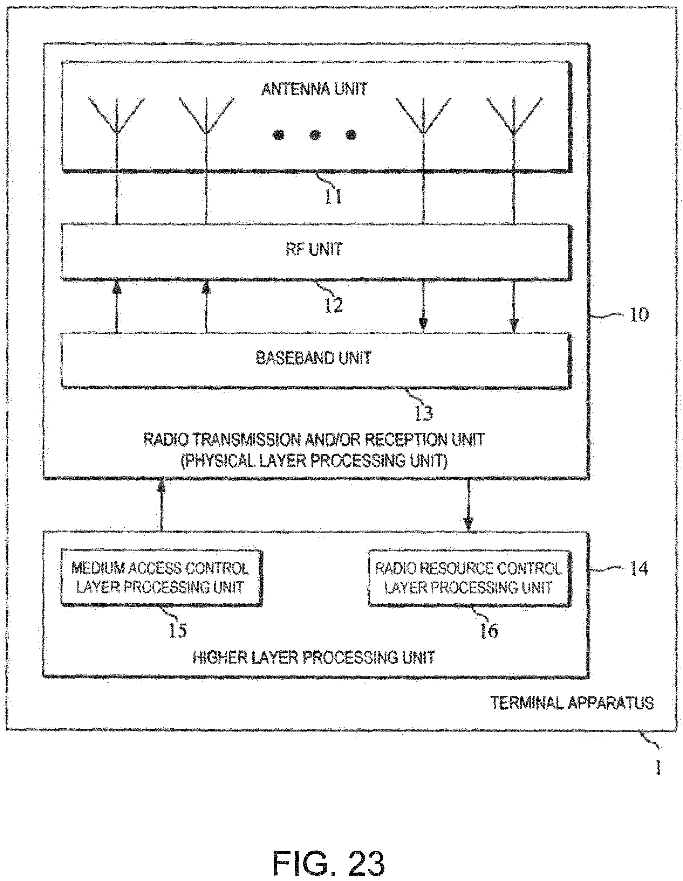

FIG. 23 is a schematic block diagram illustrating a configuration of a terminal apparatus 1 according to an embodiment of the present invention. As shown in FIG. 23, the terminal apparatus 1 includes a radio transmission and/or reception unit 10 and a higher layer processing unit 14. The radio transmission and/or reception unit 10 includes an antenna unit 11, an RF (Radio Frequency) unit 12, and a baseband unit 13. The higher layer processing unit 14 includes a medium access control layer processing unit 15 and a radio resource control layer processing unit 16. The radio transmission and/or reception unit 10 is also referred to as a transmission unit, a reception unit, a monitoring unit, or a physical layer processing unit. The higher layer processing unit 14 is also referred to as a measurement unit, a selection unit, a determination unit, or a control unit 14.

The higher layer processing unit 14 outputs uplink data (which may be referred to as a transport block) generated by a user operation or the like to the radio transmission and/or reception unit 10. The higher layer processing unit 14 performs a part or all of processing of a medium access control (MAC) layer, a packet data convergence protocol (PDCP) layer, a radio link control (RLC) layer, and a radio resource control (RRC) layer. The higher layer processing unit 14 has a function of determining whether to perform repetitive transmission of the transport block based on a higher layer signal received from the base station apparatus 3. The higher layer processing unit 14 determines whether to perform the first aggregation transmission and/or the second aggregation transmission based on a higher layer signal received from the base station apparatus 3. The higher layer processing unit 14 has a function of controlling for aggregation transmission (second aggregation transmission) the symbol allocation extension (starting symbol extension and/or symbol number extension), the number of dynamic repetitions, and/or the mini-slot aggregation transmission based on a higher layer signal received from the base station apparatus 3. The higher layer processing unit 14 determine whether to perform frequency hopping transmission for the transport block based on a higher layer signal received from the base station apparatus 3. The higher layer processing unit 14 has a function of controlling settings of a first frequency hop and a second frequency hop based on the number of repetitive transmissions of the same transport block within one slot. The higher layer processing unit 14 outputs frequency hopping information, aggregation transmission information, and the like to the radio transmission and/or reception unit 10.

The higher layer processing unit 14 has a function of controlling a second number based on a higher layer signal including a first number of repetitive transmissions and/or based on a DCI field including a first number. The first number may be the number of repetitive transmissions of the same transport block included within slots and between slots. The second number may be the number of repetitive transmissions of the same transport block within the slot. The higher layer processing unit 14 determines the number of symbols used for PUSCH transmission based on the number of symbols given by the DCI and the number of available symbols. The higher layer processing unit 14 has a function of determining the transport block size for PUSCH transmission at least based on the number of symbols given by the DCI.

The medium access control layer processing unit 15 included in the higher layer processing unit 14 performs processing of the MAC layer (Medium Access Control layer). The medium access control layer processing unit 15 controls the transmission of a scheduling request based on various types of configuration information/parameters managed by the radio resource control layer processing unit 16.

The radio resource control layer processing unit 16 included in the higher layer processing unit 14 performs processing of the RRC layer (Radio Resource Control layer). The radio resource control layer processing unit 16 manages various types of configuration information/parameters of the present terminal apparatus. The radio resource control layer processing unit 16 sets various types of configuration information/parameters based on a higher layer signal received from the base station apparatus 3. That is, the radio resource control layer processing unit 16 sets the various types of configuration information/parameters based on information indicating the various types of configuration information/parameters received from the base station apparatus 3. The radio resource control layer processing unit 16 controls (specifies) resource allocation based on downlink control information received from the base station apparatus 3.

The radio transmission and/or reception unit 10 performs processing of the physical layer, such as modulation, demodulation, encoding, decoding, and the like. The radio transmission and/or reception unit 10 demultiplexes, demodulates, and decodes a signal received from the base station apparatus 3 and outputs decoded information to the higher layer processing unit 14. The radio transmission and/or reception unit 10 generates a transmission signal by modulating and encoding data, and transmits the transmission signal to the base station apparatus 3. The radio transmission and/or reception unit 10 outputs a higher layer signal (RRC message), DCI, or the like received from the base station apparatus 3 to the higher layer processing unit 14.

In addition, the radio transmission and/or reception unit 10 generates and transmits an uplink signal based on an instruction from the higher layer processing unit 14. The radio transmission and/or reception unit 10 can repeatedly transmit the transport block to the base station apparatus 3 based on an instruction from the higher layer processing unit 14. When the repetitive transmission of the transport block is configured, the radio transmission and/or reception unit 10 repeatedly transmits the same transport block. The number of repetitive transmissions is given based on an instruction from the higher layer processing unit 14. The radio transmission and/or reception unit 10 is characterized by transmitting the PUSCH with aggregation transmission based on information regarding the first number of repetitions, the first number, and the second number instructed from the higher layer processing unit 14. The radio transmission and/or reception unit 10 can control the aggregation transmission based on a predetermined condition.

Specifically, in a case that the first condition is met, the radio transmission and/or reception unit 10 has a function of applying the same symbol allocation to each slot and repeatedly transmitting the transport block N times in N consecutive slots when a second aggregation transmission parameter is set, and has a function of transmitting the transport block once when the second aggregation transmission parameter is not set. Here, the value of N is indicated in the second aggregation transmission parameter. Further, the radio transmission and/or reception unit 10 has a function of applying the mini-slot aggregation transmission to transmit the transport block when the second condition is met. The first condition at least includes that the PUSCH mapping type is indicated as type A in the DCI received from the base station apparatus 3. The second condition at least includes that the PUSCH mapping type is indicated as type B in the DCI received from the base station apparatus 3.

The RF unit 12 converts (down-converts) a signal received via the antenna unit 11 into a baseband signal by quadrature demodulation and then removes unnecessary frequency components. The RF unit 12 outputs a processed analog signal to the baseband unit.

The baseband unit 13 converts the analog signal input from the RF unit 12 into a digital signal. The baseband unit 13 removes a portion corresponding to a cyclic prefix (CP) from the converted digital signal, performs a fast Fourier transform (FFT) on the signal from which the CP has been removed, and extracts a signal in the frequency domain.

The baseband unit 13 generates an OFDM symbol by performing an inverse fast Fourier transform (IFFT) on data, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 by using a low-pass filter, up-converts the analog signal to a signal with a carrier frequency, and transmits the up-converted signal via the antenna unit 11. Further, the RF unit 12 amplifies the power. Further, the RF unit 12 may have a function of determining the transmission power of uplink signals and/or uplink channels to be transmitted in a serving cell. The RF unit 12 is also referred to as a transmission power control unit.

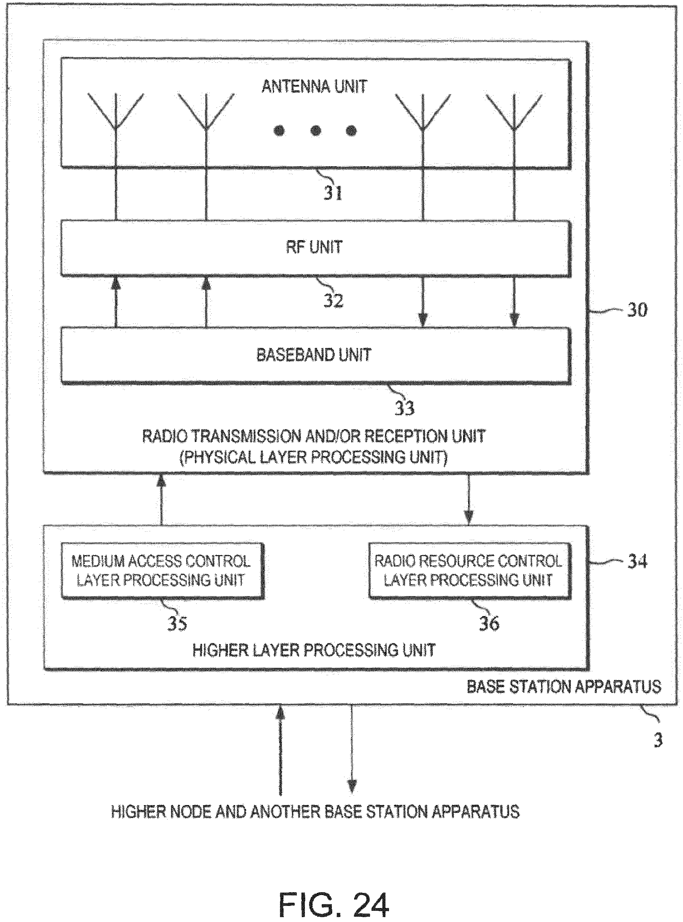

FIG. 24 is a schematic block diagram illustrating a configuration of a base station apparatus 3 according to an embodiment of the present invention. As shown in FIG. 24, the base station apparatus 3 includes a radio transmission and/or reception unit 30 and a higher layer processing unit 34. The radio transmission and/or reception unit 30 includes an antenna unit 31, an RF unit 32, and a baseband unit 33. The higher layer processing unit 34 includes a medium access control layer processing unit 35 and a radio resource control layer processing unit 36. The radio transmission and/or reception unit 30 is also referred to as a transmission unit, a reception unit, a monitoring unit, or a physical layer processing unit. Further, a control unit that controls the operation of each unit based on various conditions may be provided additionally. The higher layer processing unit 34 is also referred to as a control unit 34. The higher layer processing unit 34 is also referred to as a determination unit 34.

The higher layer processing unit 34 performs a part or all of processing of a medium access control (MAC) layer, a packet data convergence protocol (PDCP) layer, a radio link control (RLC) layer, and a radio resource control (RRC) layer. The higher layer processing unit 34 has a function of determining whether to perform repetitive transmission of the transport block based on a higher layer signal transmitted to the terminal apparatus 1. The higher layer processing unit 34 determines whether to perform the first aggregation transmission and/or the second aggregation transmission based on a higher layer signal transmitted to the terminal apparatus 1. The higher layer processing unit 34 has a function of controlling for aggregation transmission (second aggregation transmission) the symbol allocation extension (starting symbol extension and/or symbol number extension), the number of dynamic repetitions, and/or the mini-slot aggregation transmission based on a higher layer signal transmitted to the terminal apparatus 1. The higher layer processing unit 34 determines whether to perform frequency hopping transmission for the transport block based on a higher layer signal transmitted to the terminal apparatus 1. The higher layer processing unit 34 has a function of controlling settings of a first frequency hop and a second frequency hop based on the number of repetitive transmissions of the same transport block within one slot. The higher layer processing unit 34 outputs frequency hopping information, aggregation transmission information, and the like to the radio transmission and/or reception unit 30.

The higher layer processing unit 34 has a function of controlling a second number based on a higher layer signal including a first number of repetitive transmissions and/or based on a DCI field including a first number. The first number may be the number of repetitive transmissions of the same transport block included within slots and between slots. The second number may be the number of repetitive transmissions of the same transport block within the slot. The higher layer processing unit 34 determines the number of symbols used for PUSCH transmission based on the number of symbols given by the DCI and the number of available symbols. The higher layer processing unit 34 has a function of determining the transport block size for PUSCH transmission at least based on the number of symbols given by the DCI.

The medium access control layer processing unit 35 included in the higher layer processing unit 34 performs processing of the MAC layer. The medium access control layer processing unit 35 performs processing associated with a scheduling request based on various types of configuration information/parameters managed by the radio resource control layer processing unit 36.

The radio resource control layer processing unit 36 included in the higher layer processing unit 34 performs processing of the RRC layer. The radio resource control layer processing unit 36 generates downlink control information (e.g., an uplink grant or a downlink grant) including resource allocation information for the terminal apparatus 1. The radio resource control layer processing unit 36 generates or acquires from a higher node downlink control information, downlink data (transport block or random access response) allocated on a physical downlink shared channel, system information, an RRC message, a MAC control element (CE), and the like, and outputs them to the radio transmission and/or reception unit 30. Further, the radio resource control layer processing unit 36 manages various types of configuration information/parameters for each terminal apparatus 1. The radio resource control layer processing unit 36 can set various types of configuration information/parameters for each terminal apparatus 1 via a higher layer signal. That is, the radio resource control layer processing unit 36 transmits/broadcasts information indicating various types of configuration information/parameters. The radio resource control layer processing unit 36 may transmit/broadcast information for identifying the configuration of one or more reference signals in a certain cell.

In a case that an RRC message, a MAC CE, and/or a PDCCH are transmitted from the base station apparatus 3 to the terminal apparatus 1 and the terminal apparatus 1 performs processing based on the reception of the above, the base station apparatus 3 performs processing (control of the terminal apparatus 1 and a system) assuming that the terminal apparatus 1 performs the above processing. That is, the base station apparatus 3 transmits an RRC message, a MAC CE, and/or a PDCCH to the terminal apparatus 1 to cause the terminal apparatus 1 to perform processing based on the reception of the RRC message, the MAC CE, and/or the PDCCH.

The radio transmission and/or reception unit 30 transmits a higher layer signal (RRC message), DCI, or the like to the terminal apparatus 1. In addition, the radio transmission and/or reception unit 30 receives an uplink signal from the terminal apparatus 1 based on an instruction from the higher layer processing unit 34. The radio transmission and/or reception unit 30 can receive repetitive transmission of a transport block from the terminal apparatus 1 based on an instruction from the higher layer processing unit 34. When the repetitive transmission of the transport block is configured, the radio transmission and/or reception unit 30 receives the repetitive transmission of the same transport block. The number of repetitive transmissions is given based on an instruction from the higher layer processing unit 34.

The radio transmission and/or reception unit 30 is characterized by receiving the PUSCH with aggregation transmission based on information regarding the first number of repetitions, the first number, and the second number instructed from the higher layer processing unit 34. The radio transmission and/or reception unit 30 can control the aggregation transmission based on a predetermined condition. Specifically, in a case that the first condition is met, the radio transmission and/or reception unit 30 has a function of applying the same symbol allocation to each slot and repeatedly receiving the transport block N times in N consecutive slots when a second aggregation transmission parameter is set, and has a function of receiving the transport block once when the second aggregation transmission parameter is not set. Here, the value of N is indicated in the second aggregation transmission parameter.

Further, the radio transmission and/or reception unit 30 has a function of applying the mini-slot aggregation transmission to receive the transport block when the second condition is met. The first condition at least includes that the PUSCH mapping type is indicated as type A in the DCI transmitted to the terminal apparatus 1. The second condition at least includes that the PUSCH mapping type is indicated as type B in the DCI transmitted to the terminal apparatus 1. In addition, since a part of functions of the radio transmission and/or reception unit 30 is similar to the functions of the radio transmission and/or reception unit 10, the description thereof is omitted. Further, when the base station apparatus 3 is connected to one or more transmission and/or reception points 4, a part or all of the functions of the radio transmission and/or reception unit 30 may be included in each transmission and/or reception point 4.

Further, the higher layer processing unit 34 transmits (forwards) or receives a control message or user data between the base station apparatuses 3 or between a higher level network apparatus (e.g., MME or S-GW (Serving-GW)) and the base station apparatus 3. In FIG. 24, other components of the base station apparatus 3 and transmission paths of data (control information) between the components are omitted, but it is clear that the base station apparatus 3 has a plurality of blocks having other functions as components necessary for operating as a base station apparatus. For example, the higher layer processing unit 34 includes a radio resource management layer processing unit or an application layer processing unit.

It should be noted that the "unit", which is also expressed by terms such as a section, a circuit, a constituent apparatus, an equipment, a member, and the like, in the figures is an element for implementing the functions and procedures of the terminal apparatus 1 and the base station apparatus 3.

Each of the units with reference numerals 10 to 16 included in the terminal apparatus 1 may be configured as a circuit. Each of the units with reference numerals 30 to 36 included in the base station apparatus 3 may be configured as a circuit.

More specifically, the terminal apparatus 1 according to the first aspect of the present invention comprises a reception unit 10 configured to receive DCI and a determination unit 14 configured to determine a transport block size of a transport block scheduled by the DCI. The determination unit 14 calculates a resource element based on a first number of symbols and determines the transport block size for a first PUSCH at least based on the calculated resource element. The first number of symbols is given in a first field included in the DCI. A number of symbols used for transmitting the first PUSCH is given based on the first number of symbols and a number of available symbols. The transmission of the first PUSCH corresponds to a first repetitive transmission of the transport block.

The base station apparatus 3 according to the second aspect of the present invention comprises a transmission unit 30 configured to transmit DCI and a determination unit 34 configured to determine a transport block size of a transport block scheduled by the DCI. The determination unit 34 calculates a resource element based on a first number of symbols and determines the transport block size for a first PUSCH at least based on the calculated resource element. The first number of symbols is given in a first field included in the DCI, and a number of symbols used for receiving the first PUSCH is based on the first number of symbols and a number of available symbols. The reception of the first PUSCH corresponds to a first repetitive transmission of the transport block.

Accordingly, the terminal apparatus 1 and the base station apparatus 3 can communicate efficiently.

The program operating in the apparatuses according to the present invention may be a program that controls a central processing unit (CPU) to operate a computer so as to implement the functions of the embodiment according to the present invention. Programs or information processed by the programs are temporarily stored in a volatile memory such as a random access memory (RAM), a non-volatile memory such as a flash memory, a hard disk drive (HDD), or other storage device system.

Besides, a program for implementing such functions of the embodiment according to the present invention may be recorded on a computer-readable recording medium. It may be implemented by loading the program recorded on the recording medium into a computer system and executing the program. Here, the "computer system" described herein refers to a computer system built into the apparatus and includes an operating system or hardware components such as peripheral devices. Further, the "computer-readable recording medium" may be any of a semiconductor recording medium, an optical recording medium, a magnetic recording medium, a medium dynamically retaining the program for a short time, or any other computer readable recording medium.

In addition, the various functional blocks or various features of the devices used in the described embodiments may be installed or performed by an electrical circuit, such as an integrated circuit or multiple integrated circuits. Circuits designed to execute the functions described in the present description may include general-purpose processors, digital signal processors (DSPs), application specific integrated circuits (ASICs), field programmable gate arrays (FPGAs) or other programmable logic devices, discrete gates or transistor logic, discrete hardware components, or any combination of the above. The general-purpose processor may be a microprocessor or may be a conventional processor, controller, microcontroller, or state machine. The above-mentioned electric circuit may include a digital circuit or may include an analog circuit. Further, in a case that with advances in semiconductor technology, a new circuit integration technology may appear to replace the present technology for integrated circuits, one or more aspects of the present invention may also use a new integrated circuit based on the new circuit integration technology.

In the embodiments according to the present invention, an example applied to a communication system, which includes a base station apparatus and a terminal apparatus, has been described, but it can also be applied to a system in which terminals communicate with each other via D2D (Device to Device) communication.

The present invention is not limited to the above-described embodiments. In the embodiments, apparatuses have been described as an example, but the invention of the present application is not limited to these apparatuses and is applicable to a terminal apparatus, a communication apparatus, or a fixed-type or a stationary-type electronic apparatus installed indoors or outdoors, for example, an AV apparatus, a kitchen apparatus, a cleaning or washing machine, an air-conditioning apparatus, office equipment, a vending machine, other household apparatuses, or the like.

The embodiments of the present invention have been described in detail with reference to the accompanying drawings, but the specific configuration is not limited to the present embodiment. Further, various modifications are possible, and embodiments that are made by suitably combining technical means disclosed according to the different embodiments.

## Claims

1. A terminal apparatus (1), comprising:
a reception unit configured to:
receive Downlink Control Information, DCI, that schedules a Transport Block, TB, on a first Physical Uplink Shared Channel, PUSCH;
a control unit configured to:
calculate a number of Resource Elements, REs, based on a first number of symbols; and
determine a transport block size of the TB for the first PUSCH based on at least the number of REs; and
a transmission unit configured to:
transmit the TB on the first PUSCH with a second number of symbols, wherein:
the first number of symbols is provided in a first field in the DCI,
the second number of symbols is based on the first number of symbols and a number of unavailable symbols, and
unavailable symbols are based on at least a higher layer parameter.

2. A base station apparatus (3), comprising:
a transmission unit configured to:
transmit Downlink Control Information, DCI, that schedules a Transport Block, TB, on a first Physical Uplink Shared Channel, PUSCH;
a control unit configured to:
calculate a number of Resource Elements, REs, based on a first number of symbols; and
determine a transport block size of the TB for the first PUSCH based on at least the number of REs; and
a reception unit configured to:
receive the TB on the first PUSCH with a second number of symbols, wherein:
the first number of symbols is provided in a first field in the DCI,
the second number of symbols is based on the first number of symbols and a number of unavailable symbols, and
unavailable symbols are based on at least a higher layer parameter.

3. A communication method for a terminal apparatus (1), comprising:
receiving Downlink Control Information, DCI, that schedules a Transport Block, TB, on a first Physical Uplink Shared Channel, PUSCH;
calculating a number of Resource Elements, REs, based on a first number of symbols;
determining a transport block size of the TB for the first PUSCH based on at least the number of REs; and
transmitting the TB on the first PUSCH with a second number of symbols, wherein:
the first number of symbols is provided in a first field in the DCI,
the second number of symbols is based on the first number of symbols and a number of unavailable symbols, and
unavailable symbols are based on at least a higher layer parameter.

4. A communication method for a base station apparatus (3), comprising:
transmitting Downlink Control Information, DCI, that schedules a Transport Block, TB, on a first Physical Uplink Shared Channel, PUSCH;
calculating a number of Resource Elements, REs, based on a first number of symbols;
determining a transport block size of the TB for the first PUSCH based on at least the number of REs; and
receiving the TB on the first PUSCH with a second number of symbols, wherein:
the first number of symbols is provided in a first field in the DCI,
the second number of symbols is based on the first number of symbols and a number of unavailable symbols, and
unavailable symbols are based on at least a higher layer parameter.

## Patentansprüche

1. Endgerätvorrichtung (1), umfassend:
eine Empfangseinheit, die konfiguriert ist, um:
Downlink-Steuerinformationen, DCI, zu empfangen, die einen Transportblock, TB, auf einem ersten physischen gemeinsamen Uplink-Kanal, PUSCH, planen;
eine Steuereinheit, die konfiguriert ist, um:
eine Anzahl von Ressourcenelementen, REs, basierend auf einer ersten Anzahl von Symbolen zu berechnen; und
eine Transportblockgröße des TB für den ersten PUSCH basierend auf mindestens der Anzahl von REs zu bestimmen; und
eine Sendeeinheit, die konfiguriert ist, um:
den TB auf dem ersten PUSCH mit einer zweiten Anzahl von Symbolen zu senden, wobei:
die erste Anzahl von Symbolen in einem ersten Feld in den DCI bereitgestellt wird,
die zweite Anzahl von Symbolen auf der ersten Anzahl von Symbolen und einer Anzahl von nicht verfügbaren Symbolen basiert, und
die nicht verfügbaren Symbole auf mindestens einem Parameter höherer Ebene basieren.

2. Basisstationsvorrichtung (3), umfassend:
eine Sendeeinheit, die konfiguriert ist, um:
Downlink-Steuerinformationen, DCI, zu senden, die einen Transportblock, TB, auf einem ersten physischen gemeinsamen Uplink-Kanal, PUSCH, planen;
eine Steuereinheit, die konfiguriert ist, um:
eine Anzahl von Ressourcenelementen, REs, basierend auf einer ersten Anzahl von Symbolen zu berechnen; und
eine Transportblockgröße des TB für den ersten PUSCH basierend auf mindestens der Anzahl von REs zu bestimmen; und
eine Empfangseinheit, die konfiguriert ist, um:
den TB auf dem ersten PUSCH mit einer zweiten Anzahl von Symbolen zu empfangen, wobei:
die erste Anzahl von Symbolen in einem ersten Feld in den DCI bereitgestellt wird,
die zweite Anzahl von Symbolen auf der ersten Anzahl von Symbolen und einer Anzahl von nicht verfügbaren Symbolen basiert, und
die nicht verfügbaren Symbole auf mindestens einem Parameter höherer Ebene basieren.

3. Kommunikationsverfahren für eine Endgerätvorrichtung (1), umfassend:
Empfangen von Downlink-Steuerinformationen, DCI, die einen Transportblock, TB, auf einem ersten physischen gemeinsamen Uplink-Kanal, PUSCH, planen;
Berechnen einer Anzahl von Ressourcenelementen, REs, basierend auf einer ersten Anzahl von Symbolen;
Bestimmen einer Transportblockgröße des TB für den ersten PUSCH basierend auf mindestens der Anzahl von REs; und
Senden des TB auf dem ersten PUSCH mit einer zweiten Anzahl von Symbolen, wobei:
die erste Anzahl von Symbolen in einem ersten Feld in den DCI bereitgestellt wird,
die zweite Anzahl von Symbolen auf der ersten Anzahl von Symbolen und einer Anzahl von nicht verfügbaren Symbolen basiert, und
die nicht verfügbaren Symbole auf mindestens einem Parameter höherer Ebene basieren.

4. Kommunikationsverfahren für eine Basisstationsvorrichtung (3), umfassend:
Senden von Downlink-Steuerinformationen, DIC, die einen Transportblock, TB, auf einem ersten physischen gemeinsamen Uplink-Kanal, PUSCH, planen;
Berechnen einer Anzahl von Ressourcenelementen, REs, basierend auf einer ersten Anzahl von Symbolen;
Bestimmen einer Transportblockgröße des TB für den ersten PUSCH basierend auf mindestens der Anzahl an REs; und
Empfangen des TB auf dem ersten PUSCH mit einer zweiten Anzahl von Symbolen, wobei:
die erste Anzahl von Symbolen in einem ersten Feld in den DCI bereitgestellt wird,
die zweite Anzahl von Symbolen auf der ersten Anzahl von Symbolen und einer Anzahl von nicht verfügbaren Symbolen basiert, und
die nicht verfügbaren Symbole auf mindestens einem Parameter höherer Ebene basieren.

## Revendications

1. Dispositif terminal (1) comprenant :
une unité de réception conçue :
pour recevoir des informations de commande de liaison descendante (DCI) servant à ordonnancer un bloc de transport (TB) sur un premier canal partagé de liaison montante physique (PUSCH) ;
une unité de commande conçue :
pour calculer un nombre d'éléments de ressource (RE) sur la base d'un premier nombre de symboles ; et
pour déterminer une taille de bloc de transport du **TB** pour le premier PUSCH sur la base d'au moins le nombre de **RE** ; et
une unité de transmission conçue :
pour transmettre le TB sur le premier PUSCH avec un second nombre de symboles,
dans lequel :
le premier nombre de symboles est fourni dans un premier champ dans les DCI,
le second nombre de symboles est basé sur le premier nombre de symboles et sur un nombre de symboles non disponibles, et
les symboles non disponibles sont basés sur au moins un paramètre de couche supérieure.

2. Dispositif (3) de station de base, le dispositif comprenant :
une unité de transmission conçue :
pour transmettre des informations de commande de liaison descendante (DCI) servant à ordonnancer un bloc de transport (TB) sur un premier canal partagé de liaison montante physique (PUSCH) ;
une unité de commande conçue :
pour calculer un nombre d'éléments de ressource (RE) sur la base d'un premier nombre de symboles ; et
pour déterminer une taille de bloc de transport du TB pour le premier PUSCH sur la base d'au moins le nombre de RE ; et
une unité de réception conçue :
pour recevoir le TB sur le premier PUSCH avec un second nombre de symboles,
dans lequel :
le premier nombre de symboles est fourni dans un premier champ dans les DCI,
le second nombre de symboles est basé sur le premier nombre de symboles et sur un nombre de symboles non disponibles, et
les symboles non disponibles sont basés sur au moins un paramètre de couche supérieure.

3. Procédé de communication destiné à un dispositif terminal (1), le procédé comprenant :
la réception d'informations de commande de liaison descendante (DCI) servant à ordonnancer un bloc de transport (TB) sur un premier canal partagé de liaison montante physique (PUSCH) ;
le calcul d'un nombre d'éléments de ressource (RE) sur la base d'un premier nombre de symboles ;
la détermination d'une taille de bloc de transport du TB pour le premier PUSCH sur la base d'au moins le nombre de RE ; et
la transmission du TB sur le premier PUSCH avec un second nombre de symboles,
dans lequel :
le premier nombre de symboles est fourni dans un premier champ dans les DCI,
le second nombre de symboles est basé sur le premier nombre de symboles et sur un nombre de symboles non disponibles, et
les symboles non disponibles sont basés sur au moins un paramètre de couche supérieure.

4. Procédé de communication destiné à un dispositif (3) de station de base, le procédé comprenant :
la transmission d'informations de commande de liaison descendante (DCI) servant à ordonnancer un bloc de transport (TB) sur un premier canal partagé de liaison montante physique (PUSCH) ;
le calcul d'un nombre d'éléments de ressource (RE) sur la base d'un premier nombre de symboles ;
la détermination d'une taille de bloc de transport du TB pour le premier PUSCH sur la base d'au moins le nombre de RE ; et
la réception du TB sur le premier PUSCH avec un second nombre de symboles, dans lequel :
le premier nombre de symboles est fourni dans un premier champ dans les DCI,
le second nombre de symboles est basé sur le premier nombre de symboles et sur un nombre de symboles non disponibles, et
les symboles non disponibles sont basés sur au moins un paramètre de couche supérieure.
